(19) Europäisches Patentamt
European Patent Office
Office européen des brevets

(11) EP 1 446 432 B1

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **02779467.6**

(22) Anmeldetag: **09.10.2002**

(51) Int Cl.:
***C08F 222/04*** *(2006.01)* ***C08F 222/40*** *(2006.01)*
***D06M 15/277*** *(2006.01)* ***D06M 15/295*** *(2006.01)*

(86) Internationale Anmeldenummer:
**PCT/EP2002/011276**

(87) Internationale Veröffentlichungsnummer:
**WO 2003/033557 (24.04.2003 Gazette 2003/17)**

(54) **FLUORHALTIGE COPOLYMERE, DEREN HERSTELLUNG UND VERWENDUNG**

COPOLYMERS CONTAINING FLUORINE, METHOD FOR THE PRODUCTION AND USE THEREOF

COPOLYMERES FLUORES, LEUR PRODUCTION ET LEUR UTILISATION

(84) Benannte Vertragsstaaten:
**AT BE BG CH CY CZ DE DK EE ES FI FR GB GR IE IT LI LU MC NL PT SE SK TR**

(30) Priorität: **16.10.2001 DE 10150954**
**12.07.2002 DE 10231643**

(43) Veröffentlichungstag der Anmeldung:
**18.08.2004 Patentblatt 2004/34**

(73) Patentinhaber: **Henkel Kommanditgesellschaft auf Aktien**
**40589 Düsseldorf (DE)**

(72) Erfinder:
- **KIRSTEN, Christian**
  **51399 Burscheid (DE)**
- **MÖLLER, Martin**
  **52070 Aachen (DE)**
- **KRAUS, Michael**
  **7000 Chur (CH)**
- **LAMMERSCHOP, Olaf**
  **47829 Krefeld (DE)**
- **GAWRISCH, Wolfgang**
  **40589 Düsseldorf (DE)**
- **BEGINN, Uwe**
  **B-4731 Eynatten (BE)**

(56) Entgegenhaltungen:
**WO-A-97/11218**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fluorhaltige Copolymere, gegebenenfalls wässrige Zusammensetzungen, die derartige Copolymere enthalten, Verfahren zur Herstellung derartiger Copolymerer sowie die Verwendung solcher Copolymeren und Zusammensetzungen zur Oberflächenbehandlung beispielsweise zur Behandlung harter Oberflächen oder zur Behandlung von Textilien.

Fluorhaltige Polymere zeichnen sich durch ihre öl- und wasserabweisenden Eigenschaften, ihre hohe thermische Belastbarkeit und ihre Beständigkeit gegenüber oxidativen Einflüssen aus. So werden Oberflächen häufig mit fluorhaltigen Polymeren überzogen, wenn sie möglichst günstige Eigenschaften im Hinblick auf Anschmutzung zeigen sollen bzw. die Entfernung von Schmutz von derart beschichteten Oberflächen möglichst leicht vonstatten gehen soll.

Als problematisch gilt bis heute beim Einsatz von fluorhaltigen Polymeren zur Beschichtung von Oberflächen die Tatsache, dass fluorhaltige Polymere in der Regel nur wenig wasserlöslich sind und statt dessen in halogenierten leicht flüchtigen Lösungsmittel oder anderen organischen Lösungsmitteln gelöst und aus solchen aufgetragen werden müssen. Dadurch wird der Auftrag der Polymeren auf Oberflächen jedoch in vielen Situationen erschwert, da die Verarbeitung halogenierter, leicht flüchtiger Lösemittel aus ökonomischen und ökologischen Gründen oft nicht erwünscht ist.

Auch gesundheitliche Gründe sprechen oft gegen den Einsatz derartiger halogenierter Lösungsmittel. Enthalten die Lösungsmittel halogenierte leicht flüchtige Substanzen, können sie durch Einatmen in die Lunge gelangen und diese schädigen. Außerdem ist bekannt, dass auch der direkte Hautkontakt mit organischen Lösungsmitteln oder Textilien, die mit organischen Lösungsmitteln enthaltenden Beschichtungsmitteln behandelt wurden, zu Hautreizungen und Allergien führen kann. Insbesondere wenn Textilien mit derartigen Beschichtungsmitteln behandelt werden, die für Wohnungseinrichtungen und Bekleidung verwendet werden, kann der Einsatz von organischen Lösungsmitteln zur Imprägnierung gesundheitsschädigende Folgen haben.

In Chemical Abstracts 1997, 739870 (DN: 128:14209, Abstract zur JP 09296134) wird eine pulverförmige Zusammensetzung beschrieben, die mit einem Fluorpolymeren beschichtete Füllstoffe enthält. Als Fluorpolymere werden Copolymere von Acrylsäure- oder Methacrylsäureestern fluorierter Alkohole mit Maleinsäureanhydrid eingesetzt. Die nach dem angegebenen Verfahren hergestellten Polymeren stellen jedoch ein Gemisch aus Homo- und Copolymeren dar, wobei die Copolymeren ein geringes Molekulargewicht, eine hohe Polydispersität und eine große Variationsbreite in ihrer Zusammensetzung aufweisen. Die beschriebenen Polymeren sind insgesamt zur Herstellung einer wässrigen Lösung oder Emulsion nicht geeignet und zeigen darüber hinaus nur unzureichende filmbildende Eigenschaften.

In Chemical Abstracts 1992, 652522 (DN: 117:252522, Abstract zur JP 04120148)-werden Fluorpolymere beschrieben, die aus Maleinsäureanhydrid und Perfluomonenyloxyisopropenylbenzol aufgebaut sind. Die beschriebenen Polymeren werden zusammen mit weiteren Verbindungen aus einer Methylisobutylketon-Lösung zur Oberflächenbeschichtung eingesetzt.

In Chemical Abstracts 1992, 216472 (DN: 116:216472, Abstract zur JP 03287615) wird ein Polymeres beschrieben, das durch Umsetzung von Perfluoroctylethylmethacrylat, Maleinsäureanhydrid, Methylmethacrylat und einem Starter in Xylol erhältlich ist, wobei dem Reaktionsgemisch nach etwa 10 Stunden (3-Aminopropyl)trimethoxysilan zugegeben wird. Das beschriebene Polymere wird aus einer Lösung in Toluol zur Oberflächenbeschichtung eingesetzt. Gemeinsam ist den aufgeführten Lösungsmöglichkeiten, dass die Einführung der Maleinsäureanhydrideinheiten vor allem der Verbesserung der Haftung der Fluorpolymere dient. Im Fall von CA 1992, 216472 soll durch die Einführung von Trimethoxysilanen, die als Amid oder Imid über die MSA-Gruppen an das Fluorpolymer gebunden werden, eine chemische Fixierung erfolgen.

Problematisch wirkt sich bei den beschriebenen Polymeren aus, dass sie grundsätzlich nur aus organischen Lösemitteln einsetzbar sind.

Um diesem Nachteil zu begegnen, wurden beispielsweise Lösungen vorgeschlagen, die Emulsionen von Fluorpolymeren in Wasser oder wässrigen Lösemitteln einsetzen. Nachteilig wirkt sich bei diesen Lösungen jedoch aus, dass entsprechende Emulsionen oft nur unter Einsatz großer Mengen niedermolekularer Emulgatoren in stabiler Form zugänglich sind. Derartige Polymerlösungen werden beispielsweise in "Grundlagen der Textilveredelung, Handbuch der Technologie, Verfahren und Maschinen" von M. Peter und H.K. Rouette, 13. überarbeitete Auflage; Deutscher Fachverlag, Frankfurt 1989 (siehe Kapitel 5 und Kapitel 7.3.2) beschrieben. Werden solche Emulsionen jedoch zur Oberflächenbeschichtung eingesetzt, so sind die erhältlichen Filme aufgrund des hohen Emulgatoranteils in der Regel wenig beständig gegenüber Wasser und zeigen eine vergleichsweise hohe Anschmutzneigung.

Eine weitere Möglichkeit zur Herstellung wässriger Emulsionen von Fluorpolymeren wird beispielsweise in der WO 97/11218 genannt. Die Druckschrift nennt Verbindungen, die sich durch Umsetzung eines aus Styrol und Maleinsäureanhydrid erhältlichen Copolymeren mit Fluoralkoholen unter Ringöffnung und partieller Veresterung des Maleinsäureanhydrids erhalten lassen. Die beschriebenen Polymeren lassen sich zwar als wässrige Erriulsionen formulieren, weisen jedoch einen unbefriedigenden Gehalt an Fluor auf. Darüber hinaus unterliegt die Variationsmöglichkeit im Hinblick auf das Verhältnis von fluorhaltigen Substituenten zu Carboxylgruppen bei den offenbarten Polymeren einer Beschränkung dahingehend, dass ein über 1:1 hinausgehendes Verhältnis nicht zu erreichen ist. Die in der WO 97/11218

beschriebenen Polymeren sind daher für die Erzeugung anspruchsvoller Beschichtungen in der Regel ungeeignet, da eine Kombination eines hohen Fluoranteils (bis zu deutlich über 50mol% $R_F$, $R_F$ = fluorhaltige Reste) mit einer ebenso hohen oder höheren Zahl an hydrophilen Carboxyl- oder Carboxylatgruppen in der dort beschriebenen Weise nicht möglich ist. Ein weiterer technischer Nachteil ergibt sich auch daraus, dass die fluorierten Substituenten erst nachträglich (mit den bekannten allgemeinen Nachteilen einer polymeranalogen Umsetzung) in das Polymere eingeführt werden. Durch die Beschränkung auf Styrol als Comonomeres ist es weiterhin im allgemeinen nicht möglich, Produkte mit einer Glastemperatur im Bereich der Raumtemperatur oder darunter herzustellen. Darüber hinaus werden drastische pH-Bedingungen für die (Tauch-) Bäder benötigt, mit denen die Fluorpolymere aufgebracht werden. Die pH-Werte können dabei von 1.5 bis 9 variieren. Insbesondere werden pH-Werte kleiner als 4 benötigt um die Polymere auf die Substrate aufzuziehen, wobei pH-Werte von 2 bis 3 bevorzugt sind. Bei pH-Werten unterhalb von 3 sind jedoch Tenside zur Stabilisierung der Lösungen notwendig (Menge an Tensid 10-100%, vorzugsweise 20-50% bezogen auf die Fluorpolymere).

Ein weiterer Nachteil der aus dem Stand der Technik bekannten fluorhaltigen Polymeren liegt darin begründet, dass sich die Wasserlöslichkeit nach ihrer Herstellung oder nach einem Auftrag als Oberflächenbeschichtung im wesentlichen nicht mehr regulieren lässt. Dies ist insbesondere dann problematisch, wenn an die Wasserbeständigkeit einer ein Fluorpolymeres enthaltenden Schicht besonders hohe Anforderungen gestellt werden.

Aufgrund der wasser-, öl- und schmutzabweisenden Eigenschaften der Fluorpolymere werden Textilien oft einer chemischen Nachbehandlung mit Fluorpolymeren unterzogen, durch welche die textile Oberfläche mit bestimmten Eigenschaften, beispielsweise einer öl- und wasserabweisenden Oberflächenbeschichtung, ausgestattet wird.

Wünschenswert sind bei Behandlungen von Textilien außerdem Beschichtungen, die flammhemmende oder biozide Eigenschaften aufweisen, sich besonders atmungsaktiv oder rutschhemmend auswirken oder Knitterarmut bewirken.

Als problematisch erweist sich bei der chemischen Nachbehandlung textiler Oberflächen häufig die Tatsache, dass Textilien bei der Reinigung wiederholt Waschbedingungen bei hohen Temperaturen, hoher Alkalität, hoher mechanischer Belastung und hohem Chemikalieneinsatz ausgesetzt sind, oft in einem stärkeren Maß als es für die Reinigung erforderlich wäre. Daher haben die Beschichtungen in der Regel nicht lange Bestand, sondern müssen häufig wieder neu auf die Textilien aufgebracht werden.

Als ebenfalls nachteilig gilt die Eigenschaft vieler Imprägnierungsmittel insbesondere für Oberflächen von Textilien, dass der Wirkstoff nach einer Beschichtung von Textilien in das Gewebe einzieht, und deshalb die Schmutz-Wasser und Öl-abweisende Schicht auf der Gewebeoberfläche nicht lange erhalten bleibt.

Um die wasser- und schmutzabweisenden Eigenschaften eines derart behandelten Gewebes wieder herzustellen, wurde bei Geweben, bei denen die durch eine solche Beschichtung erhaltenen Eigenschaften erwünscht sind, in der Regel in bestimmten zeitlichen Abständen eine Erneuerung der Beschichtung durchgeführt. Dabei wurden jedoch häufig Verbindungen eingesetzt, die insgesamt als umweltschädlich gelten, so dass mit jeder Erneuerung der Beschichtung ökologische Nachteile in Kauf genommen wurden.

Es bestand daher ein Bedürfnis nach Fluorpolymeren, die einen hohen Anteil an Fluor aufweisen und in halogenierten Lösemitteln, aber auch in polaren Lösemitteln, in wässrigen polaren Lösemitteln oder in Wasser löslich oder zumindest emulgierbar sind. Weiterhin bestand ein Bedürfnis nach Zusammensetzungen, die solche Fluorpolymeren enthalten. Weiterhin bestand ein Bedürfnis nach Fluorpolymeren, deren Wasserlöslichkeit sich nach der Beschichtung einer Oberfläche noch weiter verringern lässt. Darüber hinaus bestand ein Bedürfnis nach einem Verfahren, mit dem sich derartige Flurpolymere herstellen lassen.

Weiterhin bestand ein Bedürfnis nach Zusammensetzungen oder Dispersionen enthaltend hochfluorierte Copolymere, bei denen gesundheitsschädliche und umweltschädliche Einflüsse durch das Lösungsmittel im wesentlichen ausgeschlossen werden können.

Weiterhin bestand ein Bedürfnis nach Fluorcopolymeren, die in Wasser oder wässrigen polaren Lösungsmitteln oder in polaren organischen Lösungsmitteln löslich sind.

Es bestand weiterhin ein Bedürfnis nach einem Beschichtungsmittel für Oberflächen insbesondere für Oberflächen von Textilien, das nach einer Beschichtung von Textilien möglichst nicht in das beschichtete Gewebe einzieht, sondern als schmutz-, wasser- und ölabweisende Schicht auf der Gewebeoberfläche möglichst lange erhalten bleibt.

Darüber hinaus bestand auch ein Bedürfnis nach einem Beschichtungsmittel für Oberflächen insbesondere für Oberflächen von Textilien, das möglichst keine umweltbelastenden Eigenschaften und gesundheitsschädlichen Eigenschaften aufweist, so dass es auch reversibel aufgetragen werden kann, ohne sich nachteilig auf Umwelt oder Gesundheit auszuwirken.

Weiterhin bestand ein Bedürfnis nach einem Beschichtungsmittel, mit dem die Schmutzentfernung auf Oberflächen, insbesondere auf Textilien, erleichtert wird und das sich durch ausgezeichnete schmutzabweisende Eigenschaften auszeichnet.

Darüber hinaus bestand ein Bedürfnis nach einem Verfahren, mit dem sich derartige Beschichtungsmittel herstellen lassen.

Der vorliegenden Erfindung lag daher die Aufgabe zugrunde, Fluorpolymere und solche Fluorpolymere enthaltende Zubereitungen zur Verfügung zu stellen, welche die oben genannten Bedürfnisse erfüllen. Eine weitere Aufgabe der Erfindung lag darin, ein Verfahren zur Verfügung zu stellen, mit dem sich derartige Fluorpolymere herstellen lassen.

Der vorliegenden Erfindung lag daher weiterhin die Aufgabe zugrunde, Beschichtungsmittel zur Verfügung zu stellen, welche eine oder mehrere der oben genannten Bedürfnisse erfüllen. Eine weitere Aufgabe der Erfindung lag darin, ein Verfahren zur Verfügung zu stellen, mit dem sich derartige Beschichtungsmittel herstellen lassen.

Es wurde nun gefunden, dass Copolymere, wie sie im Rahmen des nachfolgenden Textes beschrieben sind, einen hohen Fluoranteil aufweisen können, eine genaue Steuerung der Löslichkeit in polaren Lösemitteln oder wässriger Umgebung gewährleisten und als Oberflächenbeschichtung besonders gute wasser- und schmutzabweisende Eigenschaften zeigen. Weiterhin wurde gefunden, dass sich die Wasserlöslichkeit oder Wasseremulgierbarkeit derartiger Fluorpolymerer, sofern sie bestimmte Strukturbedingungen erfüllen, durch einen einfachen Behandlungsschritt, beispielsweise nach dem Auftrag als Oberflächenbeschichtung, noch weiter verringern lässt.

Weiterhin wurde gefunden, dass Zusammensetzungen, wie sie im Rahmen des nachfolgenden Textes beschrieben sind, einen einfachen und ungefährlichen Auftrag von fluorhaltigen Verbindungen gewährleisten und zu Oberflächenbeschichtungen führen, die besonders gute wasser- und schmutzabweisende Eigenschaften zeigen. Weiterhin wurde gefunden, dass Fluorcopolymere, die eine Stickstoflverbindung aufweisen, wie sie im Rahmen des nachfolgenden Textes beschrieben werden, sich zur Imprägnierung von Textilien, eignen und zu Imprägnierungen mit ausgezeichneten Eigenschaften führen.

Gegenstand der vorliegenden Erfindung ist daher ein fluorhaltiges Copolymeres, mindestens enthaltend ein Strukturelement der allgemeinen Formel I

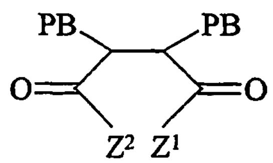

(I),

worin PB für ein Polymerrückgrat mit durchgehenden kovalenten C-C-Bindungen, worin die Reste $Z^1$ und $Z^2$ jeweils unabhängig voneinander mit $O^-M^+$ oder $O^-N^+R_4$ stehen, wobei M für Li, Na oder K und R für H oder einen linearen Alkylrest mit 1 bis 18 C-Atomen oder einen Rest der allgemeinen Formel $-(CH_2-CHR'-O-)_mL$, worin m für eine ganze Zahl von 1 bis etwa 20 und L für H, $CH_2-CHR'-NR'_2$ oder $CH_2-CHR'-N^+R'_3$ steht oder R für einen Aminozucker wie Aminosorbitol, β-D-Glucopyranosylamin oder β-D-Glucosamin steht, oder einer der Reste $Z^1$ und $Z^2$ für $O-M^+$ oder $O-N^+R_4$ und der verbleibende Rest $Z^1$ oder $Z^2$ für X-R" steht, wobei X für O oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder die Reste $Z^1$ und $Z^2$ zusammen für NR" stehen, oder mindestens $Z^1$ oder mindestens $Z^2$ für $X-R^N$ steht, wobei X für O, S oder NR', $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen oder worin beide Reste $Z^1$ und $Z^2$ zusammen für $N-R^N$ stehen, oder zwei oder mehr gleiche oder unterschiedliche Strukturelemente der allgemeinen Formel I,
und ein Strukturelement der allgemeinen Formel II

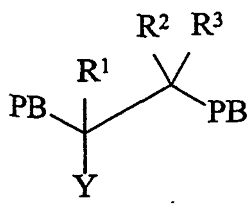

(II),

worin die Reste $R^1$ bis $R^3$ für H oder einen linearen oder verzweigten Alkylrest mit 1 bis 4 C-Atomen, Y für R oder einen linearen oder verzweigten, gegebenenfalls ganz oder teilweise mit Fluor substituierten linearen oder verzweigten Alkylrest mit 1 bis 24 C-Atomen, einen gegebenenfalls ganz oder teilweise mit Fluor substituierten Cycloyalkylrest oder Arylrest mit 6-24 C-Atomen, einen Rest der allgemeinen Formel C(O)OR, einen gegebenenfalls ganz oder teilweise mit Fluor substituierten Alkarylrest mit 7 bis 24 C-Atomen oder einen gegebenenfalls ganz oder teilweise mit Fluor substituierten Alkoxyalkarylrest steht, oder zwei oder mehr gleiche oder unterschiedliche Strukturelemente der allgemeinen Formel II und wobei mindestens ein Strukturelement der allgemeinen Formel I oder II im Copolymeren einen mit Fluor substituierten Rest aufweist und mindestens ein Strukturelement der allgemeinen Formel II einen Fluorsubstituenten aufweist, wenn das Copolymere ein Strukturelement der allgemeinen Formel I aufweist in dem $Z^1$ für $O\text{-}M^+$ und $Z^2$ für OR steht, wobei R einen Fluorsubstituenten aufweist und keiner der Reste $Z^1$ oder $Z^2$ in einem Strukturelement der allgemeinen Formel 1 für $X\text{-}R^N$ steht oder die Reste $Z^1$ und $Z^2$ nicht zusammen für $N\text{-}R^N$ stehen.

Unter einem "Copolymeren" wird im Rahmen der vorliegenden Erfindung ein Polymeres verstanden, das aus mindestens zwei unterschiedlichen Monomeren aufgebaut ist. Ein erfindungsgemäßes Copolymeres kann dabei beispielsweise aus bis zu etwa 10 unterschiedlichen Monomeren aufgebaut sein. Im Rahmen einer bevorzugten Ausführungsform der vorliegenden Erfindung ist ein erfindungsgemäßes Copolymeres aus zwei bis etwa fünf, insbesondere aus zwei, drei oder vier unterschiedlichen Monomeren aufgebaut.

Der Begriff "Polymerrückgrat" (PB) umfasst dabei im Rahmen des vorliegenden Textes auch diejenigen Fälle, in denen ein Strukturelement der allgemeinen Formel I am Kettenende sitzt. In Abhängigkeit vom Start und Abbruch der radikalischen Polymerisation steht in solchen Fällen eine der Variablen "PB" für die am Kettenende befindliche, durch den Starter oder das Quenchmittel oder eine sonstige Abbruchreaktion hervorgerufene Struktureinheit.

Ein in einer erfindungsgemäßen Zusammensetzung vorliegendes Copolymeres weist im Rahmen der vorliegenden Erfindung ein Molekulargewicht von etwa 3000 bis etwa 1.000.000 auf. Grundsätzlich kann eine erfindungsgemäße Zusammensetzung auch Copolymere mit einem oberhalb des oberen Grenzwerts oder unterhalb des unteren Grenzwerts liegenden Molekulargewicht enthalten. Beim Unterschreiten eines Molekulargewichts von etwa 3000 verschlechtern sich jedoch oft die filmbildenden Eigenschaften eines der Copolymeren, bei einem oberhalb von 1.000.000 liegenden Molekulargewicht ist die zum Lösen des Copolymeren erforderliche Zeitspanne gegebenenfalls für bestimmte Anwendungen zu lang.

Im Rahmen einer bevorzugten Ausführungsform der vorliegenden Erfindung weist ein in einer erfindungsgemäßen Zusammensetzung vorliegendes Copolymeres ein Molekulargewicht von etwa 4000 bis etwa 500.000, beispielsweise etwa 5000 bis etwa 200.000 oder etwa 6000 bis etwa 100.000 auf. Besonders geeignete Bereiche für das Molekulargewicht der erfindungsgemäßen Copolymere sind beispielsweise etwa 5000 bis etwa 80.000 oder etwa 10.000 bis etwa 25.000.

Unter dem Begriff "Molekulargewicht" wird im Rahmen der vorliegenden Erfindung der Wert für das Gewichtsmittel des Molekulargewichts, wie es üblicherweise mit der Variablen $M_w$ abgekürzt wird, verstanden, sofern nicht ausdrücklich etwas anderes angegeben ist. Die im Rahmen des vorliegenden Textes angegebenen Werte beziehen sich dabei, sofern nicht ausdrücklich etwas anderes angegeben ist, auf durch GPC-Messungen bestimmte Werte. Die angegebenen Werte stellen, wie nach dem Stand der Technik allgemein üblich, Relativwerte zu engverteilten Eichproben dar. Die Messungen wurden dabei, sofern im Hinblick auf die zur Polymerisation eingesetzten Monomeren möglich, an den polymeren Vorprodukten der Copolymeren durchgeführt, welche an Stelle der Comonomerbausteine (I) noch nicht verseifte Maleinsäureanhydrideinheiten enthalten. Diese Vorprodukte sind je nach dem Anteil der $R_F$ -substituierten Comonomere beispielsweise in einem fluorierten Lösemittel wie Freon 113 oder in THF löslich, Polymere mit einem hohen Anteil an fluorsubstituierten Resten im Polymeren (>50 Gew.-% Reste mit F im Rest) wurden in Freon 113, $F_3C\text{-}CF_2Cl$, Polymere mit einem niedrigeren Anteil an fluorsubstituierten Resten im Polymeren (<43 Gew.-% Reste mit F im Rest) wurden in THF vermessen. Copolymere mit einer dazwischen liegenden Zusammensetzung können beispielsweise bei erhöhter Temperatur in THF vermessen werden.

Als Vergleichsstandard wurden entweder eng verteilte Polystyrol- oder eng verteilte Polyisoprenproben (für freonhaltige Lösungsmittel), eingesetzt, wie man sie durch lebende anionische Polymerisation erhalten kann.

Für die GPC-Messungen in THF wurde ein Aufbau mit einer programmierbaren Waters 590 HPLC-Pumpe, einer Anordnung von vier Waters μ-Styragel Säulen ($10^6$, $10^4$, $10^3$, 500 Å) und einem Waters 410 Brechungsindexdetektor (R1) eingesetzt. Der Fluss betrug 1,5 mL/min. Als Kalibrierung wurden engverteilte Polystyrolstandards (PSS) verwendet.

Für die GPC-Messungen in Freon wurde ein Aufbau mit einer programmierbaren Waters 510 HPLC-Pumpe, einer Anordnung von PSS-SDV-XL Säulen (Polymer Standard Services, PSS, Mainz, 2x 8x300mm, 1x 8x50mm, Partikelgröße 5μm), einem Polymer Laboratories PL-ELS-1000 Detektor und einem Waters 486 UV(254nm)-Detektor. Der Fluss betrug 1,0 mL/min. Als Kalibrierung wurden engverteilte Polyisoprenstandards (PSS) verwendet.

Die Polydispersität eines in einer erfindungsgemäßen Zusammensetzung vorliegenden Copolymeren beträgt beispielsweise weniger als etwa 10, insbesondere weniger als etwa 7. Im Rahmen einer bevorzugten Ausführungsform der vorliegenden Erfindung beträgt die Polydispersität eines derartigen Copolymeren weniger als etwa 5, insbesondere weniger als etwa 4. In Ausnahmefällen kann die Polydispersität eines erfindungsgemäßen Copolymeren auch weniger

als etwa 2,5, beispielsweise weniger als etwa 2 betragen.

Eine erfindungsgemäße Zusammensetzung kann im Rahmen der vorliegenden Erfindung beispielsweise nur eines der oben genannten Copolymeren enthalten. Es ist im Rahmen der vorliegenden Erfindung jedoch ebenso vorgesehen, dass eine erfindungsgemäße Zusammensetzung zwei oder mehr, beispielsweise drei, vier oder fünf unterschiedliche Typen der oben genannten Copolymeren enthält. Der Begriff "unterschiedliche Typen" bezieht sich dabei auf die chemische Zusammensetzung der Copolymeren oder auf unterschiedliche Molekulargewichte, sofern die unterschiedlichen Molekulargewichte bei zwei Polymertypen mit identischer chemischer Zusammensetzung zu einer bimodalen Verteilung der Molekulargewichte führen würde.

Ein erfindungsgemäßes Copolymeres weist mindestens ein Strukturelement der allgemeinen Formel I

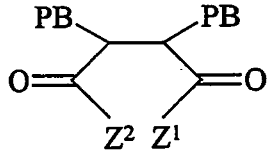 (I),

worin PB für ein Polymerrückgrat mit durchgehenden kovalenten C-C-Bindungen und die Reste $Z^1$ und $Z^2$ jeweils unabhängig voneinander mit $O^-M^+$ oder $O^-N^+R_4$ stehen, wobei M für Li, Na oder K und R für H oder einen linearen Alkylrest mit 1 bis 18 C-Atomen oder einen Rest der allgemeinen Formel $-(CH_2-CHR'-O-)_mL$, worin m für eine ganze Zahl von 1 bis etwa 20 und L für H, $CH_2-CHR'-NR'_2$ oder $CH_2-CHR'-N^+R'_3$ steht oder R für einen Aminozucker wie Aminosorbitol, β-D-Glucopyranosylamin oder β-D-Glucosamin steht, oder einer der Reste $Z^1$ und $Z^2$ für $O^-M^+$ oder $O^-N^+R_4$ und der verbleibende Rest $Z^1$ oder $Z^2$ für X-R" steht, wobei X für O oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder die Reste $Z^1$ und $Z^2$ zusammen für NR" stehen oder mindestens $Z^1$ oder mindestens $Z^2$ für X-$R^N$ steht, wobei X für O, S oder NR', $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen oder worin beide Reste $Z^1$ und $Z^2$ zusammen für N-$R^N$ stehen, oder zwei oder mehr gleiche oder unterschiedliche Strukturelemente der allgemeinen Formel I auf.

Der Begriff "Polymerrückgrat" umfasst dabei im Rahmen des vorliegenden Textes auch diejenigen Fälle, in denen ein Strukturelement der allgemeinen Formel I am Kettenende sitzt. In Abhängigkeit vom Start und von Abbruch der radikalischen Polymerisation steht in solchen Fällen eine der Variablen PB für die am Kettenende befindliche, durch den Starter oder das Quenchmittel oder eine sonstige Abbruchreaktion hervorgerufene Struktureinheit.

Wenn ein erfindungsgemäßes Copolymeres mehr als ein Strukturelement der allgemeinen Formel I enthält, so kann es sich bei den zwei oder _mehr Strukturelementen der allgemeinen Formel I um identische Strukturelemente, d. h. um Strukturelemente mit identischem chemischen Aufbau oder um unterschiedliche Strukturelemente der allgemeinen Formel I handeln. Im Rahmen einer bevorzugten Ausführungsform der vorliegenden Erfindung enthält ein erfindungsgemäßes Copolymeres 1 bis etwa 7 unterschiedliche Strukturelemente der allgemeinen Formel I, vorzugsweise 1, 2, 3 oder 4, insbesondere 1 oder 2 oder 3.

Die erfindungsgemäßen Copolymeren lassen sich grundsätzlich durch beliebige Polymerisationsverfahren herstellen, sofern diese Polymerisationsverfahren zu den gewünschten Polymerstrukturen führen. Im Rahmen einer bevorzugten Ausführungsform der vorliegenden Erfindung werden die erfindungsgemäßen Copolymeren jedoch, wie weiter unten näher erläutert, durch radikalische Polymerisation hergestellt.

Ein Strukturelement der allgemeinen Formel I wird dabei vorzugsweise durch Copolymerisation einer Verbindung der allgemeinen Formel III

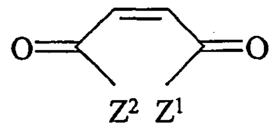 (III);

worin $Z^1$ und $Z^2$ die oben genannte Bedeutung aufweisen, in das erfindungsgemäße Copolymere eingebaut. Im Rahmen einer radikalischen Polymerisation wird dabei die olefinisch ungesättigte Doppelbindung der Verbindung der allgemeinen Formel III geöffnet und in ein Polymerrückgrat (PB) eingebaut.

So lassen sich zur Einführung der Struktureinheiten gemäß der allgemeinen Formel I in die erfindungsgemäßen Copolymeren beispielsweise Verbindungen der allgemeinen Formel III einsetzen, in denen einer der Reste $Z^1$ oder $Z^2$ oder beide Reste für $O^-M^+$ oder $O^-N^+R_4$ stehen. Es kann jedoch im Rahmen der vorliegenden Erfindung bevorzugt sein, anstatt der Salze, wie sie im Rahmen der allgemeinen Formel III beschrieben werden, die freien Säuren einzusetzen, beispielsweise um die Polymerisation in einem hydrophoben (nicht wässrigen) Lösemittel zu ermöglichen. Im Rahmen des vorliegenden Textes wird daher nachfolgend bei der Beschreibung von zur Polymerisation vorgesehenen Monomeren sowohl auf die entsprechenden Alkalisalze oder Ammoniumsalze als auch auf die freien Säuren bezug genommen, sofern nicht ausdrücklich etwas anderes gesagt wird.

Als geeignete Verbindungen der allgemeinen Formel III eignen sich grundsätzlich Maleinsäure, die Alkali oder Ammoniumsalze der Maleinsäure, Maleinsäureanhydrid und deren Derivate. Geeignete Derivate sind beispielsweise Mono- oder Diester der Maleinsäure mit geeigneten monofunktionellen Alkoholen und deren Salze, Mono- oder Diamide der Maleinsäure oder cyclische Monoamide der Maleinsäure (Maleimide) mit Ammoniak oder substituierten Monoaminen. Vorzugsweise werden im Rahmen der vorliegenden Erfindung zur Herstellung der erfindungsgemäßen Copolymere Verbindungen der allgemeinen Formel IV eingesetzt, die ein zur Herstellung der erfindungsgemäßen Copolymeren geeignetes Copolymerisationsverhalten zeigen.

Zum Einbau der Strukturelementen gemäß der allgemeinen Formel I in die erfindungsgemäßen Copolymere geeignet sind beispielsweise Verbindungen der allgemeinen Formel IV, in denen $Z^1$ und $Z^2$ jeweils unabhängig voneinander oder zusammen für X-R" stehen, wobei X für O, N oder NH und R" für H, einen mit Fluor substituierten linearen oder verzweigten, gesättigten Alkylrest oder Oxyalkylrest mit 4 bis 18 C-Atomen oder einen mit Fluor substituierten gesättigten oder ungesättigten mono- oder polycyclischen Cycloalkylrest mit 6 bis 18 C-Atomen oder einen mit Fluor substituierten Aryl- oder Heteroarylrest mit 6 bis 12 C-Atomen steht.

Besonders zur Einführung der Strukturelemente gemäß der allgemeinen Formel I in die erfindungsgemäßen Copolymere geeignet sind Verbindungen der allgemeinen Formel III, wie sie durch die nachfolgenden allgemeinen Strukturformeln VII bis XII,

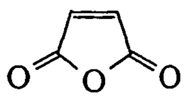 VII

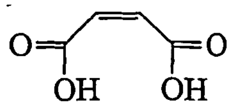 VIII

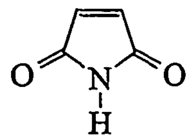 IX

und deren Salze

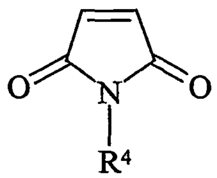 X

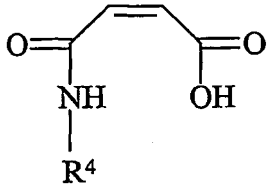 XI

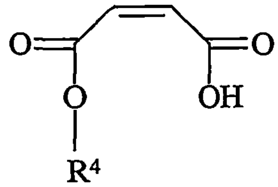 XII

$R^4 =$

$-(CH_2)_n-(CF_2)_mF$

mit n = 2, 3 oder 4

m = 6 bis 10

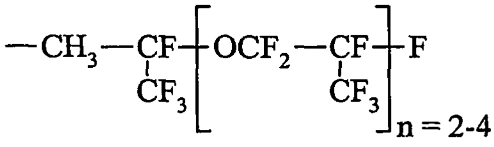

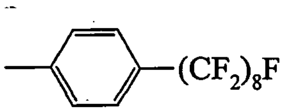

$-(CF_2)_8F$

beschrieben werden. Ebenfalls einsetzbar sind Derivate der oben genannten Verbindungen. Beispiele für derartige geeignete Verbindungen sind Maleinsäure, Maleinsäureanhydrid, Methylmaleinsäureanhydrid, 2,3-Dimethylmaleinsäureanhydrid, Phenylmaleinsäureanhydrid, Maleimid, N-Methylmaleimid, N-Phenylmaleimid, N-Benzylmaleimid, N-(1-Pyrenyl)maleimid, 2-Methyl-N-phenylmaleimid, 4-Phenylazomaleinanil, Fumarsäurediethylester, Fumarsäuredimethylester und entsprechende höhere aliphatische, cycloaliphatische oder aromatische Fumarsäureester wie Fumarsäuredioctylester oder Fumarsäuredüsobutylester sowie Fumarsäuredinitril oder Gemische aus zwei oder mehr davon.

Im Rahmen einer bevorzugten Ausführungsform der vorliegenden Erfindung enthält ein erfindungsgemäßes Copolymeres mehr als nur ein Strukturelement der allgemeinen Formel I.

Vorzugsweise beträgt der Anteil an Strukturelementen der allgemeinen Formel I am gesamten erfindungsgemäßen Copolymeren etwa 1 bis etwa 50 mol-%, insbesondere etwa 2 bis etwa 50 oder etwa 3 bis etwa 50 mol-%. Im Rahmen einer bevorzugten Ausführungsform der vorliegenden Erfindung wird der Anteil an Strukturelementen der allgemeinen Formel I so gewählt, dass mindestens etwa 5 mol-%, vorzugsweise jedoch mehr, beispielsweise mindestens etwa 7 oder mindestens etwa 10 mol-% an Struktureinheiten der allgemeinen Formel I im erfindungsgemäßen Copolymeren enthalten sind. Vorzugsweise beträgt der Gehalt an Strukturelementen der allgemeinen Formel I beispielsweise etwa 15 bis etwa 50 mol-%, insbesondere etwa 20 bis etwa 50 mol-% oder etwa 25 bis etwa 50 mol-%. Grundsätzlich sind auch innerhalb dieser Bereiche liegende Gehalte an Strukturelementen der allgemeinen Formel I möglich, beispielsweise etwa 30 bis etwa 42 mol-% oder etwa 35 bis etwa 39 mol-%.

Im Rahmen einer bevorzugten Ausführungsform der vorliegenden Erfindung wird die Zusammensetzung des Copolymeren so gewählt, dass das Copolymere, gegebenenfalls nach entsprechender Spaltung eines Anhydrids und Neutralisation der freien Säuregruppen aus den Monomerbausteinen, eine ausreichende Zahl an funktionellen Gruppen $O^-M^+$ oder $O^-N^+R_4$ aufweist. Die Zahl an funktionellen Gruppen $O^-M^+$ oder $O^-N^+R_4$ sollte dabei so bemessen sein, dass das Copolymere in Wasser oder polaren Lösemitteln, beispielsweise aprotischen polaren Lösemitteln, oder Gemischen aus Wasser und polaren Lösemitteln, vorzugsweise jedoch in Wasser, zumindest ohne Zusatz größerer Mengen niedermolekularer Emulgatoren emulgierbar ist. Vorzugsweise ist ein erfindungsgemäßes Copolymeres unter Zusatz von weniger als etwa 5 Gew.-% oder weniger als etwa 3 Gew.-% oder weniger als etwa 1 Gew.-% niedermolekularer Emulgatoren emulgierbar, oder sogar selbstemulgierbar oder im wesentlichen molekulardispers in einem der oben genannten Lösemittel oder Lösemittelgemische löslich.

Der Anteil an Struktureinheiten die mindestens eine funktionelle Gruppe $O-M^+$ oder $O^-N^+R_4$ aufweisen beträgt dabei, bezogen auf die gesamte Zahl an Struktureinheiten im erfindungsgemäßen Copolymeren, beispielsweise mindestens etwa 2%, vorzugsweise liegt die Zahl jedoch darüber und beträgt mindestens etwa 5,10, 15 oder mindestens etwa 20%. Eine besonders gute Löslichkeit weisen die erfindungsgemäßen Copolymeren beispielsweise dann auf, wenn die Zahl der Struktureinheiten mit mindestens einer funktionellen Gruppe $O^-$ $M^+$ oder $O^-N^+R_4$ mehr als etwa 20%, beispielsweise mehr als etwa 25, 30, 40 oder mehr als etwa 45% beträgt.

Die Wasserlöslichkeit sowie die filmbildenden Eigenschaften der erfindungsgemäßen Polymeren lassen sich beispielsweise auch durch eine Geeignete Auswahl der Reste R steuern. So kann die Wasserlöslichkeit beispielsweise durch den Einbau geeigneter Reste R gesteuert werden, wobei R für einen Rest der allgemeinen Formel $-(CH_2-CHR'-O-)_mL$, worin R' für H einen linearen oder verzweigten Alkylrest mit 1 bis 24 C-Atomen, m für eine ganze Zahl von 1 bis etwa 20, insbesondere etwa 1 bis etwa 10 oder etwa 1 bis etwa 5 und L für H, $CH_2-CHR'-NR'_2$ oder $CH_2-CHR'-N^+R'_3$ steht oder R für einen Aminozucker wie Aminosorbitol, β-D-Glucopyranosylamin oder β-D-Glucosamin steht. Der Anteil an Resten R die für einen Rest der allgemeinen Formel $-(CH_2-CHR'-O-)_mL$, worin R' für H einen linearen oder verzweigten Alkylrest mit 1 bis 24 C-Atomen, m für eine ganze Zahl von 1 bis etwa 20, insbesondere etwa 1 bis etwa 10 oder etwa 1 bis etwa 5 ,und L für H, $CH_2-CHR'-NR'_2$ oder $CH_2-CHR'-N^+R'_3$ steht oder für einen Aminozucker wie Aminosorbitol, β-D-Glucopyranosylamin oder β-D-Glucosamin stehen beträgt pro Struktureinheit die mindestens eine funktionelle Gruppe oder $O^-N^+R_4$ aufweist 0 bis 4, beispielsweise 1, 2 oder 3.

Im Rahmen einer weiteren bevorzugten Ausführungsform der vorliegenden Erfindung weist ein erfindungsgemäßes Copolymeres mindestens ein Strukturelement der allgemeinen Formel I auf, worin PB für ein Polymerrückgrat mit durchgehenden kovalenten C-C-Bindungen, mindestens $Z^1$ oder mindestens $Z^2$ für $X-R^N$ steht, wobei X für O, S oder NR', R' für H einen linearen oder verzweigten Alkylrest mit 1 bis 24 C-Atomen, $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht, und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen oder worin beide Reste $Z^1$ und $Z^2$ zusammen für $N-R^N$ stehen.

Ein erfindungsgemäßes Copolymeres kann solche Strukturelemente der allgemeinen Formel I zusätzlich zu weiteren Strukturelementen der allgemeinen Formel I, beispielsweise den bereits weiter oben genannten Strukturelementen der allgemeinen Formel I aufweisen. Es ist jedoch ebenfalls möglich, dass ein erfindungsgemäßes Copolymeres die letztgenannten Strukturelemente der allgemeinen Formel I als einzige Strukturelemente der allgemeinen Formel I aufweist.

Copolymere mit den leztgenannten Strukturelementen der allgemeinen Formel I eignen sich besonders für die Oberflächenbehandlung von Geweben, Vliesen oder Textilien.

Zur Einführung der letztgenannten Strukturelemente gemäß der allgemeinen Formel I in die erfindungsgemäßen Copolymere sind grundsätzlich Verbindungen der allgemeinen Formel III geeignet, worin $Z^1$ und $Z^2$ zusätzlich zu den oben genannten Bedeutungen noch gemeinsam für O stehen können. In diesem Fall weist ein erfindungsgemäßes Copolymeres beispielsweise Strukturelemente der allgemeinen Formel I auf, in denen mindestens $Z^1$ oder mindestens $Z^2$ für $X-R^N$ steht oder beide Reste $Z^1$ und $Z^2$ zusammen für $N-R^N$ stehen und Strukturelemente der allgemeinen Formel I, in denen beide Reste $Z^1$ und $Z^2$ zusammen für O stehen. Grundsätzlich handelt es sich bei den oben genannten Verbindungen der allgemeinen Formel III daher um Maleinsäureanhydrid oder Verbindungen aus der Klasse der Maleinsäureanhydridderivate

Wenn im Rahmen eines erfindungsgemäßen Copolymeren mindestens einer der Reste $Z^1$ oder $Z^2$ für $X-R^N$ stehen oder beide Reste $Z^1$ und $Z^2$ zusammen für $N-R^N$ stehen, so eignen sich zur Einführung der Strukturelemente gemäß der allgemeinen Formel I in die erfindungsgemäßen Copolymere beispielsweise Verbindungen der allgemeinen Formel VIa und VIb

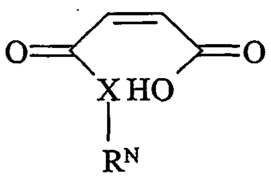 (VIa), 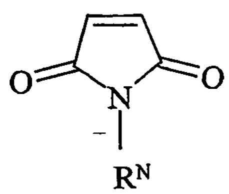 (VIb)

worin X und $R^N$ die oben angegebene Bedeutung aufweisen. Beim Rest $R^N$ handelt es sich in diesem Fall um einen mindestens eine Aminogruppe tragenden Rest.

Unter einer "Aminogruppe" wird im Rahmen des vorliegenden Textes im Zusammenhang mit dem genannten Rest $R^N$ ein an mindestens eine Alkylgruppe kovalent gebundenes Stickstoffatom verstanden. Ein derartiges Stickstoffatom kann beispielsweise neben der kovalenten Bindung an eine Alkylgruppe noch zwei Wasserstoffatome tragen. Es ist jedoch ebenso möglich, dass ein derartiges Stickstoffatom noch eine oder mehr weitere kovalente Bindungen an Alkylgruppen aufweist. Es ist darüber hinaus ebenso möglich, dass ein solches Stickstoffatom Teil eines mono- oder polycyclischen Systems ist und entsprechend mit zwei oder drei Bindungen an entsprechenden cyclischen Systemen beteiligt ist. Weiterhin kann ein im Rahmen des vorliegenden Testes als "Aminogruppe" bezeichnetes Stickstoffatom eine positive Ladung tragen, die beispielsweise durch Anlagerung eines Protons oder durch Alkylierung (Quaternisierung) entstanden ist.

Geeignete Aminogruppen sind beispielsweise Aminogruppen des allgemeinen Aufbaus -NH(Alk) oder $-N(Alk)_2$, worin Alk für eine lineare oder verzweigte Alkylgruppe mit 1 bis 4 C-Atomen, insbesondere für Methyl oder Ethyl steht.

Im Rahmen einer bevorzugten Ausführungsform trägt ein erfindungsgemäßes Copolymeres einen Rest $R^N$ mit einer N,N-Dialkylaminofunktion, insbesondere einer N,N-Dimethylaminofunktion. Im Rahmen einer weiteren bevorzugten Ausführungsform der vorliegenden Erfindung ist der Rest $R^N$ ein linearer Alkylrest mit 2 bis etwa 8, insbesondere 2, 3, 4 oder 5 C-Atomen.

Im Rahmen einer bevorzugten Ausführungsform der vorliegenden Erfindung enthält ein erfindungsgemäßes

fluorhaltiges Copolymeres

a) ein Strukturelement der allgemeinen Formel I

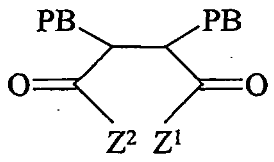

(I),

worin PB für ein Polymerrückgrat mit durchgehenden kovalenten C-C-Bindungen, mindestens $Z^1$ oder mindestens $Z^2$ für X-$R^N$ steht, wobei X für O, S oder NR', R' für H einen linearen oder verzweigten Alkylrest mit 1 bis 24 C-Atomen, $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen oder worin beide Reste $Z^1$ und $Z^2$ zusammen für N-$R^N$ stehen, und

b) gegebenenfalls ein Strukturelement der allgemeinen Formel I enthaltend mindestens ein Strukturelement der allgemeinen Formel I, worin die Reste $Z^1$ und $Z^2$ jeweils unabhängig voneinander mit $O^-M^+$ oder $O^-N^+R_4$ stehen, wobei M für Li, Na oder K und R für H oder einen linearen Alkylrest mit 1 bis 18 C-Atomen oder einen Rest der allgemeinen Formel $-(CH_2-CHR'-O-)_mL$, worin R' für H einen linearen oder verzweigten Alkylrest mit 1 bis 24 C-Atomen, m für eine ganze Zahl von 1 bis etwa 20 und L für H, $CH_2-CHR'-NR'_2$ oder $CH_2-CHR'-N^+R'_3$ steht oder R für einen Aminozucker steht, oder einer der Reste $Z^1$ und $Z^2$ für $O-M^+$ oder $O-N^+R_4$ und der verbleibende Rest $Z^1$ oder $Z^2$ für X'-R" steht, wobei X' für O oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen, und

c) ein Strukturelement der allgemeinen Formel II

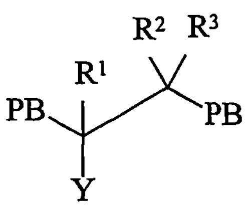

(II),

worin die Reste $R^1$ bis $R^3$ für H oder einen linearen oder verzweigten Alkylrest mit 1 bis 4 C-Atomen, Y für R oder einen linearen oder verzweigten, gegebenenfalls ganz oder teilweise mit Fluor substituierten linearen oder verzweigten Alkylrest mit 1 bis 24 C-Atomen, einen gegebenenfalls ganz oder teilweise mit Fluor substituierten Cycloyalkylrest oder Arylrest mit 6-24 C-Atomen, einen Rest der allgemeinen Formel C(O)OR, einen gegebenenfalls ganz oder teilweise mit Fluor substituierten Alkarylrest mit 7 bis 24 C-Atomen oder einen gegebenenfalls ganz oder teilweise mit Fluor substituierten Alkoxyalkarylrest steht, oder zwei oder mehr gleiche oder unterschiedliche Strukturelemente der allgemeinen Formel II und wobei, wenn kein Strukturelement der allgemeinen Formel I einen Fluorsubstituenten aufweist, mindestens ein Strukturelement der allgemeinen Formel II einen Fluorsubstituenten aufweist.

Ein erfindungsgemäßes Copolymeres kann im Rahmen der vorliegenden Erfindung beispielsweise nur ein Strukturelement des oben unter a) bezeichneten Typs der allgemeinen Formel I tragen, wobei die Bezeichnung "Typ"

sich auf die chemische Konstitution des Strukturelements bezieht. Es ist jedoch ebenso möglich, dass ein erfindungsgemäßes Copolymeres zwei oder mehr unterschiedliche Typen an Strukturelementen des unter a) bezeichneten Typs der allgemeinen Formel I trägt, beispielsweise 3, 4 oder 5. Vorzugsweise weist in erfindungsgemäßes Copolymeres im Rahmen der vorliegenden Erfindung nur 1 oder 2 Strukturelemente des oben unter a) bezeichneten Typs der allgemeinen Formel I auf.

Der Anteil an Strukturelementen des oben unter a) bezeichneten Typs der allgemeinen Formel I am erfindungsgemäßen Copolymeren, bezogen auf die Zahl der am Copolymeren beteiligten Monomeren, beträgt beispielsweise etwa 1 bis etwa 50 mol-%, insbesondere etwa 2 bis etwa 50 oder etwa 3 bis etwa 50 mol-%. Im Rahmen einer bevorzugten Ausführungsform der vorliegenden Erfindung wird der Anteil an Strukturelementen des oben unter a) bezeichneten Typs der allgemeinen Formel I so gewählt, dass mindestens etwa 5 mol%, vorzugsweise jedoch mehr, beispielsweise mindestens etwa 7 oder mindestens etwa 10 mol-% an Struktureinheiten des oben unter a) bezeichneten Typs der allgemeinen Formel I im erfindungsgemäßen Copolymeren enthalten sind. Vorzugsweise beträgt der Gehalt an Strukturelementen des oben unter a) bezeichneten Typs der allgemeinen Formel I beispielsweise etwa 15 bis etwa 50 mol-%, insbesondere etwa 20 bis etwa 50 mol-% oder etwa 25 bis etwa 50 mol-%. Grundsätzlich sind auch innerhalb dieser Bereiche liegende Gehalte an Strukturelementen des oben unter a) bezeichneten Typs der allgemeinen Formel 1 möglich, beispielsweise etwa 30 bis etwa 42 mol-% oder etwa 35 bis etwa 39 mol-%.

Die Einführung der Strukturelemente des oben unter a) bezeichneten Typs der allgemeinen Formel I gelingt auf unterschiedliche Weise. So kann beispielsweise eine Copolymerisation von Verbindungen erfolgen, die ohne weitere Reaktion oder gegebenenfalls nach Protonierung oder Quaternisierung zu einem erfindungsgemäßen Polymeren führen. Bei dieser Methode werden daher Verbindungen miteinander umgesetzt, die im wesentlichen mit Ausnahme der in einer solchen Verbindung enthaltenen olefinisch ungesättigten und radikalisch polymerisierbaren Doppelbindung mit den oben beschriebenen Strukturelementen identisch sind.

Es ist jedoch ebenso möglich, die erfindungsgemäßen Copolymeren zunächst mit Verbindungen aufzubauen, welche die abschließende Struktur der Strukturelemente des oben unter a) bezeichneten Typs der allgemeinen Formel I noch nicht aufweisen sondern erst im Rahmen einer polymeranalogen Reaktion in diese Strukturelemente umgewandelt werden müssen.

Dabei bieten sich grundsätzlich alle radikalisch polymerisierbaren Verbindungen an, die im Rahmen einer polymeranalogen Reaktion mit Verbindungen des Typs $X\text{-}R^N$ unter Ausbildung eines Strukturelements des oben unter a) bezeichneten Typs der allgemeinen Formel I reagieren können. Besonders geeignet ist Maleinsäureanhydrid.

Ein solches Copolymeres mit Maleinsäureanhydrideinheiten kann anschließend im Rahmen einer polymeranalogen Reaktion mit entsprechenden Verbindungen zu Strukturelementen des oben unter a) bezeichneten Typs der allgemeinen Formel I umgesetzt werden.

Zur Einführung der Strukturelemente des oben unter a) bezeichneten Typs der allgemeinen Formel I in die entsprechenden Maleinsäureanhydrid-Einheiten aufweisenden Copolymere geeignet sind beispielsweise N,N-Dimethylaminoethanol, N,N-Dimethylethylendiamin, Ethylendiamin, N,N-Diethylaminoethanol, 3-Dimethylamino-1-propylamin oder N,N-Diethylethylendiamin.

Geeignete Reaktionen und Reagenzien zur Einführung der weiteren Strukturelemente des oben unter a) beschriebenen Typs der allgemeinen Formel I sind dem Fachmann bekannt und können beispielsweise analog dem hier beschriebenen Muster in die Copolymeren eingeführt werden.

Ein erfindungsgemäßes Copolymeres kann im Rahmen der vorliegenden Erfindung beispielsweise Strukturelemente des oben unter a) bezeichneten Typs enthalten. Im Rahmen einer solchen Ausführungsform der vorliegenden Erfindung wird die Zusammensetzung des Copolymeren so gewählt, dass der Anteil an Strukturelementen der allgemeinen Formel I zu einem Anteil von etwa 40 bis etwa 100 % Strukturelemente des unter a) bezeichneten Typs der allgemeinen Formel I enthält, beispielsweise zu einem Anteil von etwa 60 bis etwa 95 % und noch mehr bevorzugt zu einem Anteil von etwa 80 bis etwa 90 %. Es ist jedoch erfindungsgemäß ebenso vorgesehen, dass ein erfindungsgemäßes Copolymeres keine Strukturelemente des oben unter a) bezeichneten Typs enthält.

Im Rahmen einer bevorzugten Ausführungsform der vorliegenden Erfindung wird die Zusammensetzung des erfindungsgemäßen Copolymeren so gewählt, dass das Copolymere, gegebenenfalls nach entsprechender Spaltung eines Anhydrids und Neutralisation der freien Säuregruppen aus den Monomerbausteinen, eine ausreichende Zahl an funktionellen Gruppen $O\text{-}M^+$ oder $O\text{-}N^+R_4$ aufweist. Die Zahl an funktionellen Gruppen $O\text{-}M^+$ oder $O\text{-}N^+R_4$ sollte dabei so bemessen sein, dass das Copolymere in Wasser oder polaren Lösemitteln, beispielsweise aprotischen polaren Lösemitteln, oder Gemischen aus Wasser und polaren Lösemitteln, vorzugsweise jedoch in Wasser oder im oben beschriebenen Lösemittelgemisch aus Wasser und mindestens einem wassermischbaren Alkohol zumindest ohne Zusatz größerer Mengen niedermolekularer Emulgatoren emulgierbar ist. Vorzugsweise ist ein erfindungsgemäßes Copolymeres unter Zusatz von weniger als etwa 5 Gew.-% oder weniger als etwa 3 Gew.-% oder weniger als etwa 1 Gew.-% niedermolekularer Emulgatoren emulgierbar, oder sogar selbstemulgierbar oder im wesentlichen molekulardispers in einem der oben genannten Lösemittel oder Lösemittelgemische löslich.

Der Anteil an Struktureinheiten die mindestens eine funktionelle Gruppe $O^-M^+$ oder $O^-N^+R_4$ aufweisen beträgt

dabei, bezogen auf die gesamte Zahl an Struktureinheiten im erfindungsgemäßen Copolymeren, mindestens etwa 2%, vorzugsweise liegt die Zahl jedoch darüber und beträgt mindestens etwa 5,10, 15 oder mindestens etwa 20%. Eine besonders gute Löslichkeit weisen die erfindungsgemäßen Copolymeren beispielsweise dann auf, wenn die Zahl der Struktureinheiten mit mindestens einer funktionellen Gruppe $O^-M^+$ oder $O^-N^+R_4$ mehr als etwa 20%, beispielsweise mehr als etwa 25, 30, 40 oder mehr als etwa 45% beträgt.

Außer einer Struktureinheit gemäß der allgemeinen Formel I enthält ein erfindungsgemäßes Copolymeres noch mindestens eine Struktureinheit gemäß der allgemeinen Formel II

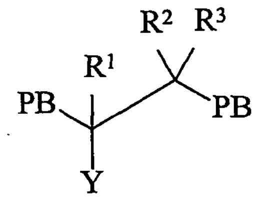

(II),

worin die Reste $R^1$ bis $R^3$ für H oder einen linearen oder verzweigten Alkylrest mit 1 bis 4 C-Atomen, Y für R oder einen linearen oder verzweigten, gegebenenfalls ganz oder teilweise mit Fluor substituierten linearen oder verzweigten Alkylrest mit 1 bis 24 C-Atomen, einen gegebenenfalls ganz oder teilweise mit Fluor substituierten Cycloyalkylrest oder Arylrest mit 6-24 C-Atomen, einen Rest der allgemeinen Formel C(O)OR, einen gegebenenfalls ganz oder teilweise mit Fluor substituierten Alkarylrest oder Alkoxyarylrest mit insgesamt 7 bis 24 C-Atomen oder einen gegebenenfalls ganz oder teilweise mit Fluor substituierten Alkoxyalkarylrest steht.

Vorzugsweise steht der Rest $R^1$ im Rahmen der vorliegenden Erfindung für H oder $CH_3$ und die Reste $R^2$ und $R^3$ für H.

Im Rahmen einer bevorzugten Ausführungsform der vorliegenden Erfindung enthält ein erfindungsgemäßes Copolymeres dabei mindestens ein Strukturelement der allgemeinen Formel IV

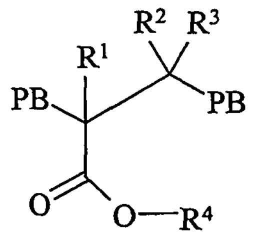

(IV),

worin PB, $R^1$, $R^2$, $R^3$ die oben genannte Bedeutung aufweisen und $R^4$ für R, insbesondere für die im Rahmen der Beschreibung als fluorsubstituiert bezeichneten Reste R" steht.

Im Rahmen einer weiteren bevorzugten Ausführungsform der vorliegenden Erfindung enthält ein erfindungsgemäßes Copolymeres mehr als nur ein Strukturelement der allgemeinen Formel II. Vorzugsweise beträgt der Anteil an Strukturelementen der allgemeinen Formel II am gesamten erfindungsgemäßen Copolymeren etwa 50 bis etwa 99 mol-%, insbesondere etwa 50 bis etwa 95 oder etwa 55 bis etwa 85 mol-%. Geeignet sind beispielsweise Copolymere, deren Gehalt an Strukturelementen der allgemeinen Formel II etwa 98 bis etwa 52 mol-% oder etwa 95 bis etwa 55 mol-% oder etwa 90 bis etwa 60 mol-% beträgt.

Ein Strukturelement der allgemeinen Formel I wird, wie bereits oben erläutert, vorzugsweise durch radikalische Copolymerisation in das erfindungsgemäße Copolymere eingeführt. Beispielsweise wird ein Strukturelement der allgemeinen II durch Copolymerisation einer Verbindung der allgemeinen Formel V

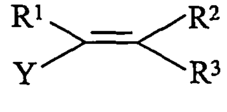

(V),

worin Y, $R^1$, $R^2$ und $R^3$ die oben genannte Bedeutung aufweisen, in das erfindungsgemäße Copolymere eingefügt. Im

Rahmen der radikalischen Polymerisation wird dabei die olefinisch ungesättigte Doppelbindung der Verbindung der allgemeinen Formel V geöffnet und in ein Polymerrückgrat (PB) eingebaut. Für die Bedeutung der Variablen PB wird auf die oben angegebene Erläuterung verwiesen.

Als im Rahmen der vorliegenden Erfindung zur Herstellung der erfindungsgemäßen Copolymeren geeignete Verbindungen der allgemeinen Formel V eignen sich grundsätzlich alle mit einer Verbindung der allgemeinen Formel III oder IV copolymerisierbaren entsprechenden Monomeren. Vorzugsweise sollten zur Herstellung der erfindungsgemäßen Copolymeren jedoch Verbindungen der allgemeinen Formel V eingesetzt werden, die nicht zu einer Erhöhung der Polarität des Copolymeren beitragen. Insbesondere sind daher als Verbindungen der allgemeinen Formel V im wesentlichen unpolare Monomere geeignet, insbesondere Olefine, Ester der Acrylsäure oder Methacrylsäure oder Styrole. Als Verbindungen gemäß der allgemeinen Formel V können beispielsweise Verbindungen mit Silyl- oder Fluoralkylgruppen wie Trimethylsilylmethacrylat, 2-(Trimethylsilyloxy)ethylmethacrylat, 3-(Trimethoxysilyl)propylmethacrylat, 2,2,3,3-Tetrafluorpropylmethacrylate, 1,1,1,3,3,3-Hexafluor-isopropylmethacrylat, 2,2,2-Trifluorethylmethacrylat, 2,2,3,4,4,4-Hexafluorbutylmethacrylat, 2,2,2-Trifluorethylacrylat, 2,2,3,3-Tetrafluorpropylacrylat, 1,1,1,3,3,3-Hexafluor-isopropylacrylat, 2-Fluorstyrol, 3-Fluorstyrol, 4-Fluorstyrol, 3-(Trifluormethyl)styrol, 3,5-Bis(Trifluormethyl)styrol oder Vinylether mit langen fluorierten Seitenketten eingesetzt werden.

Sofern das erfindungsgemäße Copolymere mindestens ein Strukturelement der allgemeinen Formel I enthält das einen Fluorsubstituenten aufweist, können zur Herstellung der erfindungsgemäßen Copolymeren Verbindungen der allgemeinen Formel V eingesetzt werden, die keinen Fluorsubstituenten tragen. Es ist jedoch erfindungsgemäß ebenso möglich und vorgesehen, dass ein erfindungsgemäßes Copolymeres Strukturelementen der allgemeinen Formel II trägt, die Fluorsubstituenten aufweist. In diesem Fall werden zum einfügen derartige Strukturelement der allgemeinen Formel II Verbindungen der allgemeinen Formel V eingesetzt, die ihrerseits Fluorsubstituenten tragen. Es können dabei ausschließlich Verbindungen der allgemeinen Formel V eingesetzt werden, die solche Fluorsubstituenten tragen. Es ist jedoch ebenfalls möglich Gemische aus zwei oder mehr Verbindungen der allgemeinen Formel V einzusetzen, wobei nicht alle Verbindungen der allgemeinen Formel V einen Fluorsubstituenten tragen. Auf diese Weise ist eine genaue Steuerung des Fluorgehalts sowie der Glas- und Schmelzübergänge und damit auch der Löslichkeit und der Oberflächenaktivität der erfindungsgemäßen Copolymeren möglich.

Im Rahmen einer bevorzugten Ausführungsform der vorliegenden Erfindung werden als Verbindungen der allgemeinen Formel V fluorsubstituierte Ester der Acrylsäure oder fluorsubstituierte Ester der Methacrylsäure oder fluorsubstituierte Styrole eingesetzt. Besonders geeignet sind im Rahmen der vorliegenden Erfindung Verbindungen der allgemeinen Formeln XIII bis XV

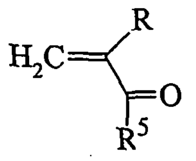 XIII

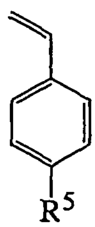 XIV

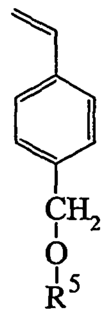 XV

R = H, $CH_3$

$R^5 =$

$-(CH_2)_n-(CF_2)_mF$
mit $n = 2, 3$ oder 4
$m = 6$ bis 10

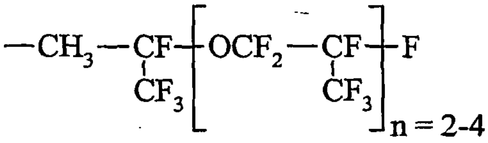

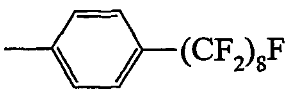

$-(CF_2)_8F$

worin R und $R^5$ die oben angegebene Bedeutung aufweisen.

Es ist im Rahmen der vorliegenden Erfindung erforderlich, dass mindestens ein Strukturelement der allgemeinen Formel 1 oder II im Copolymeren einen mit Fluor substituierten Rest aufweist. Es ist im Rahmen der vorliegenden Erfindung jedoch ebenso möglich und vorgesehen, dass ein erfindungsgemäßes Copolymeres zusätzlich zu mindestens einem keinen Fluorsubstituenten aufweisenden Strukturelement der allgemeinen Formel I oder der allgemeinen Formel II Strukturelemente der allgemeinen Formel I öder der allgemeinen Formel II enthält, die keinen Fluorsubstituenten aufweisen. Derartige Strukturelemente lassen sich in das erfindungsgemäße Copolymere dadurch einbringen, dass bei der Copolymerisation beispielsweise Verbindungen der allgemeinen Formel IV oder V eingesetzt werden, deren Reste $Z^1$, $Z^2$ oder Y keinen Fluorsubstituenten tragen. Geeignete derartige Verbindungen sind beispielsweise die Verbindungen der allgemeinen Formeln VII bis XV, wie sie oben abgebildet wurden, wobei anstatt der fluorsubstituierten Reste $R^5$ entsprechende Reste $R^5$ ohne Fluorsubstituenten eingesetzt werden. Geeignete Reste $R^5$ sind beispielsweise die in den oben genannten Formeln aufgeführten Reste $R^5$, bei denen Fluor jeweils durch H ersetzt ist.

Im Rahmen der vorliegenden Erfindung besonders geeignete Copolymere weisen beispielsweise Strukturelemente der allgemeinen Formel I auf, die von Verbindungen der allgemeinen Formel VII, VIII oder IX abgeleitet sind. Im Rahmen einer bevorzugten Ausführungsform der vorliegenden Erfindung weisen erfindungsgemäße Copolymere Strukturelemente auf, die von einer Verbindung der allgemeinen Formel VIII abgeleitet sind.

Im Rahmen einer weiteren bevorzugten Ausführungsform der vorliegenden Erfindung weist ein erfindungsgemäßes Copolymeres zusätzlich zu einem der obengenannten Strukturelemente ein Strukturelement der allgemeinen Formel II auf, das von einer Verbindung der allgemeinen Formel XIII abgeleitet ist und einen mit Fluor substituierten Rest $R^4$ aufweist.

Im Rahmen einer weiteren bevorzugten Ausführungsform der vorliegenden Erfindung weist ein erfindungsgemäßes Copolymeres Strukturelemente der allgemeinen Formel I auf, die von Verbindungen der allgemeinen Formel VIII und XI abgeleitet sind, wobei der Rest $R^5$ Fluorsubstituenten aufweist. Vorzugsweise werden im Rahmen der vorliegenden Erfindung in Kombination mit diesen Strukturelementen Strukturelemente der allgemeinen Formel II eingesetzt, die sich von einer Verbindung der allgemeinen Formel XIII, XIV oder XV, insbesondere XIII oder XV, ableiten.

Um die Eingangs genannten Nachteile im Hinblick auf zu niedrigen Fluorgehalt und mangelnde Beeinflussung der Wasserlöslichkeit der erfindungsgemäßen Copolymere zu vermeiden muss ein erfindungsgemäßes -Copolymeres mindestens ein Strukturelement der allgemeinen Formel II mit einem Fluorsubstituenten aufweisen, wenn das Copolymere ein Strukturelement der allgemeinen Formel I enthält, in dem $Z^1$ für OH und $Z^2$ für OR steht, wobei R einen Fluorsubstituenten aufweist, sofern das Copolymere kein Strukturelement der oben unter a) bezeichneten Klasse aufweist.

Die erfindungsgemäßen Copolymere weisen einen Fluorgehalt auf, der aus derartigen Copolymeren hergestellten Oberflächenbeschichtungen eine möglichst optimale Beständigkeit gegen hydrophile oder hydrophobe Verbindungen, beispielsweise Wasser oder Öl, und möglichst gute schmutzabweisende Eigenschaften gegenüber hydrophilen und hydrophoben Anschmutzungen verleiht. Der Fluorgehalt der erfindungsgemäßen Copolymeren beträgt dabei vorzugsweise mindestens etwa 58 Gew.-% oder mindestens etwa 52 Gew.-%, wenn die Fluorsubstituenten sowohl über Verbindungen der allgemeinen Formel I und der allgemeinen Formel II eingeführt werden oder beispielsweise etwa 10 bis etwa 40 Gew.-% wenn die fluorierten Substituenten allein durch Verbindungen der allgemeinen Formel I eingeführt werden.

Eine besondere Klasse von erfindungsgemäßen Copolymeren stellen diejenigen Copolymeren dar, die ein Strukturelement der allgemeinen Formel I enthalten, in dem beide Reste $Z^1$ und $Z^2$ für $O^-N^+H_4$ stehen oder einer der Reste $Z^1$ oder $Z^2$ für HN-R und der verbleibende Rest für $O-N^+H_4$ steht. Derartige Copolymere weisen aufgrund der ionischen Gruppen eine gute Emulgierbarkeit oder Löslichkeit in Wasser oder wässrigen Lösemitteln auf, wobei sich die Empfindlichkeit der Copolymeren gegenüber Wasser oder wässrigen Lösemitteln nach der Anwendung des Copolymeren, beispielsweise als Oberflächenbeschichtungen, verringern lässt. Werden solche Copolymere aus wässriger Lösung oder Emulsionen auf einer Oberfläche abgeschieden und die dann entstehende Schicht getrocknet und thermisch behandelt, so können diese Strukturelemente unter Abspaltung von Ammoniak und Wasser in Strukturelemente der allgemeinen Formeln XVI oder XVII

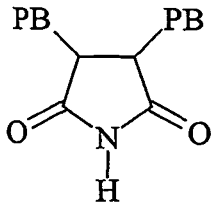 XVI 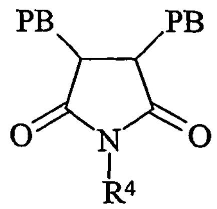 XVII

umgewandelt werden, wobei $R^4$ die oben genannte Bedeutung aufweist und die allgemeine Formel XVI den Spezialfall $R^4$ = H darstellt. Die allgemeinen Formel XVI und XVII bilden dabei Strukturelemente der allgemeinen Formel I ab, wobei die Reste $Z^1$ und $Z^2$ zusammen für NR stehen. Diese Strukturelemente leisten jedoch keinen Beitrag mehr zur Löslichkeit oder Emulgierbarkeit des erfindungsgemäßen Copolymeren in Wasser, wässrigen Lösemitteln oder polaren organischen Lösemitteln, wodurch die Empfindlichkeit einer aus einem solchen Copolymeren bestehenden oder ein solches Copolymeres enthaltenden Oberflächenbeschichtung gegenüber den genannten Lösemitteln drastisch verringert wird.

Die erfindungsgemäßen Copolymeren weisen, sofern sie beispielsweise über funktionelle Gruppen $O^-M^+$ oder $O\text{-}N^+R_4$ verfügen, eine gute Emulgierbarkeit oder Löslichkeit in Wasser oder wässrigen Lösemitteln auf. So lassen sich beispielsweise mindestens etwa 0,1 Gew.-% eines erfindungsgemäßen Copolymeren, vorzugsweise jedoch mehr als 0,1 Gew.-%, beispielsweise mindestens etwa 0,5 Gew.-% oder mindestens etwa 1 Gew.-% unter Zusatz von weniger als 5 Gew.-% niedermolekularer Emulgatoren, vorzugsweise unter Zusatz von weniger als 3 oder weniger als 1 Gew.-% niedermolekularer Emulgatoren und besonders bevorzugt ohne niedermolekularer Emulgatoren in Wasser oder wässrigen Lösemitteln derartige Emulgierung, dass eine solche Emulsionen über einen Zeitraum von mehr als 24 Stunden, vorzugsweise mehr als 48 Stunden und vorzugsweise mehr als eine Woche stabil bleibt.

Die erfindungsgemäßen Polymeren können daher beispielsweise ohne Zusatz eines niedermolekularen Emulgators in Wasser gelöst oder emulgiert werden. Mit binären Copolymeren aus Maleinsäureanhydrid und einem Fluorsubstituiertem Methacrylat (>40 mol-% MSA) lassen sich stabile wässrige Emulsionen mit einem Feststoffanteil von 50% herstellen.

Niedermolekulare Emulgatoren können als weiteres Hilfsmittel eingesetzt werden. Sie verbessern gegebenenfalls die Filmbildung (gleichmäßig dicke und homogene Filme). Geeignet sind vor.allem anionische, kationische und nichtionische Tenside. Kationische Tenside auf der Basis von quaternären Ammoniumverbindungen sollten dabei höchstens in molaren Mengen eingesetzt werden, die kleiner als der Gehalt der Carboxylatgruppen in den erfindungsgemäßen Polymeren sind. Insbesondere können Tenside mit einem Fluorsubstituenten oder einem Siloxansubstituenten als hydrophobem Bestandteil die Filmbildung verbessern.

Die Filmbildung und auch die Emulgierbarkeit kann erfindungsgemäß weiterhin verbessert werden, indem man eine hochsiedende organische Komponente zugibt. Beispiele sind perfluorierte Ether oder Cyclosiloxane, Ketone, Alkohole oder Ester oder Gemische aus zwei oder mehr davon. Bevorzugt werden diese Komponenten in Anteilen zugegeben, die kleiner als der Gewichtsanteil des Polymers in der Emulsion sind, bevorzugt weniger als 80 Gew.-%, bezogen auf den Gewichtsanteil des Polymeren in der Emulsion.

Im Rahmen einer besonders bevorzugten Ausführungsform der vorliegenden Erfindung weisen erfindungsgemäße Copolymere eine Wasserlöslichkeit von mindestens etwa 0,1 Gew.-%, vorzugsweise jedoch eine darüberliegende Wasserlöslichkeit von mindestens etwa 0,5 oder mindestens etwa 1 Gew.-% auf. Die Obergrenze der Wasserlöslichkeit liegt dabei bei etwa 75 Gew.-%, beispielsweise bei etwa 70, 65, 60 oder 55 Gew.-%. Geeignete Polymere weisen beispielsweise eine Wasserlöslichkeit von etwa 5 bis etwa 60 oder etwa 10 bis etwa 50 oder etwa 15 bis etwa 45 oder etwa 20 bis etwa 40 oder etwa 35 bis etwa 35 Gew.-% auf, wobei die Wasserlöslichkeit eines erfindungsgemäßen Polymeren grundsätzlich zwischen im Rahmen der Offenbarung des vorliegenden Textes beliebig gewählten Ober- und Untergrenzen liegen kann.

Neben einem oder mehreren Strukturelementen gemäß der allgemeinen Formel I und einem oder mehreren Strukturelementen gemäß der allgemeinen Formel II kann ein erfindungsgemäßes Copolymeres noch weitere Strukturelemente aufweisen, wie sie sich aus dem Einbau von Verbindungen mit mindestens einer olefinisch ungesättigten Doppelbindung im Rahmen der zum erfindungsgemäßen Copolymeren führenden Polymerisationsreaktion in das erfindungsgemäße Copolymere erhalten lassen. So kann ein erfindungsgemäßes Copolymeres beispielsweise Strukturelemente enthalten, wie sie sich aus dem Einbau von nicht fluorierten Styrolen, Acrylaten, Methacrylaten, α-Olefinen

und dergleichen erhalten lassen.

Im Rahmen einer bevorzugten Ausführungsform der vorliegenden Erfindung beträgt der Anteil derartiger Strukturelemente in einem erfindungsgemäßen Copolymeren bis zu etwa 50 % (bezogen auf die Gesamtzahl an Strukturelementen im Copolymeren), beispielsweise bis zu etwa 20 oder bis zu etwa 10 %.

Besonders zum Einbau weiterer Strukturelemente der oben genannten Art geeignete weitere Comonomere sind beispielsweise Methacrylsäure, Methylmethacrylat, Ethylmethacrylat, Propylmethacrylat, iso-Propylmethacrylat, n-Butylmethacrylat, iso-Butylmethacrylat, t-Butylmethacrylat, n-Pentylmethacrylat, iso-Pentylmethacrylat, n-Hexylmethacrylat, iso-Hexylmethacrylat, n-Heptylmethacrylat, iso-Heptylmethacrylat, n-Octylmethacrylat, iso-Octylmethacrylat, Laurylmethacrylat, Tridecylmethacrylat, Caprolacton-2-(methacryloyloxy)ethylester, 2-Hydroxyethylmethacrylat, Hydroxypropylmethacrylat, 4-Hydroxybutylmethacrylat, Ethylenglykolmethylethermethacrylat, 2-(Dimethylamino)ethylmethacrylat, 2-(Diethylamino)ethylmethacrylat, Glycidylmethacrylat, Benzylmethacrylat, Stearylmethacrylat, Acrylsäure, Methylacrylat, Ethylacrylat, Propylacrylat, iso-Propyacrylat, n-Butylacrylat, iso-Butylacrylat, t-Butyacrylat, n-Pentylacrylat, iso-Pentylacrylat, n-Hexylacrylat, iso-Hexylacrylat, n-Heptylacrylat, iso-Heptylacrylat, n-Octylacrylat, iso-Octylacrylat, Laurylacrylat, 2-Ethylhexylacrylat, 3,5,5-Trimethylhexylacrylat, iso-Decylacrylat, Octadecylacrylat, Isobornylacrylat, Vinylacrylat, 2-Hydroxyethylacrylat, Hydroxypropylacrylat, 4-Hydroxybutylacrylat, Ethylenglykolmethyletheracrylat, Di (ethylenglykol)ethyletheracrylat, 2-(Dimethylamino)ethylacrylat, 2-(Dipropylamin)propylmethacrylat, Di(ethylenglycol)-2-ethylhexyletheracrylat, 2-(Dimethylamino)ethylacrylat, Stearylacrylat, Acrylnitril, Acrylamid, Styrol, $\alpha$-Methylstyrol, trans-$\beta$-Methylstyrol, 2-Methyl-1-phenyl-1-propen, 3-Methylstyrol, 4-Methylstyrol, $\alpha$-2-Dimethylstyrol, 4-tert-Butylstyrol, 2,4-Dimethylstyrol, 2,5-Dimethylstyrol, 2,4,6-Trimethylstyrol, 4-Vinylbiphenyl, 4-Vinylanisol, 4-Ethoxystyrol, 2-Vinylpyridin, 4-Vinylpyridin, Vinylchlorid, Vinylidenchlorid, Vinylacetat, N-Vinylpyrrolidon oder Vinylfluorid oder Gemische aus zwei oder mehr davon.

Die erfindungsgemäßen Copolymeren können die Strukturelemente der allgemeinen Formel I und der allgemeinen Formel II im wesentlichen in beliebiger Abfolge, beispielsweise blockweise oder statistisch verteilt oder alternierend, im Polymerrückgrat enthalten. Es ist jedoch erfindungsgemäß bevorzugt, wenn die erfindungsgemäßen Copolymeren die Strukturelemente der allgemeinen Formel I und der allgemeinen Formel II in statistischer Verteilung oder alternierend im Polymerrückgrat enthalten. So können beispielsweise die Strukturelemente der allgemeinen Formel I im wesentlichen durch mindestens ein Strukturelement der allgemeinen Form II oder ein anderes Monomeres wie oben aufgelistet voneinander isoliert sein. Segmente in denen die Strukturelemente der allgemeinen Formel I alternierend mit einem anderen Strukturelement, beispielsweise einem Strukturelement der allgemeinen Formel II oder einem aus einem der oben aufgezählten Monomeren entstehenden Strukturelement, angeordnet sind, können in beliebiger Abfolge beispielsweise blockweise oder statistisch verteilt im Polymerrückgrat eines erfindungsgemäßen Polymeren enthalten sein.

Im Rahmen einer bevorzugten Ausführungsform der vorliegenden Erfindung weisen die erfindungsgemäßen Copolymeren die funktionellen Gruppen $O^-M^+$ oder $O^-N^+R_4$ in möglichst gleichmäßiger Verteilung über das gesamte Polymerrückgrat auf. Vorzugsweise weist eine Abfolge von zehn Strukturelementen im Polymerrückgrat mindestens ein Strukturelement auf, das eine der angegebenen funktionellen Gruppen enthält. Besonders geeignet sind erfindungsgemäße Copolymere, in denen eine Abfolge von höchstens acht oder höchstens fünf Strukturelementen mindestens eine derartige funktionelle Gruppe aufweist.

Die erfindungsgemäßen Copolymeren lassen sich grundsätzlich auf beliebige Weise herstellen, sofern ein entsprechendes Polymerisationsverfahren zu den gewünschten Polymeren führt. So ist es beispielsweise möglich, die erfindungsgemäßen Copolymeren durch einfache Umsetzung der an der Polymerreaktion beteiligten Monomeren in einem Reaktionsgefäß derart herzustellen, dass die Monomeren bereits zu Beginn der Polymerisation im Reaktionsgefäß in einer Zusammensetzung vorliegen, wie sie der für das Copolymere geplanten Zusammensetzung entspricht.

Diese Vorgehensweise führt insbesondere dann zu den erfindungsgemäßen Polymeren, wenn die Copolymerisationsparameter der beteiligten Monomeren so aufeinander abgestimmt sind, dass die entstehenden Polymeren eine im wesentlichen identische Zusammensetzungen aufweisen. Diese Vorgehensweise führt beispielsweise dann zum Erfolg, wenn eine der beteiligten Monomerkomponenten Styrol ist und die andere beteiligte Monomerkomponente Maleinsäureanhydrid ist.

In bestimmten Fällen sollte jedoch zur Herstellung der erfindungsgemäßen Polymeren eine andere Vorgehensweise gewählt werden. Dies ist insbesondere dann erforderlich, wenn die an der Polymerisation beteiligten Monomeren aufgrund ihrer Copolymerisationsparameter eher zur Bildung von Homopolymeren neigen und im Rahmen der Copolymerisation im wesentlichen keine Copolymeren entstehen. So lassen sich beispielsweise Copolymere aus Acrylat- oder Methacrylatestern und Maleinsäureanhydrid oder dessen Derivaten nicht in einheitlicher Form auf die oben beschriebene einfache Weise im Sinne einer "Eintopfreaktion", bei der in die an der Reaktion beteiligten Komponenten bereits zu Beginn der Reaktion vorliegen, herstellen. In diesem Fall muss zur Herstellung der erfindungsgemäßen Copolymeren ein anderer Reaktionsweg beschritten werden.

Es hat sich im Rahmen der vorliegenden Erfindung gezeigt, dass sich Copolymere aus Acrylat- oder Methacrylatestern und Maleinsäureanhydrid oder dessen Derivaten erhalten lassen, wenn während der Polymerisationsreaktion

das entsprechende Maleinsäureanhydrid oder dessen Derivate im Überschuss vorliegen und der Acrylat- oder Methacrylatester im Verlauf der Polymerisation derart dem Reaktionsgefäß zudosiert wird, dass während der gesamten Polymerisationsreaktion ein im wesentlichen gleichbleibendes Verhältnis der miteinander reagierenden Komponenten vorliegt.

Gegenstand der vorliegenden Erfindung ist daher auch ein Verfahren zur Herstellung eines erfindungsgemäßen Copolymeren, bei dem mindestens ein Monomeres der allgemeinen Formel III

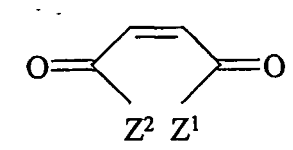 (III);

worin $Z^1$ und $Z^2$ die oben angegebene Bedeutung haben, und ein Monomeres der allgemeinen Formel V

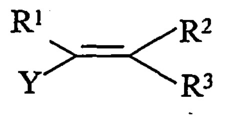 (V),

worin $R^1$, $R^2$, $R^3$ und Y die oben genannte Bedeutung aufweisen, copolymerisiert werden, wobei die Verbindung oder die Verbindungen der allgemeinen Formel IV während der Copolymerisation im Überschuss vorliegen und die Verbindung oder die Verbindungen der allgemeinen Formel V während der Copolymerisation dem Reaktionsgemisch zugeführt werden.

Vorzugsweise erfolgt das Zuführen der Verbindung oder der Verbindungen der allgemeinen Formel V während der Copolymerisation im Rahmen des erfindungsgemäßen Verfahrens derart, dass während der gesamten Polymerisationsreaktion einen im wesentlichen konstantes Verhältnis der miteinander polymerisierenden Monomeren vorliegt. Ein entsprechendes Verfahren und dessen Durchführung werden weiter unten im Rahmen des vorliegenden Textes beschrieben.

Wie bereits oben erläutert, können zur Herstellung der erfindungsgemäßen Polymeren Verbindungen der allgemeinen Formel III und V eingesetzt werden, die keine funktionelle Gruppe $O\text{-}M^+$ oder $O^-N^+R_4$ tragen. In vielen Fällen ist dies im Rahmen der vorliegenden Erfindung sogar bevorzugt. In diesen Fällen muss ein nach einem erfindungsgemäßen Verfahren hergestelltes Polymeres zur Lösung oder Emulsionen in Wasser mit entsprechenden funktionellen Gruppen $O^-M^+$ oder $O^-N^+R_4$ versehen werden. Wenn ein im Rahmen des erfindungsgemäßen Verfahren hergestelltes Polymeres beispielsweise Anhydridgruppen trägt, so lassen sich entsprechende funktionelle Gruppen $O^-M^+$ oder $O^-N^+HR_4$ dadurch in das Polymere einführen, dass die Anhydridgruppe durch Wasser geöffnet wird und die dabei entstehenden Säuregruppen durch eine basische Alkalimetallverbindung oder eine Ammoniumverbindung neutralisiert werden. Entsprechend werden Säuregruppen tragende Polymere vor oder während einer Lösung oder Emulsion in Wasser mit einer basischen Alkalimetallverbindung oder einer Ammoniumverbindung neutralisiert.

Zur Neutralisierung eignen sich grundsätzlich beliebige basische Alkalimetallverbindung, insbesondere jedoch die Hydroxide. Geeignet sind beispielsweise Lithiumhydroxid, Natriumhydroxid oder Kaliumhydroxid in Form ihrer wässrigen Lösungen. Besonders geeignet und im Rahmen der vorliegenden Erfindung bevorzugt sind jedoch Ammoniumverbindungen, insbesondere Ammoniak. Die basischen Alkalimetallverbindungen oder die Ammoniumverbindungen werden zur Organisation in Form ihrer wässrigen Lösungen eingesetzt, wobei die Konzentration der wässrigen Lösungen vorzugsweise etwa 0,1 bis etwa 50 Gew.-%, insbesondere etwa 0,5 bis etwa 10 Gew.-% beträgt.

Die erfindungsgemäßen Copolymeren eignen sich zur Herstellung von Zusammensetzungen, insbesondere zur Herstellung von wässrigen Zusammensetzungen.

Gegenstand der vorliegenden Erfindung ist daher auch eine Zusammensetzung, mindestens enthaltend Wasser und ein erfindungsgemäßes Copolymeres oder ein nach einem erfindungsgemäßen Verfahren hergestelltes Copolymeres.

Vorzugsweise enthält eine derartige Zusammensetzung Wasser.

Eine erfindungsgemäße Zusammensetzung enthält in einem solchen Fall beispielsweise etwa 10 bis etwa 99,99 Gew.-% oder etwa 20 bis etwa 99 Gew.-% Wasser, je nach Anwendungsgebiet der Zusammensetzung und Typ des in der Zusammensetzung enthaltenen Copolymeren. Geeignete Zusammensetzungen weisen beispielsweise einen Gehalt an erfindungsgemäßem Copolymerem von etwa 0,1 bis etwa 40 Gew.-%, beispielsweise etwa 0,5 bis etwa 30 Gew.-% oder etwa 1 bis etwa 20 Gew.-% auf. Wenn eine erfindungsgemäße Zusammensetzung zur Applikation als

Creme oder Paste vorgesehen ist, so kann der Gehalt an erfindungsgemäßen Polymeren die genannten Werte übersteigen und beispielsweise bis zu etwa 80 Gew.-% oder bis zu etwa 70 Gew.-%, beispielsweise bis zu etwa 60 Gew.-% betragen.

Neben Wasser und einem der oben genannten Copolymeren oder einem Gemisch aus zwei oder mehr davon kann eine erfindungsgemäße Zusammensetzung beispielsweise noch mindestes einen mit Wasser mischbaren Alkohol enthalten. Vorteilhaft an solchen wässrig-alkoholischen Lösungen bzw. Dispersionen wirkt sich die leichte und für den Anwender ungefährliche Handhabung beim Auftrag auf die Beschichtung von Oberfläche, beispielsweise durch ein einfachen Aufsprühen der Dispersion auf die zu behandelnde Oberfläche aus. Darüber hinaus ist eine besonders gleichmäßige Schichtbildung zu beobachten.

Ein bevorzugtes Lösungsmittelgemisch besteht dabei aus Wasser und mindestens einem Alkohol. Grundsätzlich lassen sich beliebige Gemische aus Wasser und einem oder mehreren verschiedenen Alkoholen einsetzen, sofern das Copolymere oder das Gemisch aus zwei oder mehr Copolymeren im Lösemittelgemisch in ausreichender Menge gelöst bzw. dispergiert werden kann.

Bevorzugte Alkohole weisen im Rahmen einer erfindungsgemäßen Zusammensetzung eine Wasserlöslichkeit von mindestens 1g/l, vorzugsweise jedoch mindestens etwa 10 oder mindestens etwa 30 g/l auf. Geeignete Alkohole weisen 1 bis etwa 6 OH-Gruppen, insbesondere etwa 1, 2 oder 3 freie OH-Gruppen auf, die primär, sekundär oder tertiär sein können, vorzugsweise jedoch primär sind. Besonders geeignet sind lineare oder verzweigte, gesättigte oder ungesättigte oder cyclische Alkohole mit 1 bis etwa 10 C-Atomen, insbesondere lineare oder verzweigte Mono-, Di- oder Triole mit 1 bis etwa 6 C-Atomen. Besonders geeignet sind im Rahmen einer bevorzugten Ausführungsform der vorliegenden Erfindung Ethanol, n-Propanol, Isopropanol, n-Butanol, iso-Butanol, Ethylenglykol, Propylenglykol, Butylenglykol, Diethylenglykol, Dipropylenglykol, Dibutylenglykol, Glyzerin oder Trimethylolpropan oder Gemische aus zwei oder mehr der oben genannten Alkohole. Ebenfalls geeignet sind Etheralkohole wie sie sich durch Veretherung eines der oben genannten Diole oder Triole mit einem der oben genannten Monoalkohole erhalten lassen. Besonders geeignet sind dabei die Veretherungsprodukte von Ethylengklykol mit Ethanol, Propanol oder Butanol, insbesondere Ethylenglykolmonobutylether (Butylglykol).

Es hat sich darüber hinaus gezeigt, dass sich durch den Einsatz eines Gemischs aus mindestens einem Monoalkohol und mindestens einem Etheralkohol besonders gute Ergebnisse erzielen lassen. Geeignet sind hierbei insbesondere Gemische aus Ethanol, n-Propanol oder Isopropanol oder einem Gemisch aus zwei oder mehr davon und Ethylenglykolmonobutylether, Propylenglykolmonopropylether oder Butylenglykolmonoethylether oder einem Gemisch aus zwei oder mehr davon, insbesondere Gemische aus Ethanol und Butylglykol.

Wenn im Rahmen der vorliegenden Erfindung ein Gemisch aus Monoalkoholen und Polyolen oder Etheralkoholen eingesetzt wird, so beträgt das Gewichtsverhältnis von Monoalkoholen zu Polyolen oder Etheralkoholen etwa 1: 100 bis etwa 100:1. Es hat sich häufig bewährt, wenn in einem solchen Gemisch die Monoalkohole im Überschuss vorliegen. Vorzugsweise beträgt das Gewichtsverhältnis von Monoalkoholen zu Polyolen oder Etheralkoholen daher etwa 15:1 :100 bis etwa 1,1:1, insbesondere etwa 7:1 bis etwa 1,2:1 oder etwa 4:1 bis etwa 2:1. Besonders bevorzugt ist ein Gemisch aus Ethylenglykol und Butylglykol in einem Verhältnis von etwa 1,2:1 bis etwa 5:1, beispielsweise etwa 1,2:1 bis etwa 2:1 oder etwa 2:1 bis etwa 4:1.

Insgesamt kann das Lösemittelgemisch aus Wasser und wassermischbarem Alkohol oder Gemisch aus zwei oder mehr wassermischbaren Alkoholen Wasser in einer Menge von etwa 5 bis weniger als 100 Gew.-%, beispielsweise in einer Menge von etwa 10 bis etwa 99,9 oder etwa 20 bis etwa 95 oder etwa 30 bis etwa 90 oder etwa 35 bis etwa 85 oder etwa 40 bis etwa 80 oder etwa 45 bis etwa 75 Gew.-% enthalten.

Eine erfindungsgemäße Zusammensetzung enthält beispielsweise etwa 20 bis etwa 99,99 Gew.-% des oben genannten Lösemittelgemischs, je nach Anwendungsgebiet der Zusammensetzung und Typ des in der Zusammensetzung enthaltenen Copolymeren. Geeignete Zusammensetzungen weisen beispielsweise einen Gehalt an Copolymeren von etwa 0,01 bis etwa 40 Gew.-%, beispielsweise etwa 0,05 bis etwa 30 Gew.-% oder etwa 0,1 bis etwa 20 Gew.-% oder etwa 0,5 bis etwa 10 Gew.-% auf. Wenn eine erfindungsgemäße Zusammensetzung zur Applikation als Creme oder Paste vorgesehen ist, so kann der Gehalt an erfindungsgemäßen Polymeren die genannten Werte übersteigen und beispielsweise bis zu etwa 80 Gew.-% oder bis zu etwa 70 Gew.-%, beispielsweise bis zu etwa 60 Gew.-% betragen.

Eine erfindungsgemäße Zusammensetzung kann neben einem erfindungsgemäßen Copolymeren oder einem Gemisch aus zwei oder mehr davon sowie gegebenenfalls Wasser und gegebenenfalls einem oder mehreren wasssermischbaren Alkoholen noch weitere Zusatzstoffe enthalten. Geeignete weitere Zusatzstoffe sind beispielsweise Farbstoffe, Pigmente, Füllstoffe, Hilfslösemittel, Stabilisatoren, UV-Stabilisatoren, Antioxidantien, Netzmittel und dergleichen.

Geeignet sind hierbei beispielsweise Zusatzstoffe, die eine Verbesserung der Härte oder Kratzfestigkeit ($Al_2O_3$, $SiO_2$) bewirken, die eine Mattierung der Oberfläche ($SiO_2$, $CaCO_3$) bewirken oder die eine gezielte Einstellung der Rauhigkeit einer mit der erfindungsgemäßen Zusammensetzung behandelten Oberfläche ($SiO_2$) bewirken. Die gezielte Einstellung der Rauhigkeit der Oberfläche hat dabei beispielsweise das Ziel, das Benetzungsverhalten der beschichteten Oberfläche besonders wasserabweisend und beispielsweise schmutzabweisend zu gestalten. Für eine Verbesserung der Kratzfestigkeit einer mit einer erfindungsgemäßen Zusammensetzung behandelten Oberfläche sind beispielsweise

Nanoteilchen mit einem Durchmesser von weniger als etwa 125 nm geeignet.

Weiterhin möglich ist beispielsweise der Einsatz weiterer Zusatzstoffe, die beispielsweise der Einfärbung der Formulierung dienen. Hierzu geeignet sind beispielsweise wasserlösliche, ionische Farbstoffe, organische und anorganische Pigmente, Sepia, Knochenkohle, $SiO_2$, $TiO_2$ (Rutil, Anatas, Brookit), Bleiweiß $2PbCO_3 \cdot Pb(OH)_2$, Basisches Zinkcarbonat $2ZnCO_3 \cdot 3Zn(OH)_3$, Zinkoxid ZnO, Zirkoniumdioxid $ZrO_2$, Zinksulfid ZnS, Lithopone $ZnS/BaSO_4$, Ruß, Eisenoxidschwarz ($Fe_3O_4$), Rotes Eisenoxid ($Fe_2O_3$), Apatit $3Ca_3(PO_4)_2 \cdot CaF_2$, Calciumsulfat $CaSO_4 \cdot 2H_2O$ (Gips), Bariumsulfat $BaSO_4$ (Schwerspat), Bariumcarbonat $BaCO_3$, Calciumsilikate oder andere Silikate (z.B. Kaolin, Talk, Glimmer) oder Gemische aus zwei oder mehr davon.

Der Anteil solcher Zusatzstoffe an einer erfindungsgemäßen Zusammensetzung beträgt im Rahmen der vorliegenden Erfindung bis zu etwa 50 Gew.-%, vorzugsweise 0 bis etwa 30 Gew.-% und weiter bevorzugt von etwa 0,5 bis etwa 20 Gew.-%.

Ebenfalls als Zusatzstoffe zur Verbesserung der Benetzbarkeit von Oberflächen, insbesondere von Metall- oder Kunststoffoberflächen geeignet sind übliche Netzmittel, beispielsweise Netzmittel aus Siliconbasis wie TEGO Wet 280 (Tego Chemie Service, Essen, Deutschland). Derartige Netzmittel können in einer erfindungsgemäßen Zusammensetzung in einer Menge von 0 bis 5 Gew.-%, beispielsweise in einer menge von etwa 0,001 Gew.-% bis etwa 3 Gew.-% enthalten sein.

Eine erfindungsgemäße Zusammensetzung kann außer dem oben genannten Lösemittelgemisch aus Wasser, einem oder mehreren wassermischbaren Alkoholen und einem der oben genannten Copolymeren oder einem Gemisch aus zwei oder mehr solcher Copolymeren und gegebenenfalls einem oder mehreren der oben genannten Zusatzstoffe noch ein fluorhaltiges Polymeres oder ein Gemisch aus zwei oder mehr fluorhaltigen Polymeren enthalten, die in Wasser nicht löslich oder selbstemulgierbar sind. Der Anteil solcher fluorhaltiger Polymerer beträgt beispielsweise bis zu etwa 45 Gew.-% (0 - 45 Gew.-%), insbesondere jedoch bis zu etwa 30 oder etwa 20 oder etwa 10 oder etwa 5 Gew.-%.

Geeignete derartige fluorhaltige Polymere sind beispielsweise Polyacrylat- oder Polymethacrylatester fluorierter Alkohole, Polyacrylamide fluorierter Amine, fluorierte Polystyrole, Styrol-(N-fluorr)-Maleimid Copolymere, Homo und Copolymere der folgenden Verbindungen: $CF_2{=}CF_2$, $CF_3{-}CF{=}CF_2$,

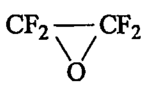 , 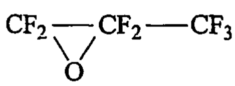 ,

$CF_2{=}CFCl$, sowie Polysiloxane mit Perfluoralkyl- und Perfluorethersubstituenten.

Lösungen oder Emulsionen der beschriebenen Copolymeren, gegebenenfalls zusammen mit einem oder mehreren der oben genannten Zusatzstoffe und weiteren fluorhaltigen Polymeren, lassen sich zur Beschichtung von Oberflächen einsetzen. Es hat sich dabei gezeigt, dass eine spezielle Klasse der oben beschriebenen fluorhaltigen Copolymeren besonders herausragende Eigenschaften bei der Beschichtung textiler Gewebe oder bei der Beschichtung von Vliesen zeigen.

Eine erfindungsgemäße Zusammensetzung weist beispielsweise die folgenden Inhaltsstoffe auf:

| | |
|---|---|
| Etwa 20 bis etwa 99 Gew.-% | Wasser |
| etwa 0,1 bis etwa 80 Gew.-% | Copolymeres |
| etwa 0 bis etwa 5 Gew.-% | Farbstoffe und Pigmente |
| etwa 0 bis etwa 10 Gew.-% | Tenside |
| etwa 0 bis etwa 20 Gew.-% | eines hochsiedenden, hydrophoben Lösemittels. |

Die erfindungsgemäßen Copolymeren eignen sich darüber hinaus aufgrund ihrer guten Löslichkeit oder Emulgierbarkeit in Wasser als Emulgatoren für fluorhaltige Polymere, die ihrerseits selbst nicht in Wasser löslich oder emulgierbar sind.

Lösungen oder Emulsionen der erfindungsgemäßen Copolymeren, gegebenenfalls zusammen mit einem oder mehreren der oben genannten Zusatzstoffe und weiteren fluorhaltigen Polymeren, lassen sich zur Beschichtung von Oberflächen einsetzen.

Grundsätzlich lassen sich beliebige Materialien mit den erfindungsgemäßen Fluorpolymeren beschichten. Geeignet sind beispielsweise Papier, Pappe, Glas, Metall, Stein, Keramik, Kunststoffe Naturfasern, Kunstfasern, Textilien, Teppiche, Wandbeläge und dergleichen.

Die erfindungsgemäßen Copolymeren eignen sich darüber hinaus als Bestandteil von Oberflächenbeschichtungsmitteln, wie sie üblicherweise in wässriger Form, beispielsweise als Lösung oder Dispersion, angeboten werden. Besonders geeignet sind erfindungsgemäßen Copolymeren als Bestandteil von Dispersionsfarben, die einen wasserunempfindlichen und schmutzabweisenden Anstrich ergeben.

Die Beschichtung von Oberflächen erfolgt dabei durch Aufsprühen, Aufpinseln, Aufrakeln oder sonstiges Auftragen einer erfindungsgemäßen Zusammensetzung auf die entsprechende Oberfläche und anschließendes Trocknen. Gegenstand der vorliegenden Erfindung ist daher auch ein Verfahren zur Oberflächenbeschichtung, bei dem ein erfindungsgemäßes Copolymeres auf eine Oberfläche aufgetragen und anschließend getrocknet wird.

Vorzugsweise wird das Copolymere in Form einer erfindungsgemäßen Zusammensetzung auf die Oberfläche aufgetragen.

Wie bereits oben im Rahmen des vorliegenden Textes erläutert, lassen sich die erfindungsgemäßen Copolymeren, sofern sie bestimmte Strukturvoraussetzungen erfüllen, beispielsweise durch thermische Behandlung derart beeinflussen, dass ihre Wasserlöslichkeit oder Wasseremulgierbarkeit nahezu irreversibel verringert wird. Dies geschieht vorzugsweise unter Ringschluß zum Succinimid oder Anhydrid. Im Rahmen einer bevorzugten Ausführungsform der vorliegenden Erfindung wird die Trocknung der Oberflächenbeschichtung im Rahmen des erfindungsgemäßen Verfahrens daher unter Bedingungen durchgeführt, bei denen sich die Wasserlöslichkeit oder Wasseremulgierbarkeit mindestens eines Copolymeren in der Oberflächenbeschichtung gegenüber seiner ursprünglichen Wasserlöslichkeit oder Wasseremulgierbarkeit verringert.

Derart beschichtete Oberflächen zeigen eine ausgezeichnete schmutzabweisende Wirkung. Gegenstand der vorliegenden Erfindung ist daher auch eine Oberfläche, die mit einem erfindungsgemäßen Copolymeren beschichtet ist.

Die erfindungsgemäßen Zusammensetzungen eignen sich beispielsweise für die Beschichtung von Vliesen, Textilien oder Leder.

Bevorzugte Textilien bestehen dabei aus einem oder mehreren Kunstfasertypen oder aus einem oder mehreren Naturfasertypen oder aus einem oder mehreren Kunstfasertyp und einem oder mehreren Naturfasertypen.

Als ein Naturfasertyp werden Fasern verstanden, die dieselbe Herkunft haben, beispielsweise im Falle pflanzlicher Herkunft aus Baumwolle, oder Hanf oder Leinen oder einer anderen Pflanzenart gewonnen wurden. Im Falle tierischer Herkunft einer Naturfaser werden als zu einem Fasertyp zugehörig Fasern verstanden, die beispielsweise vom Schaf oder Lama oder Kaninchen oder einer anderen Tierart stammen. Dabei zählt nicht die individuelle oder betriebliche oder lokale Herkunft sondern lediglich die biologische Gattung des Herkunftsorganismus.

Als ein Kunstfasertyp werden Fasern verstanden, die einen bestimmten chemischen Grundaufbau teilen, beispielsweise Polyester oder Polyurethan.

Wie bereits oben im Rahmen des vorliegenden Textes erläutert, lassen sich die erfindungsgemäßen Copolymeren, sofern sie bestimmte Strukturvoraussetzungen erfüllen, beispielsweise durch thermische Behandlung derart beeinflussen, dass ihre Wasserlöslichkeit oder Wasseremulgierbarkeit nahezu irreversibel verringert wird. Dies geschieht vorzugsweise unter Ringschluss zum Succinimid oder Anhydrid. Im Rahmen einer bevorzugten Ausführungsform der vorliegenden Erfindung wird die Trocknung der Oberflächenbeschichtung im Rahmen des erfindungsgemäßen Verfahrens daher unter Bedingungen durchgeführt, bei denen sich die Wasserlöslichkeit oder Wasseremulgierbarkeit mindestens eines Copolymeren in der Oberflächenbeschichtung gegenüber seiner ursprünglichen Wasserlöslichkeit oder Wasseremulgierbarkeit verringert.

Die wasserabweisenden Eigenschaften können beispielsweise durch Tempern noch weiter verbessert werden. Tempern ist ein Vorgang, bei dem das Material auf einer Temperatur gehalten wird in der Nähe, aber unterhalb der Schmelztemperatur der jeweiligen im Beschichtungsmittel enthaltenen Copolymere, um eingefrorene Spannungen abzubauen.

Bei der Behandlung von Textilien mit einer erfindungsgemäßen Zusammensetzung hat sich beispielsweise eine Wärmebehandlung von 130 °C bis 160 °C für 30 sec als vorteilhaft herausgestellt, sofern die Textilien eine solche Temperatur für den genannten Zeitraum unbeschadet überstehen. Durch das Tempern konnte beispielsweise für eine aus einem erfindungsgemäßen Copolymeren hergestellte Beschichtung ein Kontaktwinkel für Wasser auf Baumwolle von einem Wert bis zu 140 ° erzielt werden.

Derart beschichtete Oberflächen zeigen eine ausgezeichnete schmutzabweisende Wirkung. Gegenstand der vorliegenden Erfindung ist daher auch eine Oberfläche, die mit einem erfindungsgemäßen Copolymeren beschichtet ist.

Gegenstand der vorliegenden Erfindung sind auch Vliese, Textilien und Leder, die mit mindestens einem erfindungsgemäßen Copolymeren beschichtet sind. Gegenstand der vorliegenden Erfindung sind beispielsweise Naturfasern eines Fasertyps, Kunstfasern eines Fasertyps oder Gemische unterschiedlicher Naturfasertypen oder Gemische unterschiedlicher Kunstfasertypen oder Gemische aus mindestens einem Naturfasertyp und mindestens einem Kunstfasertyp, die mit mindestens einem erfindungsgemäßen Copolymeren beschichtet sind. Gegenstand der vorliegenden Erfindung sind auch alle Arten von Leder, die mit mindestens einem erfindungsgemäßen Copolymeren beschichtet sind.

Die Erfindung wird nachfolgend durch Beispiele näher erläutert.

**Beispiele:**

Monomersynthese

**Materialien**

1H,1H,2H,2H-Perfluordecylmethacrylat (Apollo) (gesäult über $Al_2O_3$ (neutral)); 1H,1H,2H,2H-Perfluordecylacrylat (Apollo) (gesäult über $Al_2O_3$ (neutral)); Perfluoroctyliodid (destilliert, Hoechst); Triethylamin (destilliert von $CaH_2$, Fluka); 2,2'-Azobisisobutyronitril (AIBN) (umkrist. aus Methanol, Aldrich); 4-Iodanilin (umkrist. aus Ethanol, Aldrich); Natriumhydrid (60% Suspension in Mineralöl, Fluka); 1H,1H,2H,2H-Perfluordecyl-1-iodid (Aldrich); Perfluor-2,5-dimethyl-3,6-dioxanonansäuremethylester, Perfluor-2,5,8-trimethyl-3,6,9-trioxadodecansäuremethylester (Lancaster); 1H,1H,2H,2H-Perfluordecan-1-ol (Fluorochem); 3-Buten-1-ol (Aldrich); p-Vinylbenzylchlorid (Aldrich), Tri-n-Butylzinnhydrid (Merck); Lithiumaluminiumhydrid (Merck); Bromessigsäuremethylester (Aldrich); 4-Vinylbenzylchlorid (Aldrich); (Thionylchlorid (Aldrich); Natriumazid (Fluka); Methyltrioctylammoniumchlorid (Fluka); Tetrabutylammoniumhydrogensulfat (Merck); Kupferbronze (Aldrich); Essigsäureanydrid (Aldrich); Natriumsulfat (wasserfrei) (Fluka); Natriumhydrogencarbonat (Merck); Toluol (dest. von Natrium/Benzophenon, Fluka); Xylol (dest. von Natrium/Benzophenon, Merck); Ether (Diethylether) (dest. von Natrium/Benzophenon, Fluka); THF (dest. von Kalium/Benzophenon, Fluka); Dichlormethan (dest. von $P_4O_{10}$, Fluka); Chloroform (dest. von $P_4O_{10}$, Fluka); DMF (fraktioniert dest. von $CaH_2$); 1,1,2-Trichlortrifluorethan (Freon 113) (Merck); Petrolether (Fluka); Dimethylsulfoxid (DMSO) (Fluka).

So weit nichts anderes angegeben wird, wurden alle Reagenzien ohne weitere Reinigung eingesetzt.

Synthese von Hexafluorpropenoxidalkoholen ($HFPO_xOH$, x = 3,4,5)

In einem 500 mL Dreihalskolben, versehen mit Rückflusskühler, Trockenrohr, Tropftrichter und KPG-Rührer, werden 8 g Lithiumaluminiumhydrid (210,5 mmol) in 300 mL Tetrahydrofuran suspendiert. Anschließend werden vorsichtig (Schaumbildung) 70 g Perfluor-2,5-dimethyl-3,6-dioxanonansäuremethylester (136,2 mmol) in 100 mL Tetrahydrofuran zugetropft. Der Reaktionsansatz wird dann über Nacht unter Rückfluss gekocht. Nachdem das Reaktionsgemisch auf Raumtemperatur abgekühlt ist, vernichtet man überschüssiges Lithiumaluminiumhydrid durch tropfenweise Zugabe von verdünnter Salzsäure (Schaumbildung). Das Produkt wird dreimal aus der wässrigen Phase mit einem Gemisch aus Dichlormethan und Freon-113 extrahiert und die organische Phase mit verdünnter Salzsäure gewaschen, um letzte Spuren von Lithiumaluminiumhydrid zu vernichten. Die wässrigen Phasen werden vereinigt und nochmals mit Dichlormethan/Freon-113 extrahiert. Man trocknet die vereinigten organischen Phasen über Natriumsulfat und rotiert das Lösungsmittel ab. Zur Reinigung destilliert man im Ölpumpenvakuum.

Folgende Verbindungen wurden so synthetisiert:

1H,1H-Perfluor-2,5-dimethyl-3,6-dioxanonan-1-ol ($(HFPO)_3OH$), 1H,1H-Perfluor-2,5,8-trimethyl-3,6,9-trioxadodecan-1-ol ($(HFPO)_4OH$), 1H,1H-Perfluor-2,5,8,11-tetramethyl-3,6,9,12-tetraoxapentadecan-1-ol ($(HFPO)_5OH$).

Synthese von 1H,1H,2H,2H,3H,3H,4H,4H-Perfluordodecan-1-ol

In einen 250 mL Dreihalskolben, versehen mit Liebigkühler, Gummiseptum und einem Glasstopfen, gibt man 38.2 g (70 mmol) Perfluoroctyliodid und 8.6 mL (100 mmol) 3-Buten-1-ol. Die Mischung wird bei 80°C in einer Argonatmosphäre homogenisiert und über 45 min hinweg 175 mg AIBN in kleinen Portionen zugesetzt. Nach Ende der Zugabe, lässt man weitere 5 h bei 80°C rühren. Das Produkt sublimiert in den Liebigkühler und kann durch Klopfen an die Kühlerwand wieder in den Reaktionskolben zurückgeführt werden. Um eine Zersetzung des Iodids bei einer Aufreinigung zu vermeiden, wurde das rohe 1H,1H,2H,2H,3H,3H,4H,4H-3-Iod-perfluordodecan-1-ol durch Zugabe von Tri-n-Butyl-Zinn direkt zum 1H,1H,2H,2H,3H;3H,4H,4H-Perfluordodecan-1-ol reduziert. Unter Argon gibt man zur Reaktionsmischung 70 mL Toluol und 1.1 g AIBN. Über eine Spritze werden 37 mL (140 mmol) Tri-n-Butyl-Zinn zugegeben. Der mit einem Rückflusskühler versehene Kolben wird 18 h bei 80°C gerührt. Nach Abkühlen auf 70°C gießt man in 600 mL destilliertes Methanol um reaktive Reste zu vernichten. Nach Entfernen des Methanols kristallisiert man aus Toluol um.

Chlorierung von fluorierten Alkoholen

In einem 250 mL Dreihalskolben, versehen mit Rückflusskühler, Gummiseptum und einem Glasstopfen, werden 40 mmol Fluoralkohol in 200 mL Toluol gelöst und auf 80°C erhitzt. Anschließend werden zuerst 40 mmol Triethylamin und danach langsam 120 mmol Thionylchlorid über eine Spritze zugetropft. Der Reaktionsansatz wird über Nacht bei 80°C gerührt. Nachdem das Reaktionsgemisch auf Raumtemperatur abgekühlt ist, wird das entstandene Hydrochlorid abgesaugt und die Toluollösung bis auf 100 mL eingeengt. Die organische Phase wird zweimal mit 10% wässriger

Natriumhydrogencarbonatlösung und dreimal mit Wasser gewaschen. Die organischen Phasen werden über Natriumsulfat getrocknet, abfiltriert, das Lösungsmittel entfernt und das Produkt zweimal im Vakuum über eine Vigreauxkolonne destilliert. Folgende Verbindungen wurden so synthetisiert:

1H,1H,2H,2H,3H,3H,4H,4H-Perfluordodecylchlorid, 1H,1H,2H,2H,4H,4H-Perfluo-5,8-dimethyl-3,6,9-trioxadodecylchlorid ($(HFPO)_3OCH_2CH_2Cl$); 1H,1H,2H,2H,4H,4H-Perfluor-5,8,11-trimethyl-3,6,9,12-tetraoxapentadecylchlorid ($(HFPO)_4OCH_2CH_2Cl$).

Synthese von Fluoralkylaziden (Phasentransferkatalysiert)

In einen 100 mL Kolben mit Liebigkühler, gibt man eine 25% wässrige Lösung von Natriumazid (70 mmol) mit dem Phasentransferkatalysatoren (5% Methyltrisoctylammoniumchlorid pro mol Halogenverbindung) und das Fluorhalogenid (35 mmol). Es wird bei 90-100°C gerührt und der Fortgang der Reaktion mittels GC überwacht. Die Reaktion wird abgebrochen, wenn alles Halogenid verbraucht ist und die wässrige Phase abdekantiert. Eine Aufreinigung des Produkts ist nicht nötig. Folgende Verbindungen wurden so synthetisiert:

1H,1H,2H,2H-Perfluordecyl-1-azid, 1H,1H,2H,2H,3H,3H,4H,4H-Perfluordodecyl-1-azid, 1H,1H,2H,2H,4H,4H-Perfluo-5,8-dimethyl-3,6,9-trioxadodecyl-1-azid ($(HFPO)_3OCH_2CH_2N_3$), 1H,1H,2H,2H,4H,4H-Perfluor-5,8,11-trimethyl-3,6,9,12-tetraoxapentadecyl-1-azid ($(HFPO)_4OCH_2CH_2N_3$).

Synthese von Fluoralkylaminen

In einen 500 mL Kolben, mit Rückflusskühler und Tropftrichter, tropft man 100 mL einer etherischen Lösung von 10 mmol eines fluorierten Azids in eine Suspension von 15 mmol Lithiumaluminiumhydrid in trockenem Ether. Die Zutropfgeschwindigkeit wird so gewählt, dass der Ether unter Rückfluss siedet und lässt dann für weitere 5 Stunden unter Rückfluss kochen. Durch Zugabe von feuchtem Ether, gefolgt von Wasser, wird überschüssiges Lithiumaluminiumhydrid vernichtet. Die unlöslichen Salze werden abgetrennt, die etherische Phase abgetrennt und die wässrige Phase mehrmals mit Ether ausgeschüttelt. Nach trocknem über Natriumsulfat und entfernen des Ethers, wird das Produkt im Vakuum destilliert. Folgende Verbindungen wurden so synthetisiert:

1H,1H,2H,2H-Perfluordecyl-1-amin, 1H,1H,2H,2H,3H,3H,4H,4H-Perfluordodecyl-1-amin, 1H,1H,2H,2H,4H,4H-Perfluo-5,8-dimethyl-3,6,9-trioxadodecyl-1-amin ($(HFPO)_3OCH_2CH_2NH_2$), 1H,1H,2H,2H,4H,4H-Perfluor-5,8,11-trimethyl-3,6,9,12-tetraoxapentadecyl-1-amin ($(HFPO)_4OCH_2CH_2NH_2$).

Synthese von 4-Perfluoroctylanilin

In einem 100 mL Rundkolben mit Rückflusskühler, erhitzt man eine Suspension von 5.7 g (26 mmol) 4-lodanilin, 15.7 g (28.9 mmol) Perfluoroctyliodid und 5.5 g (86.7 mmol) Kupferbronze in 50 mL DMSO 20 h auf 120°C. Die heiße Suspension wird filtriert um überschüssige Kupferbronze und Cu(I)-iodid zu entfernen. Man gibt 100 mL Ether und 100 mL dest. Wasser zu und lässt für 10 Minuten rühren. Die organische Phase wird abgetrennt und 3-mal mit Wasser gewaschen. Nach Entfernen des Ethers wird das Produkt destilliert.

Synthese von p-Perfluoralkyl-ethylenoxymethyl-styrol

Der Perfluoralkohol (80 mmol) wird in 160 mL Dichlormethan gelöst. Zu dieser Lösung gibt man 160 mL 50 Gew.-% wässrige NaOH-Lösung sowie 8 mmol TBAH. Unter heftigem Rühren, gibt man 88 mmol p-Vinylbenzylchlorid zu, worauf eine Farbveränderung nach gelb eintritt. Nach 18 h bei 40°C trennt man die orange Phase ab, wäscht einmal mit verdünnter HCl sowie dreimal mit Wasser und trocknet über Natriumsulfat. Nach Filtration und entfernen des Lösungsmittels erhält man braune, ölige Flüssigkeiten. Reinigung erfolgt durch Destillation im Hochvakuum (C4-Perfluorcarbonsegment; farblose, ölige Flüssigkeit), Säulenchromatographie über Kieselgel (C6-Perfluorsegment; farblose, ölige Flüssigkeit) oder durch wiederholtes umkristallisieren aus Methanol (C8- und C10-Perfluorsegment; farbloser Feststoff). Folgende Verbindungen wurden so synthetisiert:

$F(CF_2)_4CH_2CH_2\text{-}OCH_2\text{-}C_6H_4\text{-}CH{=}CH_2$, $F(CF_2)_6CH_2CH_2\text{-}OCH_2\text{-}C_6H_4\text{-}CH{=}CH_2$, $F(CF_2)_8CH_2CH_2\text{-}OCH_2\text{-}C_6H_4\text{-}CH{=}CH_2$, $F(CF_2)_{10}(CH_2)_2\text{-}OCH_2\text{-}C_6H_4\text{-}CH{=}CH_2$

Synthese von p-Oligohexafluorpropenoxid-oxymethyl-styrol (Styrol-$HFPO_n$)

Der Perfluoralkohol (15 mmol) wird in einer Mischung aus 30 mL Dichlormethan und 30 mL 1,1,2-Trichlortrifluorethan gelöst. Zu dieser Lösung gibt man 30 mL 50 Gew.-% wässrige NaOH-Lösung sowie 1.5 mmol TBAH. Unter heftigem Rühren, gibt man 16.65mmol p-Vinylbenzylchlorid zu, worauf eine Farbveränderung nach gelb eintritt. Nach 48 h bei 40°C trennt man die orange Phase ab, wäscht einmal mit verd. HCl sowie dreimal mit Wasser und trocknet über Natriumsulfat. Nach Filtration und entfernen des Lösungsmittels erhält man gelbe, ölige Flüssigkeiten. Folgende Verbindungen wurden so synthetisiert:

p-1H, 1H-Perfluor-2,5-dimethyl-3,6-dioxanonan-oxymethyl-styrol, p-1H, 1H-Perfluor-2,5,8-trimethyl-3,6,9-trioxadodecan-oxymethyl-styrol, p-1H, 1H-Perfluor-2,5,8,11-tetramethyl-3,6,9,12-tetraoxapentadecan-oxymethyl-styrol.

Synthese von 1H,1H,2H,2H-Perfluoralkylmethacrylat

In einen 250 mL Dreihalskolben mit Rückflusskühler, Stickstoffeinlass und Gummiseptum gibt man 43 mmol 1H,1H,2H,2H-Perfluoralkyl-1-ol sowie 5 mmol 4-Dimethylaminopyridin und spült mit Stickstoff. Man gibt 100 mL frisch destilliertes Dichlormethan und 20 mL 1,1,2-Trichlortrifluorethan in den Kolben und tropft dann langsam zuerst 40 mmol Methacrylsäureanhydrid, gefolgt von 45 mmol Triethylamin, durch ein Septum zu. Die Lösung wird für 18h bei 30°C gerührt. Anschließend mit Wasser, verdünnter Salzsäure, 4% wässriger Natriumcarbonatlösung und wieder mit Wasser gewaschen. Nach trocknen mit Natriumsulfat und abfiltrieren wird das Lösungsmittel entfernt. Man erhält eine farblose Flüssigkeit. Das Monomer über eine kurze Säule aus neutralem Aluminiumoxid (ICN) und Molekularsieb (4 Å) gereinigt und getrocknet. Als Laufmittel dient THF. Die Monomerlösung in THF wird bei -20°C über Molekularsieb aufbewahrt. Folgende Verbindungen wurden so synthetisiert:

1H,1H,2H,2H-Perfluorhexylmethacrylat.

Synthese von Hexafluorpropenoxidmethacrylat ($HFPO_x$MA, x = 3,4,5)

In einen 250 mL Dreihalskolben mit Rückflusskühler, Stickstoffeinlass und Gummiseptum löst man 31 mmol $HFPO_x$OH (x = 3,4,5) und 3.6 mmol Dimethylaminopyridin in einer Mischung aus 75 mL Dichlormethan und 25 mL 1,1,2-Trichlortrifluorethan. Man tropft langsam 30 mmol Methacrylsäureanhydrid, gefolgt von 30 mmol Triethylamin, durch ein Septum zu. Die Lösung wird für 18h bei 30°C gerührt. Anschließend mit Wasser, verdünnter Salzsäure, 4% wässriger Natriumcarbonatlösung und wieder mit Wasser gewaschen. Die vereinigten wässrigen Phasen werden mit Dichlormethan/1,1,2-Trichlortrifluorethan extrahiert, die org. Phasen mit Natriumsulfat getrocknet und das Lösungsmittel entfernt. Man erhält eine farblose Flüssigkeit. Das Monomer über eine kurze Säule aus neutralem Aluminiumoxid (ICN) und Molekularsieb (4 Å) gereinigt und getrocknet.

Folgende Verbindungen wurden so synthetisiert: 1H,1H-Perfluor-2,5-dimethyl-3,6-dioxadodecylmethacrylat, 1H,1H-Perfluor-2,5,8-trimethyl-3,6,9-trioxapentadecylmethacrylat, 1H,1H-Perfluor-2,5,8,11-tetramethyl-3,6,9,12-tetraoxapentadecylmethacrylat.

Copolymerisation von fluorierten Styrolderivaten mit Maleinsäureanhydrid

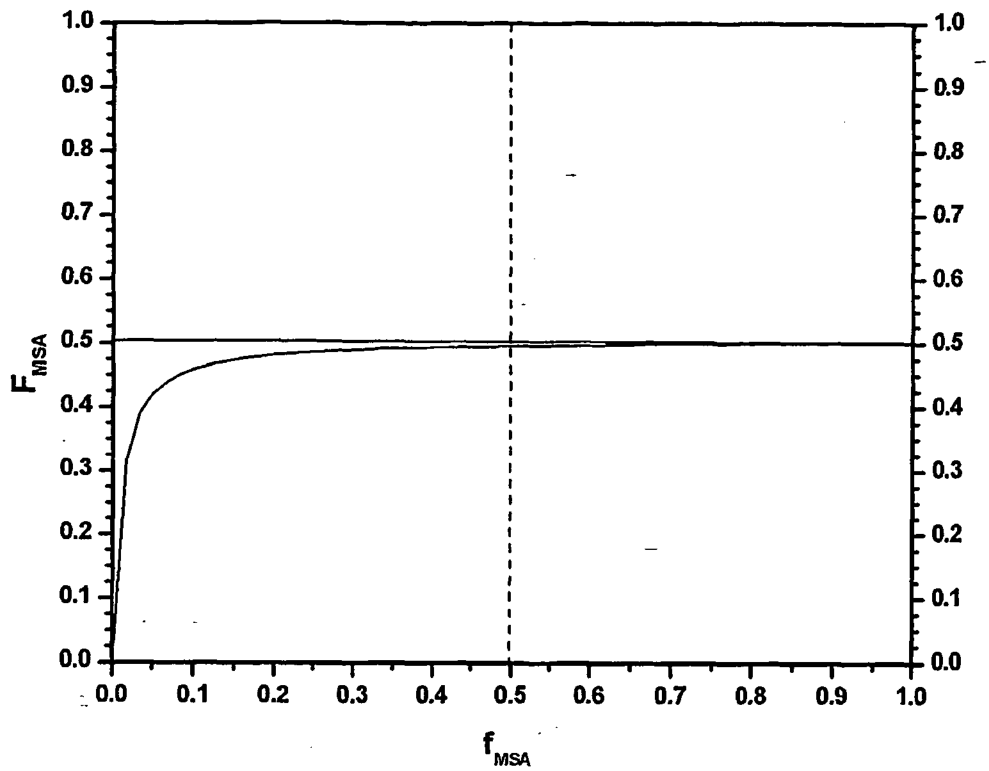


**Abbildung 1: Copolymerisationsdiagramm für die Polymerisation von MSA mit Styrol (Chapman C. B., Valentine L., *J. Polym. Sci.*, 34 (1959) 319)**

Wie Abbildung 1 zeigt, copolymerisiert Styrol mit MSA in einem weiten Mischungsbereich alternierend. Zwei Erklärungen für dieses Verhalten wurden vorgeschlagen. Alternierende Copolymerisation aufgrund polarer Effekte bei der Resonanzstabilisierung der radikalischen Zwischenstufen oder aufgrund der Ausbildung von Charge-Transfer-Komplexen zwischen Styrol und MSA. Ausschlaggebend sind in beiden Fällen der elektronenreiche Charakter des Styrols und der elektronenarme Charakter des MSA. Die Fluorcarbonsubstituenten des hier polymerisierten p-Perflouralkylstyrols sind ausreichend vom aromatischen Ringsystem entfernt, um keinen ausschlaggebenden Einfluss auf den elektronischen Charakters des aromatischen Rings auszuüben. Es kann also auch in dem hier vorliegenden Fall mit einer altemierenden Polymerisation von MSA mit dem perfluoralkylsubstituierten Styrol gerechnet werden.

Versuchsvorschrift Polymerisation von perfluoralkylsubstituierten Styrolen mit MSA

In einem 100mL Rundkolben mit Septum werden Maleinsäureanhydrid (4.6mmol) und Styrol-$R_F$ (4.6mmol) in 30mL Ethylmethylketon gelöst. Das Lösungsmittel wird entgast und mit Argon geflutet, um Sauerstoff zu verdrängen. Man gibt 31mg (4mol-%) AIBN zu und spült mit Argon. Die Reaktionslösung wird 9h bei 60°C gerührt. Das Lösungsmittel wird im Vakuum entfernt, der Rückstand in Chloroform aufgenommen und in Methanol gefällt. Das Polymer wird abfiltriert und im Vakuum bei 80°C getrocknet. Tabelle 1 und 2 listen Beispiele für die Ansätze und die Charakterisierung der dargestellten Polymere

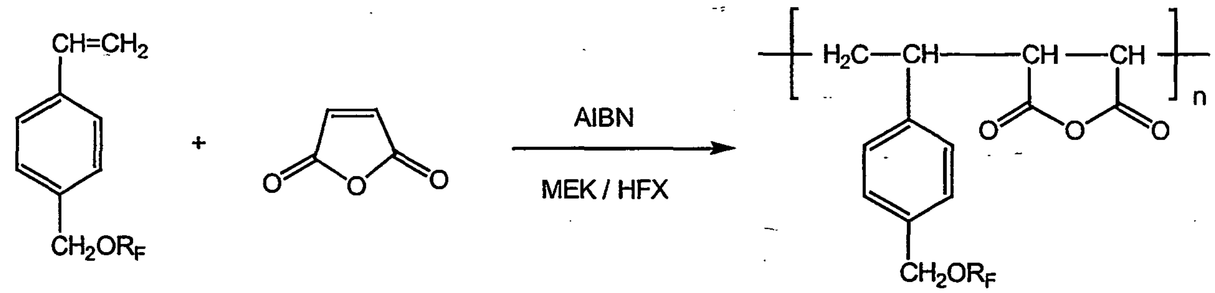


$R_F = CH_2CH_2(CF_2)_xF$ x = 6, 8, 10

$R_F = CH_2CF(CF_3)[OCF_2CF(CF_3)]_yF$ y = 2, 3, 4

Tabelle 1: Ansätze für die radikalische Polymerisation von perfluoralkylsubstituierten Styrolen mit MSA

| Monomer | $MSA_{Feed}$ [mg] | $Fluormonomer_{Feed}$ [mg] | AIBN [mg] | MEK : HFX [Anteile] |
|---|---|---|---|---|
| Styrol-$F_6$ | 451 | 2208 | 31 | 5:5 |
| Styrol-$F_8$ | 451 | 2668 | 31 | 5:5 |
| Styrol-$F_{10}$ | 451 | 3128 | 31 | 5:5 |
| Styrol-$HFPO_4$ | 451 | 3514 | 31 | 5:5 |
| Styrol-$HFPO_5$ | 451 | 4278 | 31 | 5:5 |

Die Bezeichnungen $F_6$ bis $F_8$ betreffen dabei die in obenstehendem Formelschema mit x = 6, 8 und 10 bezeichneten Reste während die Bezeichnungen $HFPO_4$ und $HFPO_5$ Styroltypen der im obigen Formelschema mit x = 2, 3, 4 bezeichneten Reste mit Propylenoxyd-Grundgerüst betreffen.

Tabelle 2: Molekulargewichte, Ausbeuten, sowie Schmelz- und Glastemperaturen der dargestellten Fluoralkylstyrol-MSA Copolymere

| Copolymer | $M_n$ [kg/mol] | $M_w$ [kg/mol] | $M_w$ / $M_n$ | $MSA^{a}_{ist}$ [wt-%] | Ausbeute (%) | $T_g^b$ [°C] | $T_m^b$ [°C] |
|---|---|---|---|---|---|---|---|
| P(Styrol-F6-co-MSA) (THF) | 10 | 18 | 1,8 | 43,6 | 85 | 164 | 202 |
| P(Styrol-$F_8$-co-MSA) (Freon) | 18 | 31 | 1,7 | 46,6 | 89 | 166 | 234 |
| P(Styrol-$F_{10}$-co-MSA) (Freon) | 12 | 25 | 21 | 52,1 | 88 | 169 | 217 |
| P(Styrol-$HFPO_4$-co-MSA) (Freon) | 54 | 76 | 14 | 50,5 | 65 | 50 | - |
| P(Styrol-$HFPO_5$-co-MSA) (Freon) | 109 | 205 | 1,9 | 53,5 | 70 | - | - |
| [a] Elementaranalyse, [b] DSC, 2. Aufheizen, 10°/min | | | | | | | |

Benetzungsverhalten dünner Filme der Styrolcopolymeren

Um einen Vergleich der öl- und wasserabweisenden Eigenschaften der Copolymere zu ermöglichen, wurden

dünne Filme der Polymeren für die Oberflächencharakterisierung aus einer 1 wt-% Lösung (HFX, 1:1 HFX/THF) auf Glasplättchen aufgeschleudert. Die Abscheidung aus einer organischen, unpolaren Lösung begünstigt die Orientierung der Fluorgruppen zur Oberfläche. In allen Fällen ergaben sich klare Filme. Die Proben wurden für 2h bei 150°C getempert. Die Benetzbarkeit dieser Filme durch eine Serie von n-Alkanen wurde nach der statistischen Methode des liegenden Tropfens bestimmt. Es wurde ein Goniometer G40 von Krüss, mit Termperierkammer, Videomeßsystem G1041 und PDA 10 Software verwendet. Die Werte für die kritische Oberflächenspannung $\gamma c$ wurde mit Hilfe der Zisman-Gleichung[1] ($\cos\Theta = 1+m(\gamma L-\gamma c)$) und nach Girifalco-Good-Fowkes-Young[2] ($\cos\Theta = -1+2(ySD)1/2\ \gamma L-1/2$) bestimmt (Abb 2 und Abb 3).

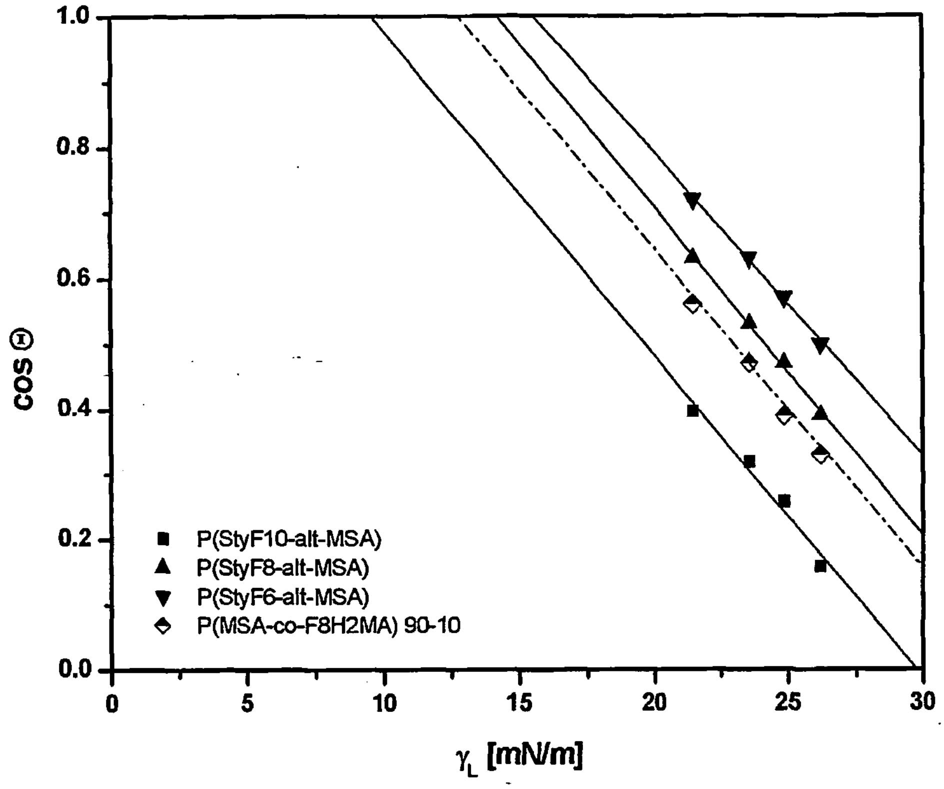


1: W. A. Zisman in *Contact Angle, Wettability and Adhesion*, Adv. In Chemistry Series Vol. 43, R.F. Gould (ed.), American Chemical Society, Washington, D.C., 1964

2: F. M. Fowkes, *J. Phys. Chem.*, **66** (1962) 382; F. M. Fowkes, *Ind. Eng. Chem*, **56** (1964) 40; L. A. Girafalco, R. J. Good, *J. Phys. Chem.*, **61** (1957) 904

Abbildung 2: Auftragung nach Zisman für P(StyF$_X$-alt-MSA) Polymere mit unterschiedlichem Anteil an MSA im Polymer. Benetzende Flüssigkeiten: n-Hexadecan ($\gamma_L$ = 27,6 mN/m), n-Dodecan ($\gamma_L$ = 25,1 mN/m), n-Decan ($\gamma_L$ = 24,0 mN/m), n-Octan ($\gamma_L$ = 21,8 mN/m), aufgezogen aus THF/HFX 1:1

Alle gemessenen Polymeren besitzen sehr niedrige Oberflächenspannungen, die eine Orientierung der fluorierten Seitengruppen zur Oberfläche hin nachweisen (Tabelle 3). Die Werte nehmen mit zunehmender Länge der Perfluöralkylketten ab.

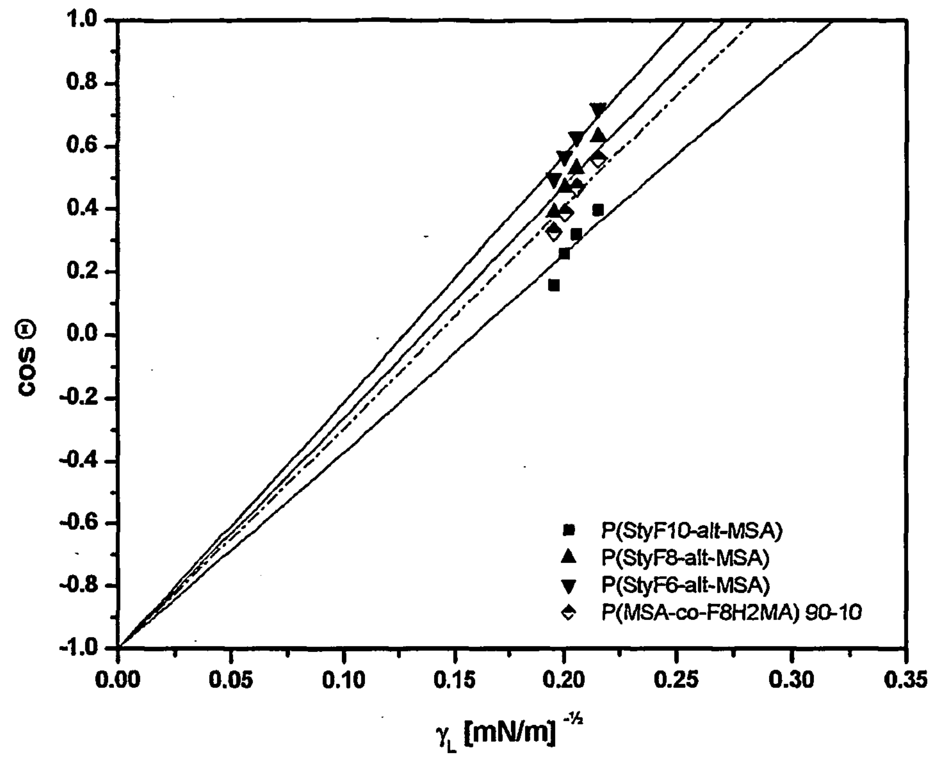


Abbildung 3: GGFY-Auftragung für P(StyFx-alt-MSA) Polymere mit unterschiedlichem Anteil an MSA im Polymer. Benetzende Flüssigkeiten: n-Hexadecan ($\gamma_L$ = 27,6 mN/m), n-Dodecan ($\gamma_L$ = 25,1 mN/m), n-Decan ($\gamma_L$ = 24,0 mN/m), n-Octan ($\gamma_L$ = 21,8 mN/m)

Tabelle 3: Kritische Oberflächenspannung $\gamma_c$ (nach Zisman) und dispersiver Wechselwirkungsanteil der Oberflächenenergie $\gamma_s^D$ (nach GGFY), sowie die Kontaktwinkel gegen Hexadecan der aus HFX/THF (1:1) Lösung abgeschiedene und bei 150°C getemperten Filme

| Polymer | $\gamma_c$ [mN/m] | $\gamma_s^D$ [mN/m] | $\Theta_{Hexadecan}$ [Grad] | $\Theta_{Hexadecan}$ 2h/150°C [Grad] |
|---|---|---|---|---|
| P(StyF10-alt-MSA) | 10 | 10 | 81 | 78 |
| P(StyF8-alt-MSA) | 14 | 14 | 67 | 73 |
| P(StyF6-alt-MSA) | 16 | 15 | 60 | 71 |
| P(Styrol-$HFPO_4$-co-MSA) | 9 | 12 | 76 | 75 |
| P(Styrol-$HFPO_5$-co-MSA) | 8 | 11 | 78 | 78 |

Wegen der hohen Glasübergangstemperaturen und der Schmelzübergänge, ließ sich eine maximale Öl- und Wasserabweisung teilweise erst nach Tempern erreichen. Dies war nicht der Fall für die Polymerverbindungen, bei denen anstelle eines Perfluoralkylrestes ein HFPO-Oligomer als Substituent der Styroleinheiten eingeführt wurde.

Darstellung wässriger Emulsionen von P(Sty-$R_F$-co-MSA)

Wegen der hohen Glasübergangstemperaturen und der Schmelzumwandlung sind für die Lösung/Emulgierung

der Polymere oft relativ hohe Temperaturen notwendig. Teilweise kann eine Herstellung der Emulsionen nur unter Druck z.B. mit Hilfe eines Hochdruckhomogenisators (Avestin, Heidelberg) erfolgen. Zusatz einer kleinen Menge eines fluorierten Lösemittels (HFX, Perfluordecalin) in der Größenordnung der eingewogenen Menge Fluorpolymer kann die Emulgierbarkeit deutlich verbessern.

Versuchsvorschrift:

P(StyF6-alt-MSA) (400 mg) werden mit 4 mL wässriger 10% ammoniakalischer Lösung versetzt und bei 60°C gerührt. Anschließend wird der überschüssige Ammoniak bei 50°C ausgetrieben und wenige Minuten bei ca. 1000 bar mit dem Emulsiflex C5 homogenisiert. Man erhält eine milchig-trübe, schäumende Emulsion. Nichtemulgierte Anteile liegen unter 5 % der Einwaage und können durch Filtration abgetrennt werden. Die Emulsionen sind über Wochen stabil.

Beschichtung eines Substrats mit den Emulsionen und Messung der Benetzbarkeit der Schichten (Randwinkelmessungen)

Ein dünner Film einer 1 Gew.-% wässrigen Lösung von P(StyF6-alt-MSA) wurde auf ein Glasplättchen aufgeschleudert und anschließend für 11 Stunden bei 120°C getempert. Die Benetzbarkeit dieser Filme durch eine Serie von n-Alkanen wurde nach der Methode des liegenden Tropfens bestimmt. Es wurde ein Goniometer G40 von Krüss, mit Termperierkammer, Videomeßsystem G1041 und PDA 10 Software verwendet. Die Werte für die kritische Oberflächenspannung $\gamma c$ wurde mit Hilfe der Zisman-Gleichung ($\cos\Theta = 1+m(\gamma_L-\gamma_c)$) und nach Girifalco-Good-Fowkes-Young ($\cos\Theta = -1+2(\gamma_S^D)^{1/2}\,\gamma_L^{-1/2}$) bestimmt. Der Wert entspricht dem der getemperten, aus HFX abgeschiedenen Probe.

| Polymeres | $\gamma_c$ [mN/m] | $\gamma_s^D$ [mN/m] | ΘHexadecan [Grad] |
|---|---|---|---|
| P(StyF6-alt-MSA) aus Wasser | 9 | 12 | 72 |

Copolymerisation von Acrylaten/Methacrylaten mit Maleinsäureanhydrid

Die Copolymerisation von Acrylaten und Methacrylaten mit MSA erfolgt unter bevorzugtem Einbau der Acrylate und Methacrylate. Damit ist es bei Vorgabe aller Monomere zu Beginn der Polymerisation nicht möglich, ein einheitliches Produkt zu erhalten. Methacrylate und Acrylate mit Perfluoralkylsubstituenten können in ihrem Copolymerisationsverhalten grundsätzlich von nichtfluorierten Methacrylaten/Acrylaten abweichen.

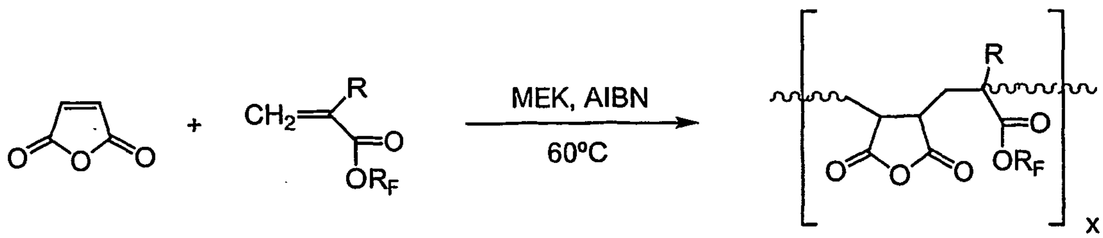


R = H, $CH_3$

Bestimmung der Copolymerisationsparameter für P(MSA-co-F8H2MA)

In einem Zweihalskolben werden AIBN (4mol-%), Maleinsäureanhydrid und fluoriertes Methacrylatmonomeres in 20 mL eines Gemisches aus Ethylmethylketon und einem fluoriertem Hilfslösemittel (1:1) gelöst. Das Lösungsmittel wird durch mehrfaches Einfrieren, Evakuieren und Auftauen entgast. Unter Stickstoffgegenstrom wird ein Stopfen gegen ein Septum ausgetauscht, durch das Proben entnommen werden können. Zur Bestimmung der Copolymerisationsparameter $r_{MSA}$ und $r_{F\text{-}Monomer}$ wurden verschiedene Monomeranteile an MSA und MMA-F8H2 zu kleinen Umsätzen (< 10Gew.%) polymerisiert und deren Zusammensetzung mittels $^1$H-NMR bestimmt (Tabelle 4).

Tabelle 4: Feed-Zusammenetzung und MSA-Gehalt im Polymer in mol-%

| MSA | F8H2MA | MSA[a] $_{Polymer}$ |
|---|---|---|
| 25 | 75 | 8 |
| 50 | 50 | 15 |
| 75 | 25 | 30 |
| 90 | 10 | 40 |
| a $^1$H-NMR | | |

Die Copolymerisationsparameter wurden durch anpassen der Copolymerisationsgleichung (1) die experimentell erhaltenen Datenpunkte bestimmt.

$$F_{MSA} = \frac{r_{MSA} \cdot f_{MSA}^2 + f_{MSA} \cdot f_{F_8H_2MA}}{r_{MSA} \cdot f_{MSA}^2 + 2 \cdot f_{MSA} \cdot f_{F_8H_2MA} + r_{F_8H_2MA} \cdot f_{F_8H_2MA}^2} \quad (1)$$

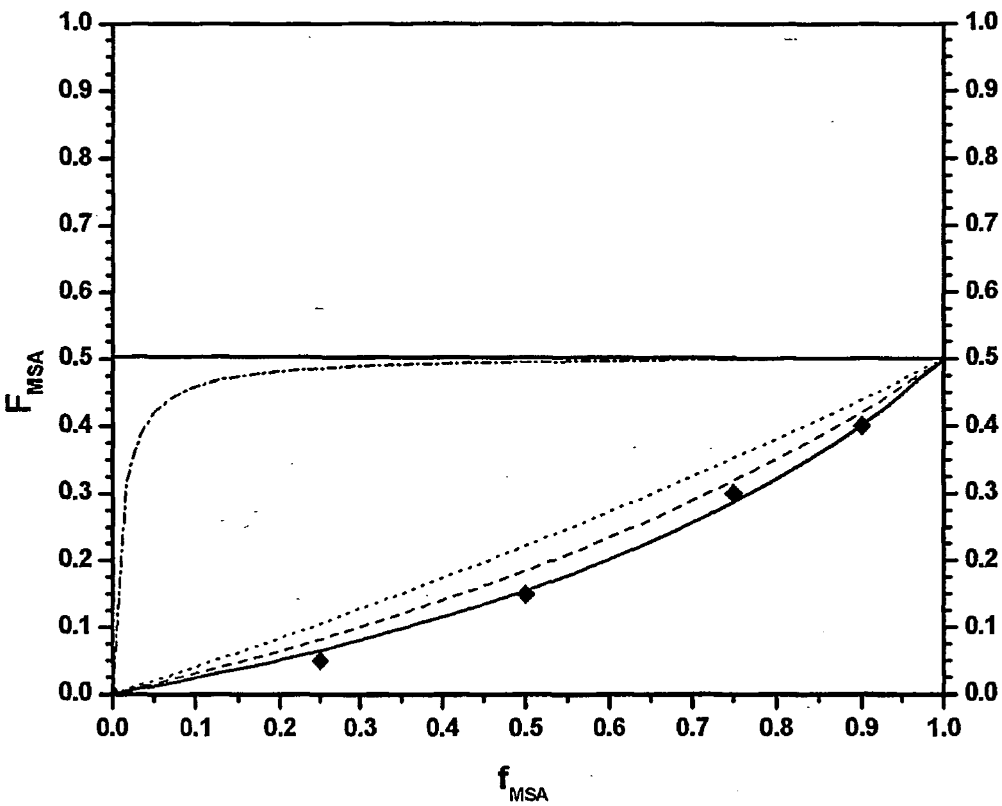


Abbildung 4: Copolymerisationsdiagramm für die Copolymerisation von MSA mit F8H2MA (—), Methylmethacrylat[1] (- - -), Methylacrylat[2] (····) und Styrol[1] (– · –)

1: Mayo F. R., Lewis F. M., Walling C. *J. Am. Chem. Soc.*, **70** (1948) 1529

2: Rätzsch M. Arnold M., *J. Macromol. Sci.-Chem.*, (1987) 507

Darstellung von P(MAR$_F$-co- MSA) bei gleichzeitiger Vorgabe der Monomere zu Beginn.

Nach einer ersten Methode wurden zum Vergleich mit den aus dem Stand der Technik bekannten Verfahren Acrylate und Methacrylate durch einfaches Zusammengeben der Monomeren vor Beginn der Polymerisation dargestellt.

Versuchsvorschrift

In einem Schraubdeckelglas mit Septum werden AIBN (4mol-%, bezogen auf Fluormonomer), Maleinsäureanhydrid und fluoriertes Acryl- bzw. Methacrylatmonomeres in 20 mL Ethylmethylketon oder einem Gemisch aus Ethylmethylketon und Hexafluorxylol gelöst (Tabelle 5). Das Lösungsmittel wird entgast und mit Argon gespült, um Sauerstoff zu verdrängen. Die Reaktionslösung wird bei 60°C in einem Schüttler gerührt und mit Methanol ausgefällt. Das Polymere wird abfiltriert und im Vakuum bei 80°C getrocknet.

Tabelle 5: Einwaage und Lösungsmittelgemische bei der Copolymerisation von Acrylaten/Methacrylaten mit Maleinsäureanhydrid

| Monomer | $MSA_{Feed}$ [mol-%] | $Fluormonomer_{Feed}$ [mol-%] | MEK : HFX [Anteile] | $MSA_{Polymer}$ (Elementaranalyse) [mol-%] | Ausbeute [%] |
|---|---|---|---|---|---|
| F8H2MA | 30 | 70 | 10:0 | 7 | 59 |
| F8H2MA | 30 | 70 | 8:2 | 8 | 63 |
| F8H2MA | 30 | 70 | 5:5 | 10 | 80 |
| F8H2MA | 50 | 50 | 10:0 | 12 | 76 |
| F8H2MA | 50 | 50 | 8:2 | 16 | 67 |
| F8H2MA | 50 | 50 | 5:5 | 15 | 71 |
| F8H2MA | 66 | 33 | 10:0 | 32 | 76 |
| F8H2MA | 66 | 33 | 5:5 | 31 | 79 |
| F8H2MA | 75 | 25 | 5:5 | 34 | 60 |
| HFPO3MA | 66 | 33 | 5:5 | 30 | 50 |
| HFP03MA | 75 | 25 | 5:5 | 36 | 45 |
| HFPO5MA | 66 | 33 | 2:8 | 25 | 46 |
| F8H2A | 30 | 70 | 10:0 | 8 | 50 |
| F8H2A | 30 | 70 | 8:2 | 8 | 46 |
| F8H2A | 50 | 50 | 10:0 | 13 | 44 |
| F8H2A | 50 | 50 | 8:2 | 13 | 39 |
| F8H2A | 50 | 50 | 5:5 | 15 | 40 |
| F8H2A | 66 | 33 | 5:5 | 33 | 50 |
| F8H2MA: 1H,1H,2H,2H-Perfluordecyl-methacrylat<br>F8H2A: 1H,1H,2H,2H-Perfluordecyl-acrylat<br>HFPO3MA: 1H,1H-Perfluor-2,5-dimethyl-3,6-dioxadodecyl-methacrylat<br>MSA: Maleinsäureanhydrid | | | | | |

Die Versuchsprodukte waren in ihrer Zusammensetzung teilweise uneinheitlich, wie es entsprechend der Copolymerisationsparameter für Methacrylate und MSA nicht anders zu erwarten ist. Man findet sehr breite Molekulargewichtsverteilungen ($M_w/M_n >> 2$), wobei das mittlere Molekulargewicht mit zunehmendem Anteil an MSA in der Monomermischung abnimmt (siehe Abb. 5). Die Abbildung zeigt auch, dass die erzielten Molekulargewichte von der Zusammensetzung des Lösemittels abhängen. Je polarer die eingesetzten Lösemittelgemische waren und je schlechter somit die MA-R$_F$-Monomere gelöst wurden, um so deutlicher hat sich der molekulargewichtsbegrenzende Effekt der MSA Zugabe bemerkbar gemacht.

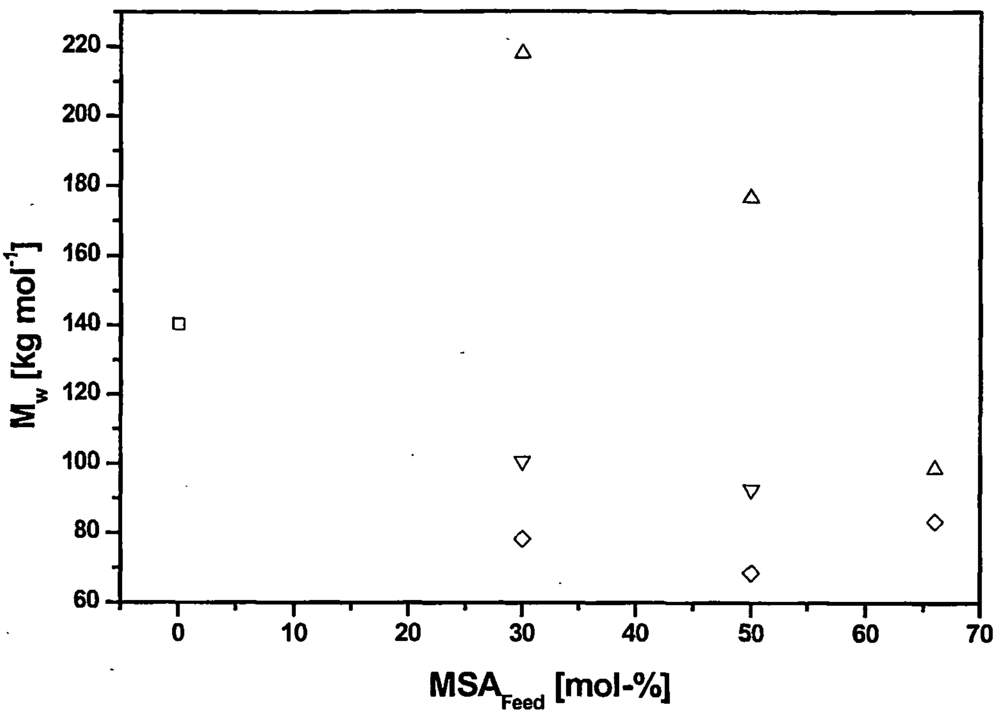


Abbildung 5: Auftragung der Molekulargewichte von P(F8H2MA-co-MSA) gegen den

MSA-Feeds. MEK:HFX=50:50 (Δ), MEK:HFX=80:20 (∇), MEK=100 (◊), MEK:HFX=50:50 (F8H2MA Homopolymer) (□)

Neben der Uneinheitlichkeit des Molekulargewichts findet man auch eine Uneinheitlichkeit in der Comonomer-Zusammensetzung. Dabei hängt der Anteil an MA-$R_F$-reichen Polymerketten von der Einwaage an MSA und von der Zusammensetzung des Lösungsmittels ab. Bei einer Erhöhung des MSA-Anteils wird der Anteil an Fluorhomopolymer bzw. fluorreichen Polymeren zurückgedrängt. Um den Anteil an MSA-reichen Copolymeren abzuschätzen, wurde die Löslichkeit/Emulgierbarkeit der Proben in ammoniakalischem Wasser bestimmt. Hierzu wurden die einzelnen Polymerproben in Ammoniakwasser aufgenommen und der unlösliche Rückstand abgetrennt. Der wasserlösliche Anteil besteht aus MSA reichen Copolymeren. Die Rückstände bestehen aus fluorreichen Polymeren, wie mittels IR-Spektroskopie (Esterbande) und Elementaranalyse nachgewiesen werden kann.

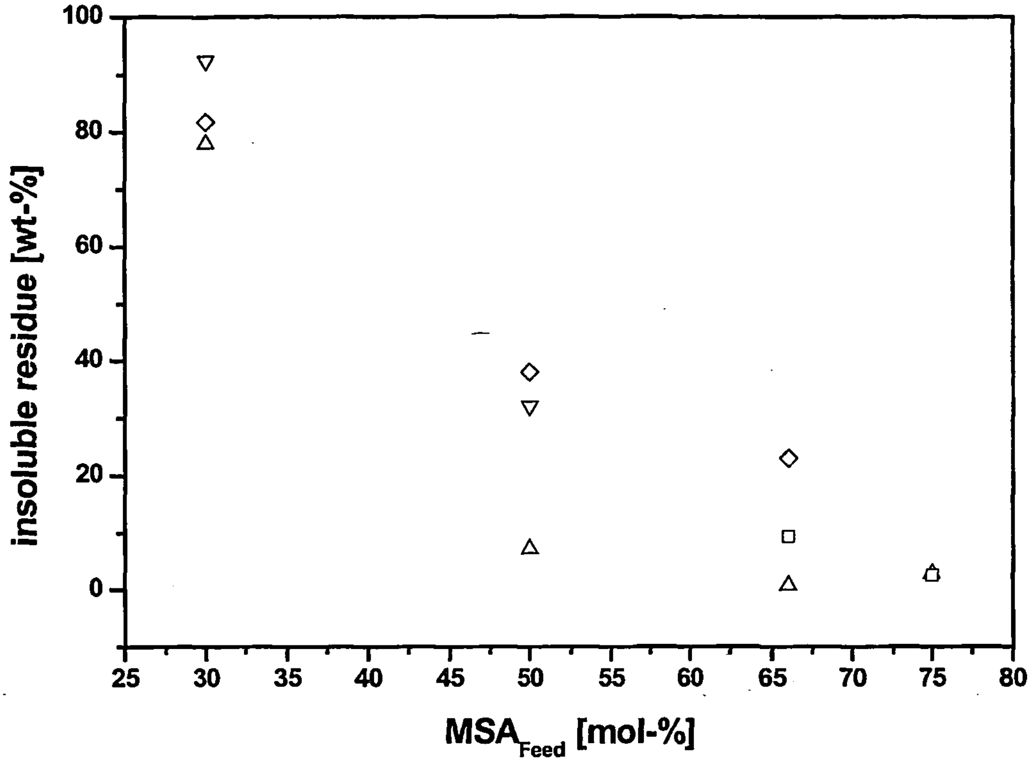


Abbildung 6: Auftragung des Anteil an unlöslichem Rückstand von F8H2MA-MSA Copolymeren gegen den MSA-Anteil. MEK:HFX=50:50 (Δ), MEK:HFX=80:20 (∇), MEK=100 (◊), MEK:HFX=50:50 (HFPO3MA) (□)

**Beispiel Selbstemulgierung**

Polymerisation bei kontinuierlicher Zudosierung von (Meth)acrylat-Monomerem

Um eine gleichmäßige Zusammensetzung der Copolymeren zu erreichen, wurde die Copolymerisation der perfluorcarbonsubstituierten Methacrylate mit MSA unter kontinuierlicher Zudosierung durchgeführt. Entsprechend dem Copolymerisationsdiagramm kann ein hoher MSA-Anteil erreicht werden, wenn man 90 mol-% MSA vorlegt, und die während der Reaktion verbrauchte Menge an Methacrylat und MSA kontinuierlich nachdosiert. Voraussetzung hierfür ist neben einer Kenntnis der Copolymerisationsparameter auch die der Polymerisationsgeschwindigkeit.

Versuchsvorschrift zur Bestimmung von Zeit-Umsatz-Kurven und Bestimmung der Anfangspolymerisationsgeschwindigkeiten für P(F8H2MA-co-MSA)

In einem Zweihalskolben werden AIBN (4 mol-%), Maleinsäureanhydrid und fluoriertes Methacrylmonomer in 20 mL eines Gemisches aus Ethylmethylketon und HFX (1:1) gelöst. Das Lösungsmittel wird durch mehrfaches Einfrieren, Evakuieren und Auftauen entgast. Unter Stickstoffgegenstrom wird ein Stopfen gegen ein Septum ausgetauscht, durch das Proben für die Bestimmung des Umsatzes entnommen wurden.

| MSA:F8H2MA [Anteile] | AIBN [mg] | MSA [mg] | F8H2MA [mg] |
|---|---|---|---|
| 25 : 75 | 33 | 123 | 2000 |

Tabelle fortgesetzt

| MSA:F8H2MA [Anteile] | AIBN [mg] | MSA [mg] | F8H2MA [mg] |
|---|---|---|---|
| 50 : 50 | 49 | 368 | 2000 |
| 75 : 25 | 99 | 1105 | 2000 |
| 10:90 | 247 | 3207 | 2000 |

Abbildung 7 zeigt zwei Zeit-Umsatz-Kurven für die Copolymerisation von F8H2MA und MSA bei unterschiedlichen Zusammensetzungen. Die Messpunkte wurden mit Hilfe von Formel (2) angepasst. Fittparameter sind der maximal mögliche Umsatz $U_{max}$, die Polymerisationsgeschwindigkeitskonstante *v* und die Polymerisationszeit *t*.

$$Umsatz = U_{\max} \cdot \left[1 - e^{-v \cdot t}\right] \quad (2)$$

Beide Graphen besitzen dieselben Anfangssteigungen, d.h. die Geschwindigkeit, mit der Polymer gebildet wird, ist in beiden Fällen vergleichbar. Zur Bestimmung der Polymerisationsgeschwindigkeit für spätere Zudosierungsexperiment wurde die Steigung von je vier Messpunkten durch lineare Regression bestimmt (Abbildung 8).

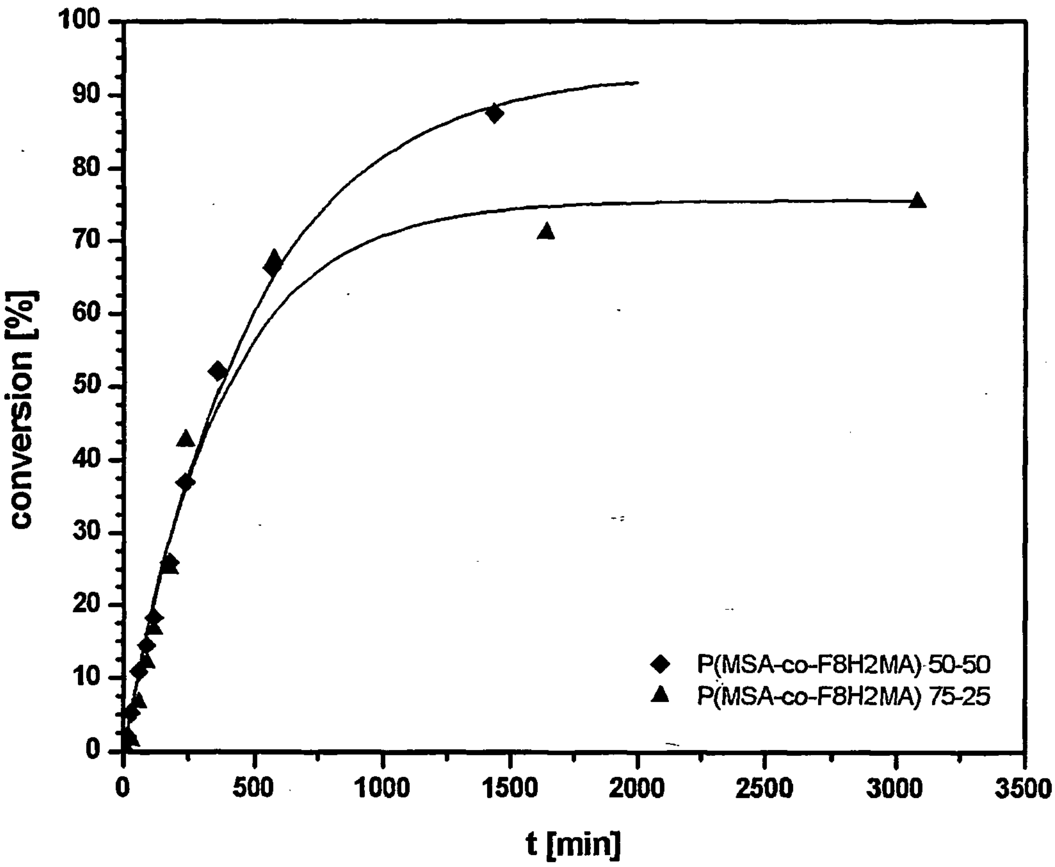


Abbildung 7: Zeit-Umsatz-Kurven für die Copolymerisation von F8H2MA und MSA

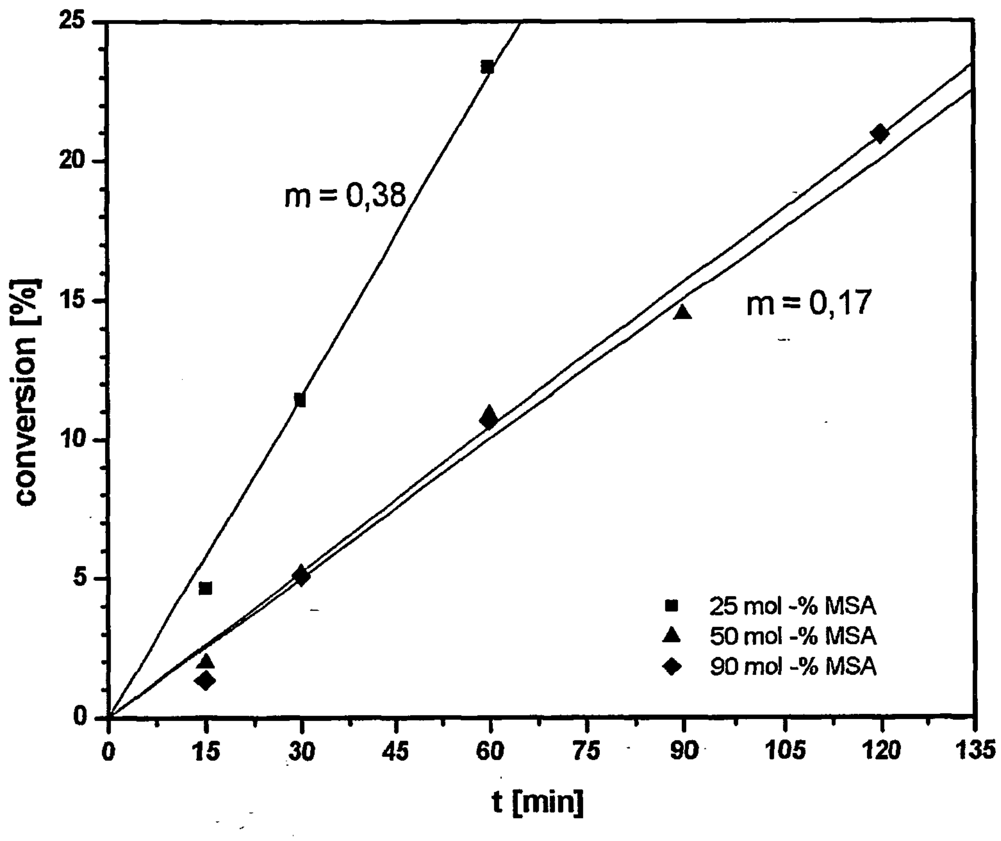


Abbildung 8: Anfangsgeschwindigkeiten bei verschiedenen Ausgangszusammensetzungen der Monomere

Mit Ausnahme der Steigung bei dreifachem Überschuss an fluoriertem Methylmethacrylat (m = 0.38 %/min) haben alle anderen Zusammensetzungen mit mind. 50 mol-% MSA eine Steigung von 0,17 %/min. Die MSA-Zugabe senkt die Polymerisationsgeschwindigkeit ab. Ab einem MSA-Anteil von 50 mol-% und mehr wird die MSA-Reaktivität geschwindigkeitsbestimmend.

In einem weiteren Experiment wurden Initiatorkonzentration und Lösungsmittelmenge variiert. Bei einer Verdopplung der Initiatorkonzentration steigt die Polymerisationsgeschwindigkeit auf 0,25 %/min. Bei einer Erhöhung der Monomerkonzentration (bei gleicher Initiatormenge) steigt die Polymerisationsgeschwindigkeit auf einen Wert von 0,30 %/min. Bei Verwendung von WAKO V-601® (Dimethyl-2,2'-azobisisobutyrat) als Initiator, ergeben sich keine signifikanten Veränderungen im Vergleich zu AIBN. Die Anfangspolymerisationsgeschwindigkeiten liegen auch hier zwischen 0,20 %/min und 0,24 %/min.

Aus den oben ermittelten Werten lassen sich die Mengen an MSA und fluoriertem MMA berechnen, die zudosiert werden müssen; um Polymere mit konstantem MSA-Gehalt zu erhalten.

$$R_p^1 = \frac{m_o}{V} \cdot \frac{R_{p\mu}}{100\%} \cdot \frac{1}{M_1} \cdot \frac{1}{1 + \frac{M_2}{M_1} \cdot \frac{R_p^2}{R_p^1}} \qquad (3)$$

mit:

$$\frac{R_p^1}{R_p^2} = \frac{1 + r_1 \cdot \frac{f_1}{f_2}}{1 + r_2 \cdot \frac{f_2}{f_1}}$$

$m_o = m_1 + m_2$ = Gesamtmasse an eingesetzten Monomeren
V: Volumen der Monomerenlösung
$R_{p\mu}$: Bruttopolymerisationsgeschwindigkeit in %/Zeit
$M_i$: Molmasse von Monomerem i
$f_j$: Molenbruch von Monomerem i in der Monomeren-Mischung

Aus (5) ergibt sich die pro Zeiteinheit verbrauchte Masse an Monomerem $\Delta_i$ zu

$$\Delta_1 = V \cdot M_1 \cdot R_p^1 \qquad (4)$$

$$\Delta_2 = V \cdot M_2 \cdot R_p^2 \qquad (5)$$

Die Zugabemenge an Initiator berechnet sich bei bekannter Zerfallskonstante k nach

$$\frac{dm_i}{dt} = k \cdot m_I \qquad (6)$$

Die genauen Zugabemengen und Zugabegeschwindigkeiten für die Polymerisationsversuche (Tabelle 6) wurden nach Formel (3-6) errechnet, wobei mit Monomer 2 das MSA bezeichnet wird.

Versuchsvorschrift:

In einem Zweihalskolben werden AIBN, Maleinsäureanhydrid und fluoriertes Methacrylatmonomeres in 15 mL eines Gemisches aus Ethylmethylketon und fluoriertem Hilfslösemittel (1:1) gelöst. Das Lösemittel wird durch mehrfaches Einfrieren, Evakuieren und Auftauen entgast. Unter Stickstoffgegenstrom wird ein Stopfen gegen ein Septum ausgetauscht. In einem mit Septum verschlossenem Glasfläschchen werden die nach (5) und (6) berechneten Mengen an Monomer, sowie 4 mol-% AIBN in 5 mL MEK/Hilfslösemittel gelöst und entgast (s.o.). Mittels einer Spritzenpumpe wird über mehrere Stunden hinweg mit konstanter Rate zudosiert ($R_{p\mu}$ siehe Tabelle 6).

Absolute Werte für die Copolymerzusammensetzung wurden mittels $^1$H-NMR Analyse und CHF-Elementaranalysen bestimmt. Tabelle 6 fasst die Ergebnisse zusammen. Die durch die Elementaranalyse gewonnenen Daten stimmen sehr gut mit den erwarteten Werten überein.

Tabelle 6: Monomer-, Initiator-, Überträgereinwaagen und Ausbeuten der durchgeführten Copolymerisationen

| # | Monomeres | MSA [mg] | Fluor-monomeres [mg] | $R_{p\mu}$ [% $min^{-1}$] | Lösungsmittel [1:1 Gemische] | Initiator | Initiator [mg] | Überträger [mg] | Ausbeute [%] | MSA (aus Copo-Diagramm) [mol-%] | MSA (Elementar-analyse) [mol-%] | Fluor (Elementar-analyse) [Gew.-%] |
|---|---|---|---|---|---|---|---|---|---|---|---|---|
| 1 | F8H2MA | 61 | 1000 | 0,41 | MEK/HFX | AIBN | 16 | - | 59 | 8 | 3 | 60,37 |
| 2 | F8H2MA | 184 | 1000 | 0,17 | MEK/HFX | AIBN | 25 | - | 100 | 15 | 15 | 58,80 |
| 3 | F8H2MA | 553 | 1000 | 0,17 | MEK/HFX | AIBN | 49 | - | 100 | 28 | 27 | 56,84 |
| 4 | F8H2MA | 1658 | 1000 | 0,17 | MEK/HFX | AIBN | 123 | - | 94 | 40 | 48 | 51,89 |
| 5 | F8H2MA | 1658 | 1000 | 0,17 | MEK/HFX | AIBN | 62 | - | 85 | 40 | 41 | 53,82 |
| 6 | F8H2MA | 1750 | 1000 | 0,24 | MEK/HFX | AIBN | 123 | - | 100 | 43 | 49 | 51,58 |
| 7 | F8H2MA | 1658 | 1000 | 0,24 | $CCl_4$/HFX | AIBN | 123 | $CCl_4$ | 100 | 40 | 47 | 52,13 |
| 8 | HFPO5MA | 1000 | 1000 | 0,15 | MEK/HFX | AIBN | 74 | - | 60 | 40 | 28 | 59,9 |
| 9 | F8H2A | 568 | 1000 | 0,24 | MEK/HFX | AIBN | 51 | - | 28 | 28 | 28 | 58,13 |

Die erhaltenen Polymeren wurden mittels GPC (PSS-SDV-XL Säulen [Polymer Standard Services Mainz, 2x 8x300mm, 1x 8x50mm, Partikelgröße 5µm], Polymer Laboratories PL-ELS-1000 Detektor, in Freon gegen engverteilte Polyisoprenstandards (PSS)] hinsichtlich ihrer Molekulargewichte und hinsichtlich der Schmelz- und Glasübergangstemperaturen mit einem Perkin-Elmer DSC-7 Wärmeflusskalorimeter charakterisiert (Tabelle 7).

Tabelle 7: Molekulargewichte und Schmelzpurtkte bzw. Glasübergänge der synthetisierten Fluorcopolymeren

| # | Monomeres | MSA (Elementaranalyse) [mol-%] | $M_n$ [kg/mol] | $M_w$ [kg/mol] | $M_w/M_n$ | $T_g$ [°C] | $T_m$ [°C] |
|---|---|---|---|---|---|---|---|
| 0 | F8H2MA Homopolymer | 0 | 8,4 | 14,0 | 1,7 | - | 78,0 |
| 1 | F8H2MA | 3 | 162,0 | 233,2 | 1,4 | - | 79,1 |
| 2 | F8H2MA | 15 | 91,7 | 132,4 | 1,4 | - | 92,7 |
| 3 | F8H2MA | 27 | 65,0 | 114,8 | 1,8 | - | 108,7 |
| 4 | F8H2MA | 48 | -[a] | -[a] | -[a] | - | 153,0 |
| 5 | F8H2MA | 41 | -[a] | -[a] | -[a] | - | - |
| 6 | F8H2MA - | 49 | -[a] | -[a] | -[a] | - | - |
| 7 | F8H2MA[d] | 47 | -[a] | -[a] | -[a] | - | - |
| 8 | HFPO5MA | 28 | - | - | - | -36,3 | - |
| 9 | F8H2A | 28 | 13,1 | 25,3 | 1,9 | - | 84/94- |

a Probe unlöslich in Freon
d Lösungsmittel bei der Polymerisation: HFX:$CCl_4$ = 1:1

Auch in diesem Fall nehmen die Molekulargewichte der P(F8H2MA-co-MSA) Polymere mit zunehmenden MSA-Anteil in der Reaktionslösung und damit im Polymeren ab. Eine Extrapolation der Molekulargewichtswerte für maximale MSA-Gehalte ergibt ein $M_w$ von etwa 90.000 g/mol (siehe Abb. 9). Polymere mit einem Gehalt von 40% MSA sind nicht mehr allein in fluorierten Lösungsmitteln (Freon-113, HFX) löslich, sondern nur noch in Gemischen mit polaren Lösungsmitteln (Aceton, MEK, THF).

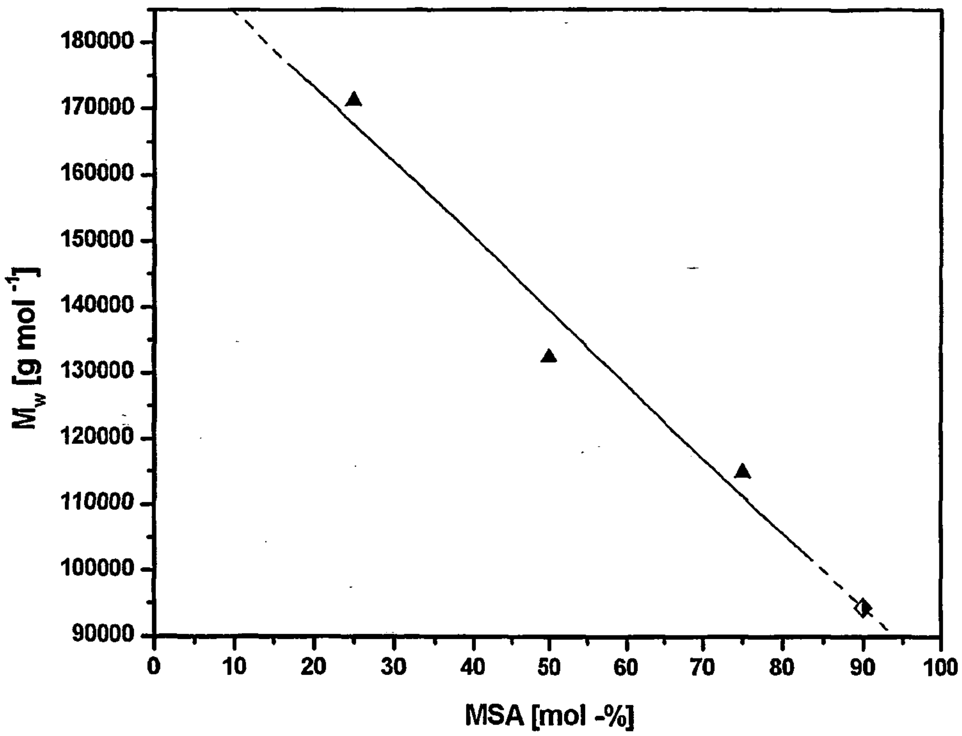


Abbildung 9: Gewichtsmittel der Molekulargewichte von Probe 1 bis 3 und extrapolierter Wert für Probe 4

Abbildung 10 fasst die Abhängigkeit der Schmelzübergänge der P(F8H2MA-co-MSA) Polymere vom MSA-Anteil graphisch zusammen. Man erkennt die deutliche Zunahme der Umwandlungstemperaturen mit zunehmendem MSA-Gehalt.

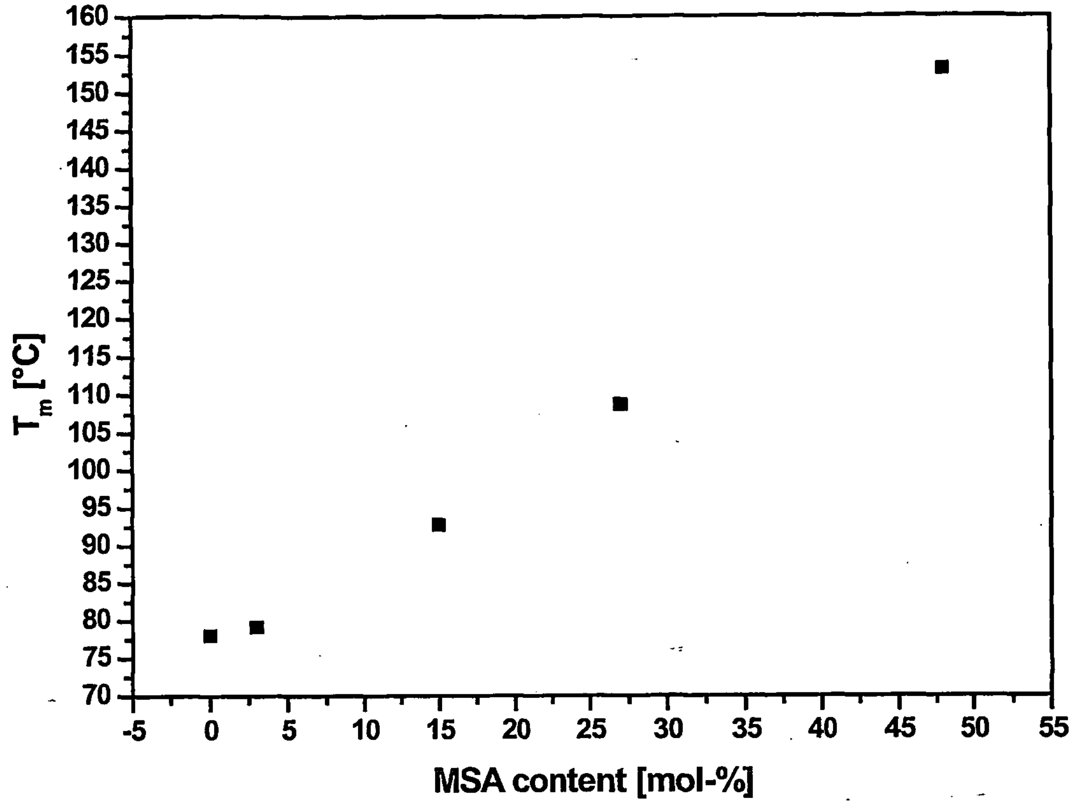


Abbildung 10: Schmelztemperaturen der P(F8H2MA-co-MSA) Polymere gegen den MSA-Anteil im Polymer

Löslichkeit und Emulgierbarkeit von P(MSA-co-F8H2MA) in Wasser

Die Copolymeren wurde durch Hydrolyse der MSA-Gruppen in wässriger $NH_4OH$-Lösung aufgenommen (Tabelle 8).

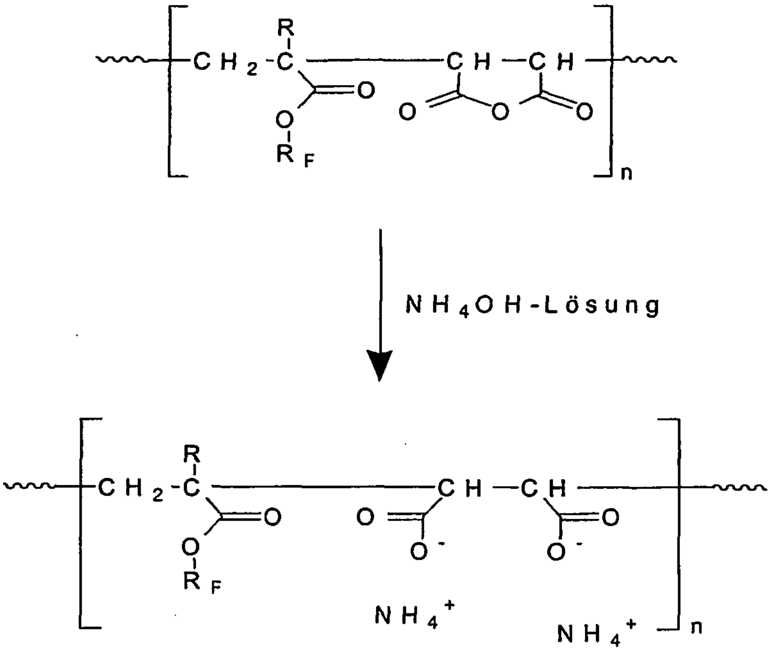


R = H, $CH_3$

Versuchsvorschrift:

*Verfahren A:* Um wässrige Emulsionen von Copolymeren mit fluorierten Acrylaten- und Methacrylaten zu erzeugen, wurden die Polymerproben in einem geschlossenen Gefäß in 10 %-Ammoniaklösung bei 60°C gerührt. Anschließend wird die Mischung mit einem Ultraschallhorn ca. 20 min homogenisiert (Bandelin HD 60). Verbleibendes $NH_3$ wird bei 70°C im Stickstoffstrom ausgetrieben. Nach Abtrennung eines eventuell vorhandenen unlöslichen Anteils (<2 Gew.-% der Einwaage) erhält man klare, farblose Lösungen.

*Verfahren B:* Eine 10 Gew.-% Mischung von Probe 7 in wässriger 10% ammonikalischer Lösung wird 4-6 Stunden bei 60°C behandelt. Anschließend wird der Ammoniak ausgetrieben und wenige Minuten bei ca. 1000 bar mit dem Emulsiflex C5 (Hersteller: Avestin) homogenisiert.

Binäre P(F8H2MA-co-MSA) Copolymerproben mit einem MSA-Gehalt >40 mol-% oder Acrylatpolymere (MSA>28 mol-%) konnten in wässriger Ammoniaklösung oder in Wasser/Ethanol-Gemischen gelöst werden. Je nach Polymermenge (1-10 Gew.-%) erhält man klare bis opake, viskose Emulsionen. Auch trübe Proben zeigen über Tage und Wochen hinweg keine Tendenz zur Phasentrennung. Die Darstellung derartiger, stabiler Dispersionen ohne Einsatz eines niedermolekularen Tensids ist neu (siehe Seite 3).

Tabelle 8: Lösungen/Emulsionen von Poly(F8H2MA-co-MSA) Copolymeren in Wasser nach Dispergierung in $NH_4OH/H_2O$

| # | Copolymeres [mg] | 10% $NH_4OH/H_2O$ [mg] | Ethanol [mg] | Feststoffanteil [Gew.-%] | |
|---|---|---|---|---|---|
| 7 | 10 | 1990 | - | 0,5 | klare Lösung |
| 6 | 10 | 990 | - | 1 | Opak |
| 7 | 10 | 990 | - | 1 | Klare Lösung |
| 12 | 10 | 990 | - | 1 | klare Lösung |
| 7 | 20 | 980 | 1000 | 1 | klare Lösung |
| 7 | 20 | 980 | - | 2 | opak |
| 7 | 50 | 950 | - | 5 | opak |
| 7 | 100 | 900 | - | 10 | opak/viskos |
| 7 | 150 | - 850 | - | 15 | opak/viskos |

Tabelle fortgesetzt

| # | Copolymeres [mg] | 10% $NH_4OH/H_2O$ [mg] | Ethanol [mg] | Feststoffanteil [Gew.-%] | |
|---|---|---|---|---|---|
| 7 | 200 | 800 | - | 20 | Gel |
| 7 | 300 | 700 | - | 30 | Gel |
| 7 | 400 | 600 | - | 40 | Gel |
| 16 | 10 | 990 | - | 1 | klare Lösung |
| 16 | 100 | 900 | - | 10 | klares Gel |

Kontaktwinkelmessungen

Dünne Filme der erfindungsgemäßen binären Copolymeren wurden für die Oberflächencharakterisierung aus einer 1 Gew.-%igen Lösung oder Emulsion in Wasser auf Glasplättchen aufgeschleudert. In allen Fällen ergaben sich klare Filme. Die Benetzbarkeit dieser Filme mit einer Reihe von n-Alkanen wurde nach der Methode des liegenden Tropfens bestimmt. Es wurde ein Goniometer G40 von Krüss, mit Temperierkammer, Videomeßsystem G1041 und PDA 10 Software verwendet. Die Werte für die kritische Oberflächenspannung $\gamma_c$ wurde mit Hilfe der Zisman-Gleichung und nach der Girafalco-Good-Fowkes-Young-Gleichung bestimmt (Tabelle 9).

Alle Polymeren besitzen extrem niedrige $\gamma_c$-Werte unter 10 mN/M. Das aus Wasser aufgetragene und getemperte Polymere erreicht nicht ganz den niedrigen Wert wie er bei Abscheidung aus einem organischen Lösungsmittel gefunden wird. Ursache ist, dass die Copolymeren bei der Abscheidung aus Wasser keinen homogenen Film bilden. Eine Verbesserung kann erzielt werden, indem die Filme einer Temperaturbehandlung unterzogen werden und durch Einführung eines dritten Comonomeren. Die letztere Lösung ermöglicht es die Glasübergangstemperatur und Schmelztemperaturen der Polymeren signifikant zu erniedrigen und so auch bei niedrigeren Temperaturen ein effektives Aufziehen der schmutz- und wasserabweisenden Schicht zu erzielen.

Tabelle: 9: Kritische Oberflächenspannung $\gamma_c$ (nach Zisman) und dispersiver Wechselwirkungsanteil der Oberflächenenergie $\gamma_s^D$ (nach GGFY), sowie die Kontaktwinkel gegen Hexadecan und Wasser

| # | $\gamma_c$ [mN/m] | $\gamma_s^D$ [mN/m] | ΘHexadecan [Grad] | ΘWasser [Grad] | Lösemittel für Beschichtung |
|---|---|---|---|---|---|
| 0 | 6 | 9 | 84 | 119,3 | HFX |
| 1 | 6 | 10 | 79 | - | HFX |
| 2 | 6 | 10 | 78 | - | HFX |
| 3 | 7 | 10 | 77 | - | HFX |
| 4 | 8 | 12 | 74 | 110 | HFX/THF |
| 5[a] | 16 | 14 | 65 | 106 | Wasser |
| 9 | 8 | 10 | 80 | 50 | Wasser |
| a getempert 5 Stunden bei 100°C | | | | | |

Einführung von Substituenten über Ester, Amide und Imide der MSA-Einheiten

Der Fluorgehalt in den Copolymeren kann weiter erhöht werden, indem ein Teil der MSA-Gruppen durch Alkohole oder Amine mit einem perfluorierten Rest verestert oder amidiert/imidiert werden.

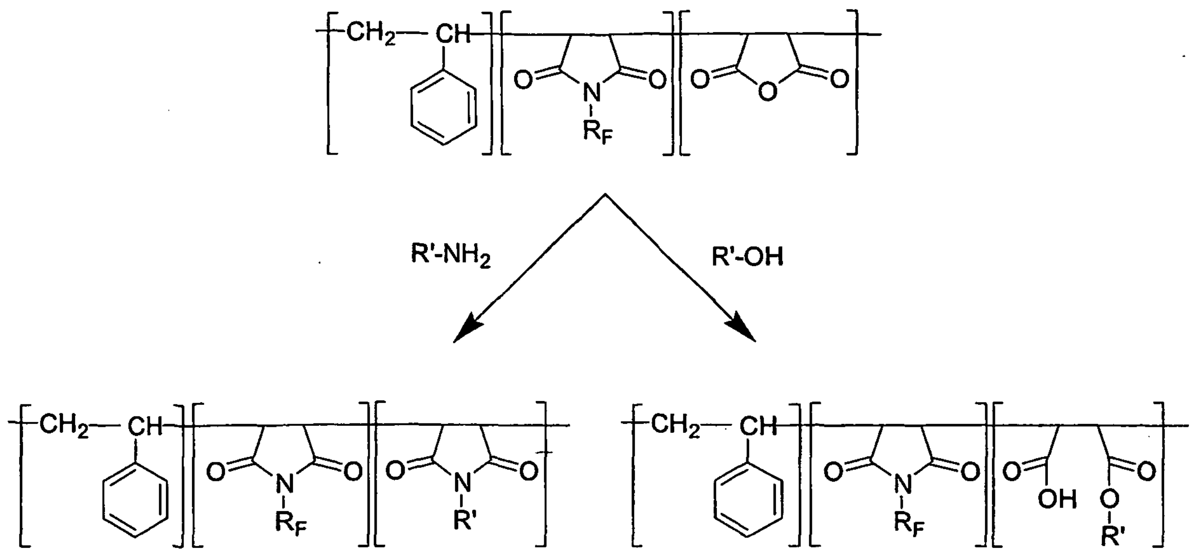


R' = Alkyl oder Perfluoralkyl

Überraschenderweise führt dies bei kleineren Anteilen zu einer Verbesserung der Löslichkeit/Emulgierbarkeit und des Aufziehverhaltens, obwohl dabei der Anteil an hydrophilen Carbonsäure/Carboxylatgruppen reduziert wird. Eine Erklärung ergibt sich durch die Absenkung der Schmelztemperaturen und Glasübergangstemperaturen. Diese Absenkung der Glastemperaturen und verbesserte Wasseraufnahme kann auch durch Amidierung/Imidierung oder Veresterung mit nicht fluorierten Aminen und Alkoholen erreicht werden.

Materialien:

Poly(styrol-alt-maleinsäureanhydrid) (SMA) mit einem Maleinsäureanhydridgehalt von weniger als 50 mol-% sind käufliche Materialien (BASF: Dylark 132, 5,8 mol% MSA; Dylark 232 8 mol-% MSA, $M_w$= 90.500; Dylark 332, 13,9% MSA, $M_w$=86.500).

Poly(styrol-alt-maleinsäureanhydrid) (SMA-S) mit einem Maleinsäureanhydridgehalt von 50 mol-% wurden durch radikalische Polymerisation in Methylethylketon (MEK) und 3-Mercaptopropiosäure als Überträger dargestellt ($M_w$=6100, $M_w$=13500).

Versuchsvorschrift zur Amidierung von SMA mit fluorierten Aminen

In einem 250mL Dreihalskolben mit Rückflusskühler und Septum werden 1g Poly(styrol-co-maleinsäureanhydrid) (SMA) in 100mL einer Mischung aus Xylol und DMF (~4:1; abhängig vom Maleinsäureanhydridgehalt des SMA) gelöst. Nach vollständigem Lösen gibt man eine äquivalente Menge an Fluoramin (je nach Maleinsäureanhydridgehalt bzw. angestrebtem Fluorgehalt) über eine Spritze zu. Die Lösung wird für 12h bei 80°C gerührt. Es bildet sich Succinamid-Säure. Triethylamin (2-facher Überschuss) und Essigsäureanhydrid (1.5-facher Überschuss) werden über eine Spritze zugegeben und die Reaktionslösung für weitere 12h bei 80°C gerührt. Das Lösungsmittel wird im Vakuum abgezogen, der Rückstand in Chloroform gelöst und in Petrolether gefällt. Das Copolymere wird abfiltriert, mit Ether gewaschen und bei 80°C im Vakuum getrocknet.
Ausbeute: 80-98%; IR (Film, $cm^{-1}$): 1784 (*v* C=O Anhydrid); 1707 (*v* C=O Imid); 1148-1242 (*v* C-F).

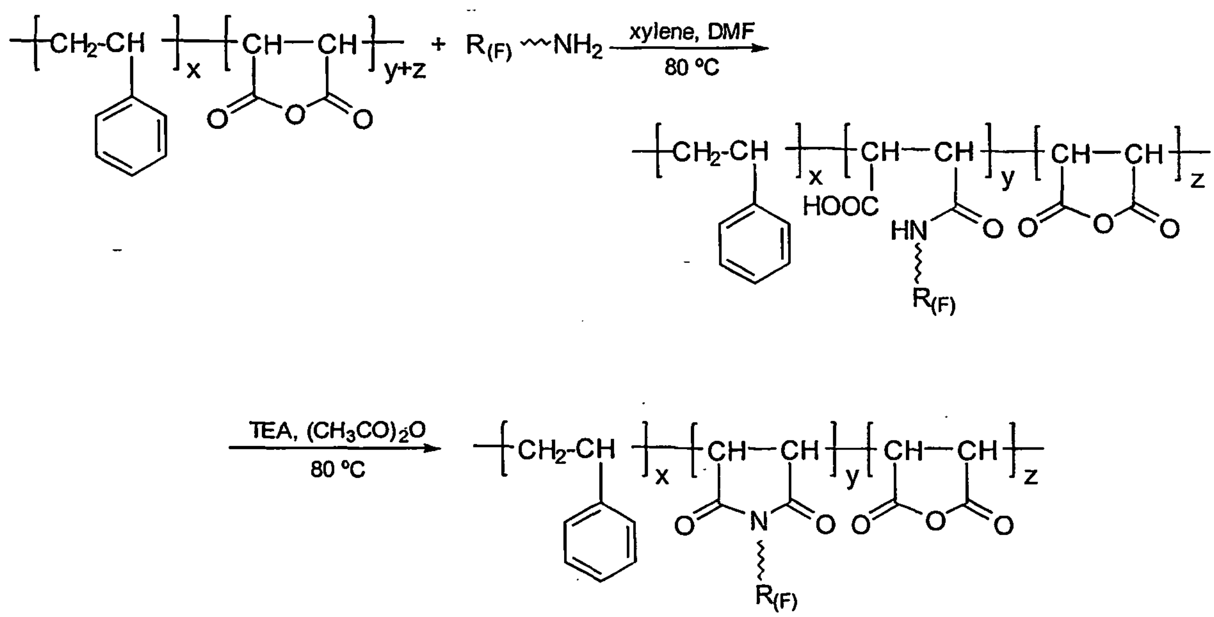


Tabelle 10: Graft-Copolymere erhalten durch partielle Imidisierung der MSA-Gruppen mit Fluoraminen

| Graft-Copolymer | $M_w$ [g/mol] | Fluorgehalt [mol-%] | Fluorgehalt [wt-%] | Rest-MSA-Gehalt [mol-%] |
|---|---|---|---|---|
| SMI-H2F8-5 | 6.110 | 5 | 13,1 | 45 |
| SMI-H2F8-10 | 6.110 | 10 | 22,20 | 40 |
| SMI-H2F8-12.5 | 13.500 | 12,5 | 25,78 | 37,5 |
| SMI-H2F8-25 | 13.500 | 25 | 38,04 | 25 |
| SMI- HFPO3-25 | 13.500 | 25 | 37,43 | 25 |
| SMI-H2F8-37.5 | 13.500 | 37,5 | 45,22 | 12,5 |

Stabile-Emulsionen von teilfluorierten SMA-Copolymeren

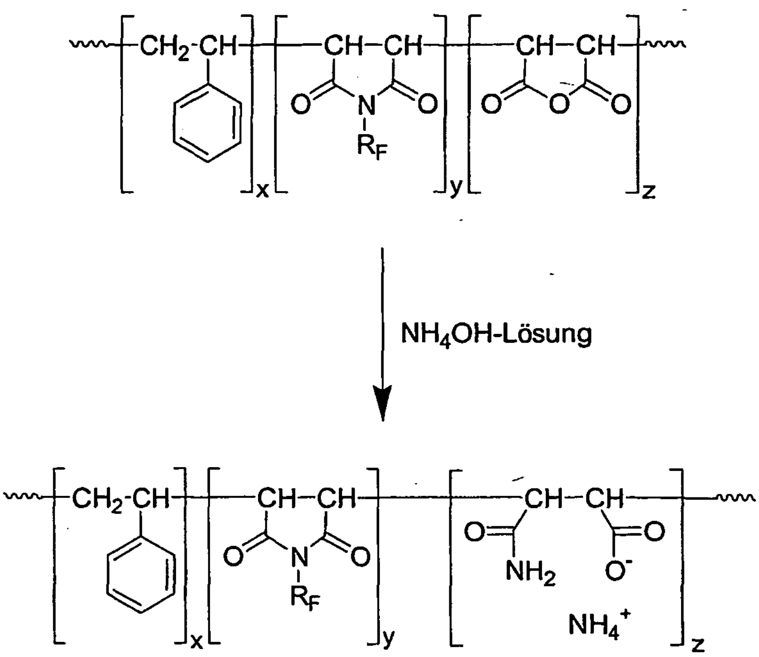


Teilfluorierte SMA-Copolymere mit einem Fluorgehalt von wenigstens bis zu 12.5 mol-% (z.B. SMI-H2F8-25; $M_w$=13.500 g/mol) können, gegebenenfalls unterstützt durch ein Cosolvens wie Aceton oder Propylacetat, und eine Ultraschallbehandlung bei 60°C in 10 Gew.-% Ammoniakwasser emulgiert werden.

Tabelle 11: Darstellung von wässrigen Lösungen synthetisierter fluorierter SMA

| Graft-Copolymer | $M_w$ [g/mol] | Fluorgehalt [mol-%] | Rest-MSA-Gehalt [mol-%] | Bemerkung |
|---|---|---|---|---|
| SMI-H2F8-5 | 6.110 | 5 | 45 | klare Lösung |
| SMI-H2F8-10 | 6.110 | 10 | 40 | klare Lösung |
| SMI-H2F8-12.5 | 13.500 | 12.5 | 37.5 | klare Lösung |
| SMI-H2F8-25 | 13.500 | 25 | 25 | klare Lösung |
| SMI- HFP03-25 | 13.500 | 25 | 25 | klare Lösung |
| SMI-H2F8-37.5 | 13.500 | 37.5 | 12.5 | trübe |

Untersuchungen der aus den erfindungsgemäßen Copolymeren erhaltenen Filmen

Für die Untersuchungen der Wasser und schmutzabweisenden Eigenschaften der behandelten Oberfläche wurden verschiedene Tests durchgeführt.

Vorbereitunq der Polymerlösungen

In DC-Trennkammem (23 x 23 x 10 cm) wurden jeweils Polymerlösungen verschiedener Konzentrationen (0,1 g/L, 1 g/L, 10g/L) hergestellt. Hierzu wurde eine entsprechende Menge des Polymerpulvers in einer 1 %igen Lösung von Ammoniak in Wasser gelöst.

Reinigung der Oberflächen:

Die harten Oberflächen (Spiegel bzw. Keramikplatten) (20 x 20 cm) wurden zunächst mit etwas Spülmittel (Pril) und destilliertem Wasser gründlich gereinigt. Anschließend wurden die Oberflächen mit Ethanol abgespült und bei Raumtemperatur getrocknet.

Beregnung mit Methylenblau

Ein zur Hälfte mit einem erfindungsgemäßen Polymeren beschichteter Glasspiegel wurde durch Eintauchen in einer 0,01 %igen Methylenblau-Lösung befeuchtet. Nach Herausnehmen des Spiegels aus der Lösung und senkrechter Lagerung desselben, fand nach 30 Sekunden eine Beurteilung des Ablaufverhaltens im direkten Vergleich der beiden Spiegelhälften statt.

Haferflocken-Einbrand

10 g eines Haferflockenbreis wurden auf beschichtete Keramikplatten mit einem Pinsel möglichst gleichmäßig verteilt und für 2 h bei 80°C im Trockenschrank getrocknet. Zur Bewertung der Schmutzabweisung wurde die Anschmutzung durch mechanisches Abkratzen entfernt und der zur Entfernung erforderliche Aufwand beurteilt.

Milch-Einbrand

Jeweils 10 g Milch (1,5 % Fett, ultrahocherhitzt, homogenisiert) wurden in 150 ml Bechergläser eingefüllt, die zuvor mit einer erfindungsgemäßen Polymerschicht versehen wurden. Die Milch-Anschmutzung wurde für 2 h im Umlufttrockenschrank bei 80°C getrocknet. Anschließend wurde die Anschmutzung mit warmem Wasser behandelt, um deren Anhaftung auf de Oberfläche zu beurteilen.

Beschichtung von Glas- oder Keramikoberflächen

Zur Beschichtung von Oberflächen wurde einer 1 Gew. %igen Lösung eines Fluorcopolymeren in einer 1 Gew.-%igen wässrigen Ammoniaklösung hergestellt. Die Lösung wurde anschließend auf die zu beschichtende Oberfläche gesprüht, wobei ein wässriger Film erzeugt wurde. Durch Trocknung wurde ein Polymerfilm auf der Oberfläche abgeschieden.

Ergebnisse:

1.:
Zur Beschichtung von Glasoberflächen wurde eine 1%-ige Lösung von Fluorcopolymer 5 in 1%-igem Ammoniak hergestellt. Die Lösung wurde anschließend auf eine Glasscheibe gesprüht, wobei ein wässriger Film erzeugt wurde. Durch eine Trocknung wurde ein Polymerfilm auf der Glasoberfläche abgeschieden. Die Polymerbeschichtung zeigte im Beregnungstest sowohl wasser- als auch ölabweisende Eigenschaften.

2.:
Eine 1 Gew.-%ige Lösung von Fluorcopolymeres 5 in 1 %-igem Ammoniak wurde hergestellt und zur Emulgierung von 0,1 Gew.-% des Fluorcopolymeren 4 eingesetzt. Die Emulsion wurde anschließend auf eine Glasscheibe gesprüht, wobei ein wässriger Film erzeugt wurde. Durch eine Trocknung wurde ein Polymerfilm auf der Glasoberfläche abgeschieden. Die Polymerbeschichtung zeigte im Beregnungstest sowohl wasser- als auch ölabweisende Eigenschaften, die im Vergleich zu 1. weiter verbessert waren.

3.:
Zur Beschichtung von Keramikoberflächen wurde eine 1%-ige Lösung von Fluorcopolymerem 5 in 1%-igem Ammoniak hergestellt. Die Lösung wurde anschließend auf eine Keramikoberfläche gesprüht, wobei ein wässriger Film erzeugt wurde. Durch eine Trocknung wurde ein Polymerfilm auf der Keramikoberfläche abgeschieden. Ein daran anschließender Einbrenntest mit Haferflockenbrei führte zu einer schlechten Haftung des Breis auf der Keramik. Die festen, eingebrannten Haferflocken konnten durch leichte mechanische Reibung sowie durch warmes Wasser vollständig von der Oberfläche entfernt werden.

4.:
Eine 1 Gew.-%ige Lösung von Fluorcopolymerem 5 in 1 %igem Ammoniak wurde hergestellt und zur Emulgierung von 0,1 Gew.-% des Fluorcopolymeren 4 eingesetzt. Die Lösung wurde anschließend auf eine Keramikoberfläche gesprüht, wobei ein wässriger Film erzeugt wurde. Durch eine Trocknung wurde ein Polymerfilm auf der Keramikoberfläche abgeschieden. Ein daran anschließender Einbrenntest mit Haferflockenbrei führte zu einer schlechten Haftung des Breis auf der Keramik. Die festen, eingebrannten Haferflocken konnten durch leichte mechanische Reibung sowie durch warmes Wasser vollständig von der Oberfläche entfernt werden. Die Wirkung war im Vergleich zu 3. weiter verbessert.

Beschichtung von Metall- oder Kunststoffoberflächen

Zur Beschichtung der Oberflächen wurde eine 0,5 Gew.-% Dispersion eines Fluorpolymers (Zusammensetzung: 46 mol-% Perfluoralkylethylmethacrylat, 6 mol-% 2-Hydroxyethylmethacrylat, 12 mol-% Ethylhexylmethacrylat, 36 mol-% MSA) in einer 1 Gew.-%igen Ammoniaklösung hergestellt. Um eine gute Benetzung der Oberflächen zu erreichen, wurde der Dispersion die gerade notwendige Menge einer Netzhilfe auf Siliconbasis zugesetzt, z. B. TEGO Wet 280 (Tego Chemie Service, Essen, Deutschland).

Ergebnisse:

1.:
Ein Edelstahl- und ein Aluminiumblech wurden mit der Dispersion benetzt und bei 130 °C in einem Trockenschrank getrocknet, wobei sich ein gleichmäßiger Polymerfilm abscheidet. In einem Beregnungstest zeigten beide Proben ein sehr gutes Abweisungsverhalten für Wasser und Öl (Hexadecan und Heptan).

2.:
Ein Stück Polyamid-Kunststoff wurde mit der Dispersion benetzt und bei 110 °C in einem Trockenschrank getrocknet, wobei sich ein gleichmäßiger Polymerfilm abschied. Ein Beregnungstest ergab für die Probe ein sehr gutes Abweisungsverhalten für Wasser und Öl (Hexadecan und Heptan).

Beispiel zur Modifizierung

A) Herstellung des Terpolymeren

In einem Zweihalskolben wurden 905°mg AIBN, 12.6 g Maleinsäureanhydrid, 187,8 mg Ethylhexylmethacrylat und 7,59 g F8H2MA in 105 ml Ethylmethylketon gelöst. Das Lösemittel wurde durch mehrfaches Evakuieren und belüften mit Argon von Sauerstoff befreit. Unter Argon-Gegenstrom wurde ein Stopfen des Zweihalskolbens gegen ein Septum ausgetauscht. In einem mit Septum verschlossenen Glasfläschchen wurden 299,9 mg AIBN, 1,83 g Maleinsäureanhydrid, 360 mg Ethylhexylmethacrylat und 14,60 g F8H2MA gelöst und entgast (s.o.). Mittels einer Spritzenpumpe wurde über 8 Stunden hinweg mit konstanter Rate die Lösung aus dem Glasfläschchen der Reaktionslösung im Zweihalskolben zudosiert. Die Reaktionslösung wurde nach Beenden der Zugabe in 300 ml Methanol gegeben. Das ausfallende Polymere wurde abfiltriert und im Vakuum getrocknet.

B1) Modifizierung des unter A) hergestellten Terpolymeren

2,5 g des unter A) hergestellten Polymeren wurden in einem 50 ml Zweihalskolben mit Rückflusskühler in 25 ml Hexafluorxylol gelöst. Es wurden 0,125 ml N,N-Dimethylaminoethanol zugegeben und für etwa 2 h bei 80 °C unter Rühren mit dem Polymeren umgesetzt.
Das Lösemittel wurde anschließend am Rotationsverdampfer entfernt. Es wurden 25 ml Methanol zugegeben und ca. 2 h gerührt. Man erhielt eine milchige Suspension, die nach einigen Minuten stehen lassen deutlich sedimentierte. Das Polymere wurde über einen Papierfilter abfiltriert, 4 mal mit jeweils 5 ml Methanol gewaschen und im Filter an der Luft getrocknet (Ausbeute: 2.15 g).

B2) Modifizierung 2

Vorschrift wie bei B1, unter Verwendung von N,N-Dimethylethylendiamin anstelle von N,N-Dimethylaminoethanol.

C) Aufschließen und Dispergieren

2 g des Polymeren aus B1 wurden in 200 ml 5%iger $NH_3$-Lösung gelöst (Rühren über Nacht bei 60 °C). Austreiben des Ammoniaks durch Rühren bei 60 °C im offenen Gefäß, ein eventueller Wasserverlust durch Verdunstung wurde ersetzt. Erhalten wurde eine leicht trübe bis wasserklare Dispersion.

D) Herstellung der Beschichtungslösungen für Baumwolle

Die Lösung C) wurde mit Essigsäure angesäuert bis ein leicht saurer pH-Wert erreicht war (3-5).

Auf Baumwolle ergab sich für das modifizierte Terpolymere aus F8H2MA, MSA und Ethylhexylmethacrylat nach Raumtemperatur-Trocknung folgendes Verhalten:

- ein aufliegender Wassertropfen zog langsam (10 min) vollständig in das Gewebe ein,
- ein Mineralöltropfen war innerhalb von mindestens 20 min stabil, zog nicht ein.

Die Kombination oleophob/hydrophil wirkte sich positiv auf das Waschverhalten aus. Öliger Schmutz haftete schlecht bzw. war einfach zu entfemen: Ein Tropfen konnte durch Abschlagen rückstandslos entfernt wurden.

Durch Tempern (Bügeleisen: 130-160 °C, 30 s) wurden die wasserabweisenden Eigenschaften der Beschichtung deutlich verbessert.

Beispiel: Anschmutzung mit Kalkseife auf harten Oberflächen (Kacheln)

Kalkseifen-Reinigungstest: Es wurden zwei Lösungen hergestellt, Lösung I bestand aus einer Lösung von 215 g $CaCl_2$ in 1 l Wasser (ca. 2 mol/l), Lösung II enthielt 5-7 Gew.-% Natriumoleat (hierzu wurde zuerst Natriumhydroxid in Wasser gelöst und eine stöchiometrische Ölsäuremenge unter Rühren zugegeben). Bei Tests auf weißen Kacheln o.ä. wurde eine Spatelspitze Ruß auf 100 ml Lösung II gegeben, um die Anschmutzung leichter visuell erkennen zu können.

Die Prüfmuster wurden durch einen Strich in zwei Hälften geteilt. Eine Hälfte diente als Kontrolle, während die andere entsprechend mit einer erfindungsgemäßen Lösung beschichtet bzw. behandelt wurde. Nach Beschichtung mit einer erfindungsgemäßen Polymer-Lösung wurde das gesamte (horizontal liegende) Muster gleichmäßig zuerst mit Lösung I besprüht, direkt anschließend gleichmäßig mit Lösung II. Hierbei bildete sich auf der Oberfläche eine Niederschlag von Kalkseife. Es wurde 10 Sekunden gewartet und die Muster wurden dann kurz senkrecht gestellt, um überschüssige Lösung ablaufen zu lassen. Anschließend wurden die Proben waagerecht liegend getrocknet (bei Raumtemperatur min 12 h oder im Trockenschrank).

Die Reinigung erfolgt unter fließendem Leitungswasser. Die Proben wurden in ein handelsübliches Waschbecken gelegt und mit einem mittig aus etwa 40 cm Höhe auf der Trennlinie auftreffenden Wasserstrahl gereinigt. Nach 60 s wurden die Proben entfernt und die Schmutzentfernung anhand einer semi-quantitativen Skala bewertet.

-: deutlich weniger Schmutzentfernung als Kontrolle (unbehandelte Oberfläche)
-: weniger Schmutzentfernung
0: keine Differenzierung
+: verbesserte Reinigung
++: deutlich verbesserte Reinigung, es wurde deutlich mehr Schmutz entfernt

Das unter B2 modifizierte Polymer wurde aus wässriger Lösung aufgetragen (Aufpinseln einer 1 % Lösung) und wie beschrieben getestet. Das Polymer zeigt eine deutlich erleichterte Reinigung (++).

| | Bewertung | |
|---|---|---|
| Probe | Repellency* | Release** |
| unbehandelt | 5 | 5 |
| Terpolymer: co-MSA-F8H2MA-EtHexMA | 2 | 3 |
| Terpolymer: co-MSA-F8H2MA-LaurylMA | 2 | 3 |

* Beurteilung der Abstoßung von wässrigem oder öligem Schmutz

** Beurteilung der Entfernbarkeit von wässrigem oder öligem Schmutz

Durch die Beschichtung mit den erfindungsgemäßen Fluorpolymeren wurde die Reinigung deutlich erleichtert.

**Patentansprüche**

1. Fluorhaltiges Copolymeres, mindestens enthaltend ein Strukturelement der allgemeinen Formel I

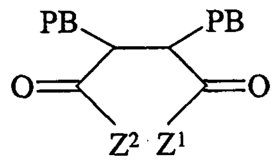
(I),

worin PB für ein Polymerrückgrat mit durchgehenden kovalenten C-C-Bindungen, worin die Reste $Z^1$ und $Z^2$ jeweils unabhängig voneinander mit $O\text{-}M^+$ oder $O\text{-}N^+R_4$ stehen, wobei M für Li, Na oder K und R für H oder einen linearen Alkylrest mit 1 bis 18 C-Atomen oder einen Rest der allgemeinen Formel $-(CH_2\text{-}CHR'\text{-}O\text{-})_mL$, worin m für eine ganze Zahl von 1 bis etwa 20 und L für H, $CH_2\text{-}CHR'\text{-}NR'_2$ oder $CH_2\text{-}CHR'\text{-}N^+R'_3$ steht oder R für einen Aminozucker wie Aminosorbitol, β-D-Glucopyranosylamin oder β-D-Glucosamin steht, oder einer der Reste $Z^1$ und $Z^2$ für $O\text{-}M^+$ oder $O\text{-}N^+R_4$ und der verbleibende-Rest $Z^1$ oder $Z^2$ für X-R" steht, wobei X für O oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder die Reste $Z^1$ und $Z^2$ zusammen für NR" stehen, oder mindestens $Z^1$ oder mindestens $Z^2$ für $X\text{-}R^N$ steht, wobei X für O, S oder NR', $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für N-R stehen oder worin beide Reste $Z^1$ und $Z^2$ zusammen für $N\text{-}R^N$ stehen, oder zwei oder mehr gleiche oder unterschiedliche Strukturelemente der allgemeinen Formel I,
und ein Strukturelement der allgemeinen Formel II

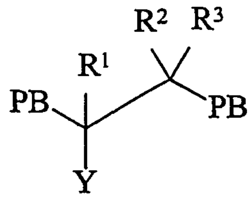
(II),

worin die Reste $R^1$ bis $R^3$ für H oder einen linearen oder verzweigten Alkylrest mit 1 bis 4 C-Atomen, Y für R oder einen linearen oder verzweigten, gegebenenfalls ganz oder teilweise mit Fluor substituierten linearen oder verzweigten Alkylrest mit 1 bis 24 C-Atomen, einen gegebenenfalls ganz oder teilweise mit Fluor substituierten Cycloyalkylrest oder Arylrest mit 6-24 C-Atomen, einen Rest der allgemeinen Formel C(O)OR, einen gegebenenfalls ganz oder teilweise mit Fluor substituierten Alkarylrest mit 7 bis 24 C-Atomen oder einen gegebenenfalls ganz oder teilweise mit Fluor substituierten Alkoxyalkarylrest steht, oder zwei oder mehr gleiche oder unterschiedliche Strukturelemente der allgemeinen Formel II und wobei mindestens ein Strukturelement der allgemeinen Formel oder II im Copolymeren einen mit Fluor substituierten Rest aufweist und mindestens ein Strukturelement der allgemeinen Formel II einen Fluorsubstituenten aufweist, wenn das Copolymere ein Strukturelement der allgemeinen Formel I aufweist in dem $Z^1$ für $O^-M^+$ und $Z^2$ für OR steht, wobei R einen Fluorsubstituenten aufweist und keiner der Reste $Z^1$ oder $Z^2$ für $X\text{-}R^N$ steht oder die Reste $Z^1$ und $Z^2$ zusammen für $N\text{-}R^N$ stehen.

2. Copolymeres nach Anspruch 1, **dadurch gekennzeichnet, dass** es mindestens ein Strukturelement der allgemeinen Formel I enthält, in dem mindestens einer der Reste $Z^1$ oder $Z^2$ für $O^-Na^+$ oder $O^-NH_4^+$ oder $X\text{-}R^N$ steht.

**3.** Copolymeres nach Anspruch 1, **dadurch gekennzeichnet, dass** es mindestens ein Strukturelement der allgemeinen Formel I enthält, in dem einer der Reste $Z^1$ oder $Z^2$ für HN-$R^4$ und der verbleibende Rest für $O^-Na^+$ oder $O^-NH_4^+$ steht.

**4.** Copolymeres nach Anspruch 1, **dadurch gekennzeichnet, dass** es mindestens ein Strukturelement der allgemeinen Formel I enthält, in dem die Reste $Z^1$ und $Z^2$ zusammen für $NR_4$ stehen.

**5.** Copolymeres nach Anspruch 1, **dadurch gekennzeichnet, dass** es ein Strukturelement der allgemeinen Formel I worin die Reste $Z^1$ und $Z^2$ jeweils unabhängig voneinander mit O-$M^+$ oder O-$N^+R_4$ stehen, wobei M für Li, Na oder K und R für H oder einen linearen Alkylrest mit 1 bis 18 C-Atomen oder einen Rest der allgemeinen Formel $-(CH_2-CHR'-O-)_mL$, worin R' für H einen linearen oder verzweigten Alkylrest mit 1 bis 24 C-Atomen, m für eine ganze Zahl von 1 bis etwa 20 und L für H, $CH_2-CHR'-NR'_2$ oder $CH_2-CHR'-N^+R'_3$ steht oder R für einen Aminozucker steht, oder einer der Reste $Z^1$ und $Z^2$ für $O^-M^+$ oder $O^-N^+R_4$ und der verbleibende Rest $Z^1$ oder $Z^2$ für X'-R" steht, wobei X' für O oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht oder $Z^1$ und $Z^2$ zusammen für NR stehen, und ein Strukturelement der allgemeinen Formel I, worin $Z^1$ oder $Z^2$ oder beide für X-$R^N$ stehen, wobei X für O, S oder NR', $R^N$ für einen linearen oder verzweigten Alkylrest mit 2 bis 25 C-Atomen und mindestens einer Aminogruppe oder einen Cycloalkylrest mit 5 bis 25 C-Atomen und mindestens einer Aminogruppe, steht und der verbleibende Rest $Z^1$ oder $Z^2$ für X'-R" steht, wobei X' für O, S oder NH und R" für H, einen gegebenenfalls ganz oder teilweise mit Fluor substituierten linearen oder verzweigten, gesättigten oder ungesättigten Alkylrest mit 1 bis 18 C-Atomen oder einen gegebenenfalls ganz oder teilweise mit Fluor substituierten gesättigten oder ungesättigten mono- oder polycyclischen Cycloalkylrest mit 4 bis 24 C-Atomen oder einen gegebenenfalls ganz oder teilweise mit Fluor substituierten Aryl- oder Heteroarylrest mit 6 bis 24 C-Atomen oder für R steht, aufweist.

**6.** Copolymeres nach einem der Ansprüche 1 bis 5, **dadurch gekennzeichnet, dass** es bei 20°C eine Wasserlöslichkeit von mindestens 0,1 Gew.-% aufweist.

**7.** Copolymeres nach einem der Ansprüche 1 bis 6, **dadurch gekennzeichnet, dass** es mindestens 10 Mol-% Strukturelemente der allgemeinen Formel I aufweist.

**8.** Copolymeres nach einem der Ansprüche 1 bis 7, **dadurch gekennzeichnet, dass** es mindestens ein Strukturelement der allgemeinen Formel IV

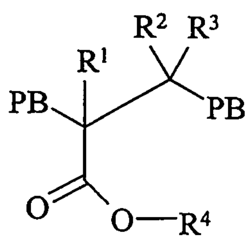

(IV),

worin PB, $R^1$, $R^2$, $R^3$ und $R^4$ die oben genannte Bedeutung aufweisen, enthält.

**9.** Copolymeres nach einem der Ansprüche 1 bis 8, **dadurch gekennzeichnet, dass** es ein Molekulargewicht ($M_w$) von mindesten 5000 g/mol aufweist.

**10.** Copolymeres nach einem der Ansprüche 1 bis 9, **dadurch gekennzeichnet, dass** es einen Fluorgehalt von mindestens 5 mol-% aufweist.

**11.** Copolymeres nach einem der Ansprüche 1 bis 10, **dadurch gekennzeichnet, dass** es eine Polydispersität von weniger als 7 aufweist.

**12.** Zusammensetzung, mindestens enthaltend ein Copolymeres gemäß einem der Ansprüche 1 bis 11.

13. Zusammensetzung nach Anspruch 12, **dadurch gekennzeichnet, dass** sie mindestens 0,1 Gew.-% des Copolymeren enthält.

14. Zusammensetzung nach Anspruch 12 oder 13, **dadurch gekennzeichnet, dass** sie Wasser enthält.

15. Verfahren zur Herstellung eines Copolymeren nach einem der Ansprüche 1 bis 11, bei dem mindestens ein Monomeres der allgemeinen Formel III

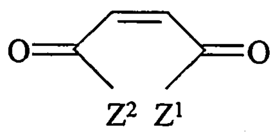

(III);

worin $Z^1$ und $Z^2$ die oben angegebene Bedeutung haben, und ein Monomeres der allgemeinen Formel V

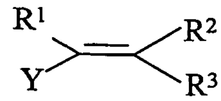

(V),

worin $R^1$, $R^2$, $R^3$ und Y die oben genannte Bedeutung aufweisen, copolymerisiert werden, wobei die Verbindung oder die Verbindungen der allgemeinen Formel IV während der Copolymerisation im Überschuss vorliegen und die Verbindung oder die Verbindungen der allgemeinen Formel V während der Copolymerisation zugetropft werden.

16. Verfahren nach Anspruch 15, **dadurch gekennzeichnet, dass** als Monomeres der allgemeinen Formel V eine Verbindung der allgemeinen Formel IV

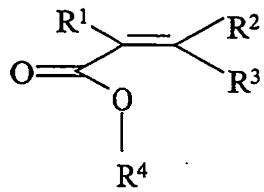

(IV),

worin $R^1$, $R^2$, $R^3$ und $R^4$ die oben genannte Bedeutung aufweisen, eingesetzt wird.

17. Verwendung eines Copolymeren gemäß einem der Ansprüche 1 bis 11 oder einer Zusammensetzung gemäß einem der Ansprüche 12 bis 14 oder eines gemäß einem der Ansprüche 15 oder 16 hergestellten Polymeren zur Oberflächenbehandlung.

18. Verfahren zur Oberflächenbeschichtung, bei dem ein Copolymeres nach einem der Ansprüche 1 bis 11 auf eine Oberfläche aufgetragen wird.

19. Verfahren nach Anspruch 18, **dadurch gekennzeichnet, dass** das Copolymere in einer Zusammensetzung nach einem der Ansprüche 12 bis 14 aufgetragen wird.

20. Verfahren nach Anspruch 18 oder 19, **dadurch gekennzeichnet, dass** die Trocknung unter Bedingungen durchgeführt wird, bei denen sich die Wasserlöslichkeit oder Wasseremulgierbarkeit mindestens eines Copolymeren in der Oberflächenbeschichtung gegenüber seiner ursprünglichen Wasserlöslichkeit oder Wasseremulgierbarkeit verringert.

21. Verwendung eines Fluorcopolymeren gemäß einem der Ansprüche 1 bis 11 oder einer Zusammensetzung nach einem der Ansprüche 12 bis 14 zur Behandlung von glatten Oberflächen, von Leder, Geweben oder Vliesen.

**22.** Verwendung nach Anspruch 21 **dadurch gekennzeichnet, dass** das Gewebe oder das Vlies mindestens eine Kunstfaser oder mindestens eine Naturfaser beides enthält.

**23.** Gewebe, Vlies oder Leder, das mit mindestens einem Fluor-Coploymeren nach einem der Ansprüche 1 bis 11 oder mit einer Zusammensetzung nach einem der Ansprüche 12 bis 14 beschichtet ist.

## Claims

**1.** Fluorine-containing copolymer at least comprising a structural element of the general formula I

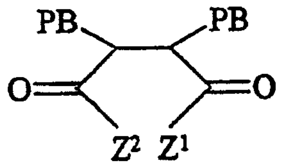 (I),

wherein PB represents a polymer backbone having continuous covalent C-C bonds, wherein the radicals $Z^1$ and $Z^2$ each independently represent $O^-M^+$ or $O^-N^+R_4$, where M represents Li, Na or K and R represents H or a linear alkyl radical having 1 to 18 carbon atoms or a radical of the general formula $-(CH_2-CHR'-O-)_mL$, wherein m represents an integer from 1 to about 20 and L represents H, $CH_2-CHR'-NR'_2$ or $CH_2-CHR-N^+R'_3$ or R represents an amino sugar such as aminosorbitol, β-D-glucopyranosylamine or β-D-glucosamine, or one of the radicals $Z^1$ and $Z^2$ represents $O^-M^+$ or $O^-N^+R_4$ and the remaining radical $Z^1$ or $Z^2$ represents X-R", wherein X represents O or NH and R" represents H, an optionally fully or partially fluorine-substituted linear or branched, saturated or unsaturated alkyl radical having 1 to 18 carbon atoms or an optionally fully or partially fluorine-substituted saturated or unsaturated mono- or polycyclic cycloalkyl radical having 4 to 24 carbon atoms or an optionally fully or partially fluorine-substituted aryl or hetaryl radical having 6 to 24 carbon atoms or represents R or the radicals $Z^1$ and $Z^2$ together represent NR", or at least $Z^1$ or at least $Z^2$ represents $X-R^N$, wherein X represents O, S or NR', $R^N$ represents a linear or branched alkyl radical having 2 to 25 carbon atoms and at least one amino group or a cycloalkyl radical having 5 to 25 carbon atoms and at least one amino group, and the remaining radical $Z^1$ or $Z^2$ represents X'-R", wherein X' represents O, S or NH and R" represents H, an optionally fully or partially fluorine-substituted linear or branched, saturated or unsaturated alkyl radical having 1 to 18 carbon atoms or an optionally fully or partially fluorine-substituted saturated or unsaturated mono- or polycyclic cycloalkyl radical having 4 to 24 carbon atoms or an optionally fully or partially fluorine-substituted aryl or hetaryl radical having 6 to 24 carbon atoms or represents R or $Z^1$ and $Z^2$ together represent N-R or wherein the two radicals $Z^1$ and $Z^2$ together represent $N-R^N$, or two or more identical or different structural elements of the general formula I,
and a structural element of the general formula II

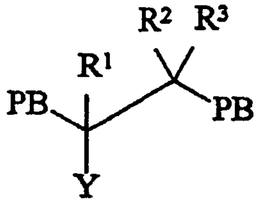 (II),

wherein the radicals $R^1$ to $R^3$ represent H or a linear or branched alkyl radical having 1 to 4 carbon atoms, Y represents R or a linear or branched, optionally fully or partially fluorine-substituted linear or branched alkyl radical having 1 to 24 carbon atoms, an optionally fully or partially fluorine-substituted cycloalkyl radical or aryl radical having 6-24 carbon atoms, a radical of the general formula C(O)OR, an optionally fully or partially fluorine-substituted alkaryl radical having 7 to 24 carbon atoms or an optionally fully or partially fluorine-substituted alkoxyalkaryl radical, or

two or more identical or different structural elements of the general formula II and wherein at least one structural element of the general formula I or II in the copolymer comprises a fluorine-substituted radical and at least one structural element of the general formula II comprises a fluorine substituent when the copolymer comprises a structural element of the general formula I wherein $Z^1$ represents $O^-M^+$ and $Z^2$ represents OR, wherein R comprises a fluorine substituent and none of the radicals $Z^1$ or $Z^2$ represents $X\text{-}R^N$ or the radicals $Z^1$ and $Z^2$ together represent $N\text{-}R^N$.

2. Copolymer according to Claim 1, **characterized in that** it comprises at least one structural element of the general formula I wherein at least one of the radicals $Z^1$ or $Z^2$ represents $O^-Na^+$ or $O^-NH_4^+$ or $X\text{-}R^N$.

3. Copolymer according to Claim 1, **characterized in that** it comprises at least one structural element of the general formula I wherein one of the radicals $Z^1$ or $Z^2$ represents $HN\text{-}R^4$ and the remaining radical represents $O^-Na^+$ or $O^-NH_4^+$.

4. Copolymer according to Claim 1, **characterized in that** it comprises at least one structural element of the general formula I wherein the radicals $Z^1$ and $Z^2$ together represent $NR_4$.

5. Copolymer according to Claim 1, **characterized in that** it comprises a structural element of the general formula I wherein the radicals $Z^1$ and $Z^2$ each independently represent $O^-M^+$ or $O^-N^+R_4$, wherein M represents Li, Na or K and R represents H or a linear alkyl radical having 1 to 18 carbon atoms or a radical of the general formula $-(CH_2\text{-}CHR'\text{-}O\text{-})_mL$, wherein R' represents H a linear or branched alkyl radical having 1 to 24 carbon atoms, m represents an integer from 1 to about 20 and L represents H, $CH_2\text{-}CHR'\text{-}NR'_2$ or $CH_2\text{-}CHR'\text{-}N^+R'_3$ or R represents an amino sugar, or one of the radicals $Z^1$ and $Z^2$ represents $O^-M^+$ or $O^-N^+R_4$ and the remaining radical $Z^1$ or $Z^2$ represents X'-R", wherein X' represents O or NH and R" represents H, an optionally fully or partially fluorine-substituted linear or branched, saturated or unsaturated alkyl radical having 1 to 18 carbon atoms or an optionally fully or partially fluorine-substituted saturated or unsaturated mono- or polycyclic cycloalkyl radical having 4 to 24 carbon atoms or an optionally fully or partially fluorine-substituted aryl or hetaryl radical having 6 to 24 carbon atoms or represents R or $Z^1$ and $Z^2$ together represent NR, and a structural element of the general formula I wherein $Z^1$ or $Z^2$ or both represent $X\text{-}R^N$, wherein X represents O, S or NR', $R^N$ represents a linear or branched alkyl radical having 2 to 25 carbon atoms and at least one amino group or a cycloalkyl radical having 5 to 25 carbon atoms and at least one amino group, and the remaining radical $Z^1$ or $Z^2$ represents X'-R", wherein X' represents 0, S or NH and R" represents H, an optionally fully or partially fluorine-substituted linear or branched, saturated or unsaturated alkyl radical having 1 to 18 carbon atoms or an optionally fully or partially fluorine-substituted saturated or unsaturated mono- or polycyclic cycloalkyl radical having 4 to 24 carbon atoms or an optionally fully or partially fluorine-substituted aryl or hetaryl radical having 6 to 24 carbon atoms or represents R.

6. Copolymer according to any one of Claims 1 to 5, **characterized in that** it comprises a water solubility of at least 0.1% by weight at 20°C.

7. Copolymer according to any one of Claims 1 to 6, **characterized in that** it comprises at least 10 mol% of structural elements of the general formula I.

8. Copolymer according to any one of Claims 1 to 7, **characterized in that** it comprises at least one structural element of the general formula IV

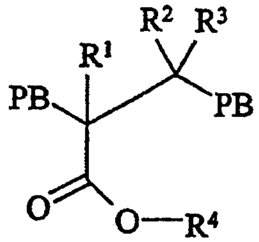

(IV),

wherein PB, $R^1$, $R^2$, $R^3$ and $R^4$ are each as defined above.

**9.** Copolymer according to any one of Claims 1 to 8, **characterized in that** it has a molecular weight ($M_w$) of at least 5000 g/mol.

**10.** Copolymer according to any one of Claims 1 to 9, **characterized in that** it has a fluorine content of at least 5 mol%.

**11.** Copolymer according to any one of Claims 1 to 10, **characterized in that** it comprises a polydispersity of less than 7.

**12.** Composition at least comprising a copolymer according to any one of Claims 1 to 11.

**13.** Composition according to Claim 12, **characterized in that** it comprises at least 0.1% by weight of the copolymer.

**14.** Composition according to Claim 12 or 13, **characterized in that** it comprises water.

**15.** Process for producing a copolymer according to any one of Claims 1 to 11, which comprises at least one monomer of the general formula III

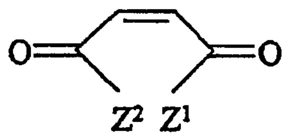 (III);

wherein $Z^1$ and $Z^2$ are each as defined above, and a monomer of the general formula V

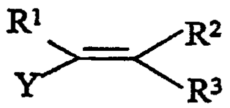 (V),

wherein $R^1$, $R^2$, $R^3$ and Y are each as defined above, being copolymerized, wherein the compound or compounds of the general formula IV are present in excess during the copolymerization and the compound or compounds of the general formula V are added dropwise during the copolymerization.

**16.** Process according to Claim 15, **characterized in that** the monomer of the general formula V is a compound of the general formula IV

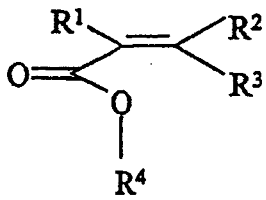 (IV),

wherein $R^1$, $R^2$, $R^3$ and $R^4$ are each as defined above.

**17.** Use for surface treatment of a copolymer according to any one of Claims 1 to 11 or of a composition according to any one of Claims 12 to 14 or of a polymer produced according to either of Claims 15 and 16.

**18.** Process for surface coating comprising applying a copolymer according to any one of Claims 1 to 11 to a surface.

**19.** Process according to Claim 18, **characterized in that** the copolymer is applied in a composition according to any one of Claims 12 to 14.

20. Process according to Claim 18 or 19, **characterized in that** the drying is carried out under conditions where the water solubility or water emulsibility of at least one copolymer in the surface coating decreases compared with its original water solubility or water emulsibility.

21. Use of a fluorocopolymer according to any one of Claims 1 to 11 or of a composition according to any one of Claims 12 to 14 for treatment of smooth surfaces, of leather, fabrics or webs.

22. Use according to Claim 21, **characterized in that** the fabric or web comprises at least one manufactured fibre or at least one natural fibre both.

23. Fabric, web or leather coated with at least one fluorocopolymer according to any one of Claims 1 to 11 or with a composition according to any one of Claims 12 to 14.

## Revendications

1. Copolymère contenant du fluor, contenant au moins un élément de structure de formule générale I

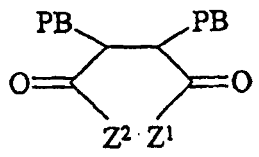

(I),

dans laquelle PB représente une épine dorsale polymère avec des liaisons C-C covalentes continues, dans laquelle les radicaux $Z^1$ et $Z^2$ représentent à chaque fois indépendamment l'un de l'autre $O-M^+$ ou $O-N^+R_4$, où M représente Li, Na ou K et R représente H ou un radical alkyle linéaire, comprenant 1 à 18 atomes de carbone ou un radical de formule générale $-(CH_2-CHR'-O-)_mL$, dans laquelle m représente un nombre entier de 1 à environ 20 et L représente H, $CH_2-CHR'-NR'_2$ ou $CH_2-CHR'-N^+R'_3$ ou R représente un sucre amino, tel que l'aminosorbitol, la β-D-glucopyranosylamine ou la β-D-glucosamine, ou un des radicaux $Z^1$ et $Z^2$ représente $O^-M^+$ ou $O-N^+R_4$ et l'autre radical $Z^1$ ou $Z^2$ représente X-R", où X représente O ou NH et R" représente H, un radical alkyle linéaire ou ramifié, saturé ou insaturé, le cas échéant totalement ou partiellement substitué par fluor, comprenant 1 à 18 atomes de carbone ou un radical cycloalkyle monocyclique ou polycyclique, saturé ou insaturé, le cas échéant totalement ou partiellement substitué par fluor, comprenant 4 à 24 atomes de carbone ou un radical aryle ou hétéroaryle, le cas échéant totalement ou partiellement substitué par fluor, comprenant 6 à 24 atomes de carbone ou représente R ou les radicaux $Z^1$ et $Z^2$ représentent ensemble NR", ou au moins $Z^1$ ou au moins $Z^2$ représente $X-R^N$, où X représente O, S ou NR', $R^N$ représente un radical alkyle linéaire ou ramifié, comprenant 2 à 25 atomes de carbone et au moins un groupe amino ou un radical cycloalkyle, comprenant 5 à 25 atomes de carbone et au moins un groupe amino et l'autre radical $Z^1$ ou $Z^2$ représente X'-R", où X' représente O, S ou NH et R" représente H, un radical alkyle linéaire ou ramifié, saturé ou insaturé, le cas échéant totalement ou partiellement substitué par fluor, comprenant 1 à 18 atomes de carbone ou un radical cycloalkyle monocyclique ou polycyclique, saturé ou insaturé, le cas échéant totalement ou partiellement substitué par fluor, comprenant 4 à 24 atomes de carbone ou un radical aryle ou hétéroaryle le cas échéant totalement ou partiellement substitué par fluor, comprenant 6 à 24 atomes de carbone ou représente R ou $Z^1$ et $Z^2$ représentent ensemble N-R ou dans laquelle les deux radicaux $Z^1$ et $Z^2$ représentent ensemble $N-R^N$, ou deux éléments de structure ou plus identiques ou différents de formule générale I,
et un élément de structure de formule générale II

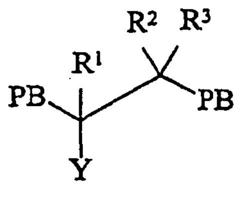

(II),

dans laquelle les radicaux $R^1$ à $R^3$ représentent H ou radical alkyle linéaire ou ramifié, comprenant 1 à 4 atomes

de carbone, Y représente R ou un radical linéaire ou ramifié, le cas échéant totalement ou partiellement substitué par fluor, comprenant 1 à 24 atomes de carbone, un radical cycloalkyle ou aryle le cas échéant totalement ou partiellement substitué par fluor, comprenant 6 à 24 atomes de carbone, un radical de formule générale C(O)OR, un radical alkaryle le cas échéant totalement ou partiellement substitué par fluor, comprenant 7 à 24 atomes de carbone ou un radical alcoxyaryle le cas échéant totalement ou partiellement substitué par fluor, ou deux éléments de structure ou plus identiques ou différents de formule générale II et où au moins un élément de structure de formule générale I ou II dans le copolymère présente un radical substitué par fluor et au moins un élément de structure de formule générale II présente un substituant fluor, lorsque le copolymère présente un élément de structure de formule générale I dans lequel $Z^1$ représente $O\text{-}M^+$ et $Z^2$ représente OR, où R présente un substituant fluor et aucun des radicaux $Z^1$ ou $Z^2$ ne représente $X\text{-}R^N$ ou les radicaux $Z^1$ et $Z^2$ représentent ensemble $N\text{-}R^N$.

2. Copolymère selon la revendication 1, **caractérisé en ce qu'**il contient au moins un élément de structure de formule générale I, dans lequel au moins un des radicaux $Z^1$ ou $Z^2$ représente $O^-Na^+$ ou $O^-NH_4^+$ ou $X\text{-}R^N$.

3. Copolymère selon la revendication 1, **caractérisé en ce qu'**il contient au moins un élément de structure de formule générale I, dans laquelle un des radicaux $Z^1$ ou $Z^2$ représente $HN\text{-}R^4$ et l'autre radical représente $O^-Na^+$ ou $O^-NH_4^+$.

4. Copolymère selon la revendication 1, **caractérisé en ce qu'**il contient au moins un élément de structure de formule générale I, dans lequel les radicaux $Z^1$ et $Z^2$ représentent ensemble $NR_4$.

5. Copolymère selon la revendication 1, **caractérisé en ce qu'**il contient un élément de structure de formule générale I, dans laquelle les radicaux $Z^1$ et $Z^2$ représentent à chaque fois indépendamment l'un de l'autre $O^-M^+$ ou $O^-N^+R_4$, où M représente Li, Na ou K et R représente H ou un radical alkyle linéaire, comprenant 1 à 18 atomes de carbone ou un radical de formule générale $-(CH_2\text{-}CHR'\text{-}O\text{-})_mL$, dans laquelle R' représente H, un radical alkyle linéaire ou ramifié, comprenant 1 à 24 atomes de carbone, m représente un nombre entier de 1 à environ 20 et L représente H, $CH_2\text{-}CHR'\text{-}NR'_2$ ou $CH_2\text{-}CHR'\text{-}N^+R'_3$ ou R représente un sucre amino, ou un des radicaux $Z^1$ et $Z^2$ représente $O^-M^+$ ou $O^-N^+R_4$ et l'autre radical $Z^1$ ou $Z^2$ représente X'-R", où X' représente O ou NH et R" représente H, un radical alkyle saturé ou insaturé, linéaire ou ramifié, le cas échéant totalement ou partiellement substitué par fluor, comprenant 1 à 18 atomes de carbone ou un radical cycloalkyle monocyclique ou polycyclique, saturé ou insaturé, le cas échéant totalement ou partiellement substitué par fluor, comprenant 4 à 24 atomes de carbone ou un radical aryle ou hétéroaryle le cas échéant totalement ou partiellement substitué par fluor, comprenant 6 à 24 atomes de carbone ou représente R ou $Z^1$ et $Z^2$ représentent ensemble NR, et un élément de structure de formule générale 1, dans laquelle $Z^1$ ou $Z^2$ ou les deux représentent $X\text{-}R^N$, où X représente O, S ou NR', $R^N$ représente un radical alkyle linéaire ou ramifié, comprenant 2 à 25 atomes de carbone et au moins un groupe amino ou un radical cycloalkyle, comprenant 5 à 25 atomes de carbone et au moins un groupe amino, et l'autre radical $Z^1$ ou $Z^2$ représente X'-R", où X' représente O, S ou NH et R" représente H, un radical alkyle linéaire ou ramifié, saturé ou insaturé, le cas échéant totalement ou partiellement substitué par fluor, comprenant 1 à 18 atomes de carbone ou un radical cycloalkyle monocyclique ou polycyclique, saturé ou insaturé, comprenant 4 à 24 atomes de carbone ou un radical aryle ou hétéroaryle le cas échéant totalement ou partiellement substitué par fluor, comprenant 6 à 24 atomes de carbone ou représente R.

6. Copolymère selon l'une quelconque des revendications 1 à 5, **caractérisé en ce qu'**il présente à 20°C une solubilité dans l'eau d'au moins 0,1% en poids.

7. Copolymère selon l'une quelconque des revendications 1 à 6, **caractérisé en ce qu'**il présente au moins 10% en mole d'éléments de structure de formule générale 1.

8. Copolymère selon l'une quelconque des revendications 1 à 7, **caractérisé en ce qu'**il présente au moins un élément de structure de formule générale IV

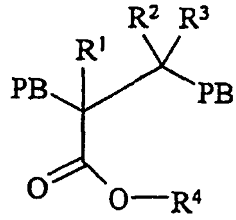 (IV),

dans laquelle PB, $R^1$, $R^2$, $R^3$ et $R^4$ présentent la signification indiquée ci-dessus.

**9.** Copolymère selon l'une quelconque des revendications 1 à 8, **caractérisé en ce qu'**il présente un poids moléculaire ($M_w$) d'au moins 5000 g/mole.

**10.** Copolymère selon l'une quelconque des revendications 1 à 9, **caractérisé en ce qu'**il présente une teneur en fluor d'au moins 5% en mole.

**11.** Copolymère selon l'une quelconque des revendications 1 à 10, **caractérisé en ce qu'**il présente une polydispersité inférieure à 7.

**12.** Composition contenant au moins un copolymère selon l'une quelconque des revendications 1 à 11.

**13.** Composition selon la revendication 12, **caractérisée en ce qu'**elle contient au moins 0, 1 % en poids du copolymère.

**14.** Composition selon la revendication 12 ou 13, **caractérisée en ce qu'**elle contient de l'eau.

**15.** Procédé pour la préparation d'un copolymère selon l'une quelconque des revendications 1 à 11, dans lequel au moins un monomère de formule générale III

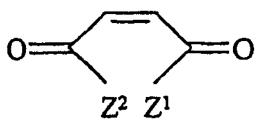 (III);

dans laquelle $Z^1$ et $Z^2$ ont la signification indiquée ci-dessus, et un monomère de formule générale V

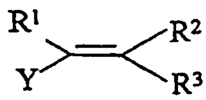 (V),

dans laquelle $R^1$, $R^2$, $R^3$ et Y ont la signification indiquée ci-dessus, sont copolymérisés, le ou les composés de formule générale IV étant présents en excès pendant la copolymérisation et le ou les composés de formule générale V étant ajoutés goutte à goutte pendant la copolymérisation.

**16.** Procédé selon la revendication 15, **caractérisé en ce qu'**on utilise comme monomère de formule générale V un composé de formule générale IV

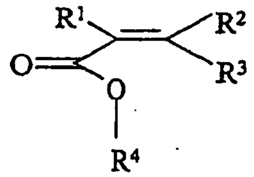

(IV),

dans laquelle $R^1$, $R^2$, $R^3$ et $R^4$ ont la signification indiquée ci-dessus.

**17.** Utilisation d'un copolymère selon l'une quelconque des revendications 1 à 11 ou d'une composition selon l'une quelconque des revendications 12 à 14 ou d'un polymère préparé selon l'une quelconque des revendications 15 ou 16 pour le traitement de surfaces.

**18.** Procédé pour le revêtement de surfaces, dans lequel un copolymère selon l'une quelconque des revendications 1 à 11 est appliqué sur une surface.

**19.** Procédé selon la revendication 18, **caractérisé en ce que** le copolymère est appliqué dans une composition selon l'une quelconque des revendications 12 à 14.

**20.** Procédé selon la revendication 18 ou 19, **caractérisé en ce que** le séchage est réalisé dans des conditions dans lesquelles la solubilité ou l'aptitude à l'émulsion dans l'eau d'au moins un copolymère dans le revêtement de surface est diminuée par rapport à sa solubilité ou son aptitude à l'émulsion dans l'eau d'origine.

**21.** Utilisation d'un copolymère fluoré selon l'une quelconque des revendications 1 à 11 ou d'une composition selon l'une quelconque des revendications 12 à 14 pour le traitement de surfaces lisses, de cuir, de tissus ou de non-tissés.

**22.** Utilisation selon la revendication 21, **caractérisée en ce que** le tissu ou le non-tissé contient au moins une fibre synthétique ou au moins une fibre naturelle, ou les deux.

**23.** Tissu, non-tissé ou cuir qui est revêtu par au moins un copolymère fluoré selon l'une quelconque des revendications 1 à 11 ou par une composition selon l'une quelconque des revendications 12 à 14.